# FASCICULE DE BREVET EUROPEEN

(11) **EP 0 899 996 B1**
(45) Date de publication et mention de la délivrance du brevet: **08.05.2002**
(21) Numéro de dépôt: 98905463.0
(22) Date de dépôt: 30.01.1998
(51) Int. Cl.: A01B 63/10, A01B 63/22, A01D 41/14, F16F 9/06, F16F 9/22, B60G 17/04

(54) **REGLAGE AUTOMATIQUE DE L'ALLEGEMENT D'UNE UNITE DE TRAVAIL D'UNE MACHINE: PROCEDE, DISPOSITIF ET MACHINE**
AUTOMATISCHE JUSTIERUNG ZUR GEWICHTSENTLASTUNG EINER MASCHINENARBEITSENIHEIT:VERFAHREN,VORRICHTUNG UND MASCHINE
AUTOMATIC ADJUSTING FOR LIGHTENING A MACHINE WORKING UNIT: METHOD, DEVICE AND MACHINE

(30) Priorité: 03.02.1997 FR 9701323
(43) Date de publication de la demande: 10.03.1999
(73) Titulaire: KUHN S.A., 67700 Saverne (FR)
(72) Inventeur: WALCH, Martin, F-67490 Dettwiller (FR); WILHELM, Joel, F-57820 Saint Louis (FR); WATTRON, Bernard, F-67700 Haegen (FR); ERMACORA, Rino, F-67700 Saint-Jean-les-Saverne (FR); GUESDON, Alain, F-77123 Noisy sur Ecole (FR)
(86) Numéro de dépôt international: FR9800172
(87) Numéro de publication internationale: WO9833371

(56) Documents cités:
- EP-A- 0 570 315
- EP-A- 0 741 960
- DE-A- 1 750 459
- FR-A- 2 080 242
- FR-A- 2 298 263
- FR-A- 2 340 482
- FR-A- 2 534 771
- US-A- 3 869 861
- US-A- 4 474 247
- US-A- 4 646 849

## Description

La présente invention concerne le réglage de l'allégement d'une unité de travail d'une machine, laquelle unité de travail est portée par une structure porteuse de sorte à être en appui sur le sol durant le travail et éloignée dudit sol lorsque le travail est interrompu ou durant le transport, ladite unité pouvant être abaissée pour être amenée en appui sur le sol ou être levée pour être éloignée dudit sol au moyen d'au moins un transformateur d'énergie hydraulique alimenté par une source de fourniture d'huile au travers d'un circuit hydraulique.

A titre d'exemple nullement limitatif, de telles machines peuvent se rencontrer dans le domaine de l'agriculture, des travaux publics, de l'entretien des routes et des bords de route, etc...

La valeur de l'allégement de l'unité de travail d'une telle machine est en général d'une grande importance pour la qualité du travail fourni. Un allégement trop important ne permet pas à l'unité de travail de rester continuellement en contact avec le sol. Il en résultera un travail irrégulier. Un allégement insuffisant, par contre, augmente, dans certains cas, les risques de bourrage, augmente la puissance qui est à développer pour déplacer l'unité de travail et augmente l'usure.

Dans le domaine des faucheuses, par exemple, il est connu d'alléger le mécanisme de récolte (unité de travail) au moyen d'un dispositif d'allégement comprenant au moins un organe élastiquement déformable dont l'action peut être réglée à l'aide d'un dispositif de réglage accouplé audit organe élastiquement déformable.

Comme organes élastiquement déformables, il est connu d'utiliser des ressorts mécaniques de traction (**GB 2 053 645 A**), des ressorts mécaniques de compression, des barres de torsion, des coussins déformables remplis d'air (**EP 0 570 315 A1**) ou des accumulateurs à azote combinés à des vérins hydrauliques (**EP 0 149 870 A1**).

Le réglage de l'allégement procuré par ces organes élastiquement déformables est généralement effectué manuellement et nécessite plusieurs tests avec interruption du travail, ce qui peut occasionner des pertes de temps d'autant plus que le réglage initial réalisé lorsque l'unité de travail est propre, risque d'être rapidement faussé durant le travail par suite de l'accumulation de terre par exemple.

Diverses solutions ont déjà été proposées pour faciliter ce réglage.

Dans le document **EP 0 149 870 A1** est décrite une solution qui consiste à mesurer continuellement la pression avec laquelle l'unité de travail d'une machine repose sur le sol. L'unité de travail est pourvue d'un patin qui y est lié de manière pivotante. Un capteur à piston et cylindre est implanté entre ledit patin et le châssis de l'unité de travail. Un dispositif de conversion convertit la pression régnant dans le capteur à piston et cylindre en un signal électrique qui contrôle un moteur électrique. Ce moteur électrique entraîne un pignon qui engrène avec une crémaillère actionnant la tige d'un vérin de compensation muni d'accumulateurs à gaz. Ce vérin de compensation est en liaison avec des vérins hydrauliques implantés entre le châssis de l'unité de travail et les bras des roues par l'intermédiaire desquelles l'unité de travail roule sur le sol.

Lorsque la pression dans le capteur à piston et cylindre augmente par suite de l'accroissement du poids de l'unité de travail, le signal électrique créé actionne le moteur électrique dans un sens tel que la pression dans le vérin compensateur et les vérins hydrauliques augmente. Cette correction s'effectue entièrement automatiquement jusqu'à ce que la pression correcte soit atteinte.

Dans le document **WO 86/00002** est décrite une solution qui consiste également à mesurer la pression avec laquelle la tête de coupe (unité de travail) d'une machine de récolte repose sur le sol. La tête de coupe de cette machine de récolte est portée par un châssis accouplé à un tracteur et comportant deux roues par l'intermédiaire desquelles il roule sur le sol. Chaque roue est liée de manière pivotante à une paroi latérale correspondante du châssis au moyen d'un bras de roue. Un vérin hydraulique associé à un accumulateur hydropneumatique est implanté entre chaque bras de roue et la paroi latérale correspondante.

La tête de coupe comprend un certain nombre de patins qui sont liés de manière pivotante à la barre de ladite tête de coupe. Une jauge de contrainte est fixée sur le dessus d'un patin et fournit un signal électrique qui est fonction du changement de la pression qu'exerce ledit patin sur le sol. Ce signal électrique est transmis à un amplificateur à deux sorties dont chacune est connectée à une électrovanne. Ces électrovannes permettent de connecter les vérins hydrauliques avec une source de fourniture d'huile. L'amplificateur permet, en fonction du signal émis par la jauge de contrainte, de commander l'électrovanne adéquate dans le but d'alimenter en huile les vérins hydrauliques, respectivement de retirer de l'huile desdits vérins hydrauliques pour lever, respectivement abaisser la tête de coupe jusqu'à ce que la pression désirée avec laquelle la tête de coupe doit reposer sur le sol soit rétablie.

Ces deux solutions comportent un certain nombre d'inconvénients.

Un premier inconvénient réside dans le fait que les capteurs (piston et cylindre dans **EP 0 149 870 A1** et jauge de contrainte dans **WO 86/00002**) sont à placer sous l'unité de travail, ce qui, dans certains types de machine, peut s'avérer préjudiciable pour la qualité du travail fourni.

Un deuxième inconvénient réside dans le fait que ces capteurs ainsi que les liaisons qui transmettent les informations fournies par ceux-ci, sont à placer dans des endroits où, compte tenu de l'environnement dans lequel travaillent ces machines, ils risquent d'être rapidement endommagés.

Un troisième inconvénient réside dans le fait que le nombre de paramètres est tel que le bon allégement est rarement réalisé. A titre d'exemple non limitatif on peut citer la nature du sol par exemple : dans un terrain dur, les patins glisseront effectivement sur la surface du sol alors que dans un terrain mou, ceux-ci s'enfonceront quelque peu dans le sol ce qui change les informations fournies par les capteurs. Or, l'utilisateur n'est en général pas à même de fournir les nouvelles valeurs des paramètres au dispositif qui gère les informations reçues des capteurs.

Un quatrième inconvénient enfin réside dans le fait que le dispositif corrige continuellement durant le travail ce qui peut également avoir une influence néfaste sur la qualité du travail fourni.

Dans le document **EP 0 741 960 A1** est décrite une solution dans laquelle le réglage de l'allégement du mécanisme de récolte (unité de travail) d'une faucheuse peut être effectué par l'utilisateur depuis le poste de conduite du véhicule moteur auquel est liée la faucheuse.

Dans une première réalisation (figures 6 et 9), le dispositif d'allégement comprend deux organes élastiquement déformables dont l'action de chacun peut être réglée à l'aide d'un dispositif de réglage accouplé auxdits organes élastiquement déformables dont chacun est constitué d'une enveloppe déformable contenant un gaz sous pression réglable (coussin d'air dans la figure 6 et vérin hydropneumatique dans la figure 9).

Ce dispositif de réglage comporte notamment un circuit d'alimentation muni d'une vanne par enveloppe déformable destinée, en vue du réglage de la valeur de la pression du gaz contenu dans ladite enveloppe déformable, à faire pénétrer dans l'enveloppe déformable un fluide délivré par une source d'alimentation (air délivré par un compresseur dans la figure 6 et huile délivrée par la centrale hydraulique du véhicule moteur dans la figure 9), à maintenir la pression du gaz contenu dans l'enveloppe déformable ou à faire sortir du fluide de ladite enveloppe déformable. A cet effet, chaque vanne est une électrovanne pilotable électriquement par l'utilisateur à partir du poste de conduite du véhicule moteur et comportant deux positions : une première position dans laquelle du fluide ne peut ni pénétrer, ni sortir de l'enveloppe déformable et une deuxième position dans laquelle du fluide peut pénétrer ou sortir de l'enveloppe déformable.

Dans une deuxième réalisation (figure 12), le dispositif d'allégement comprend deux ressorts mécaniques dont l'action peut être réglée à l'aide d'un dispositif de réglage qui comporte un vérin pour chaque ressort mécanique et un circuit d'alimentation de ces deux vérins. Ce circuit d'alimentation est muni d'une vanne associée à chaque vérin et destinée, en vue du réglage de l'action du ressort mécanique correspondant, à faire pénétrer dans le vérin du fluide délivré par une source d'alimentation, à maintenir le fluide dans ledit vérin ou à faire sortir du fluide dudit vérin. A cet effet, chaque vanne est pilotable par l'utilisateur à partir du poste de conduite du véhicule moteur et comporte deux positions : une première position dans laquelle le fluide ne peut ni pénétrer, ni sortir du vérin et une deuxième position dans laquelle du fluide peut pénétrer ou sortir du vérin.

Dans ces faucheuses connues, l'utilisateur pourra, à partir du poste de pilotage du véhicule moteur, selon le cas, augmenter ou diminuer l'action des deux organes élastiquement déformables jusqu'à ce qu'elles travaillent de manière optimale. Un conducteur habile pourra d'ailleurs faire cette opération sans interrompre le fauchage.

Si, au cours du travail, l'utilisateur s'aperçoit que le comportement de la faucheuse a changé, il lui suffira, sans quitter son poste de conduite, voire, comme dit, sans interrompre le fauchage, de réajuster la valeur de l'action procurée par les organes élastiquement déformables.

Dans ces faucheuses connues, le réglage de la valeur de l'allégement est certes simple et rapide, il nécessite cependant l'intervention de l'utilisateur.

Dans le document **FR 2 701 801 A1** est décrit un dispositif de réglage automatique de l'allégement d'une unité de travail d'une machine. Cette unité de travail est portée par une structure porteuse de sorte à être en appui sur le sol durant le travail et éloignée dudit sol lorsque le travail doit être interrompu ou durant le transport. Cette unité de travail peut être abaissée pour être amenée en appui sur le sol ou être levée pour être éloignée dudit sol au moyen dudit dispositif qui comprend des transformateurs d'énergie hydraulique alimentés par un circuit hydraulique comprenant notamment un accumulateur hydropneumatique. La pression du gaz contenu dans cet accumulateur hydropneumatique peut être réglée initialement à une valeur correspondant au degré de l'allégement souhaité pour l'unité de travail.

Ce circuit hydraulique comprend un circuit principal qui permet de lever ou d'abaisser l'unité de travail, et un circuit secondaire qui procure un allégement prédéterminé de l'unité de travail dès que celle-ci est en appui sur le sol.

En outre, ce circuit secondaire permet de conserver cet allégement prédéterminé quelles que soient les variations de niveau du sol sur lequel s'appuie l'unité de travail.

Par contre, si, par suite de l'accumulation de terre sur l'unité de travail, le poids de celle-ci a augmenté, l'utilisateur doit modifier manuellement la valeur de l'allégement s'il veut retrouver le même poids apparent de l'unité de travail.

Un procédé et un dispositif de réglage de l'allègement d'une unité de travail d'une machine sont également connus du document FR-A-2 534 771.

Le but de la présente invention est de proposer une solution dans laquelle la valeur prédéterminée de l'allégement de l'unité de travail d'une machine reste maintenue quelle que soit l'évolution du poids de ladite unité de travail au cours de l'utilisation.

A cet effet, il est proposé un procédé de réglage automatique de l'allégement d'une unité de travail d'une machine, laquelle unité de travail est portée par une structure porteuse de sorte à être en appui sur le sol durant le travail et éloignée dudit sol lorsque le travail est interrompu ou durant le transport, ladite unité de travail pouvant être abaissée pour être amenée en appui sur le sol ou être levée pour être éloignée dudit sol au moyen d'au moins un transformateur d'énergie hydraulique alimenté par une source de fourniture d'huile au travers d'un circuit hydraulique et comportant un premier vérin hydraulique muni d'une tige et associé à un accumulateur hydropneumatique dont la pression du gaz peut être réglée initialement à une valeur correspondant au degré de l'allégement souhaité pour l'unité de travail, procédé qui est **caractérisé en ce** que :
- on utilise un (des) transformateur(s) d'énergie hydraulique comportant (chacun) le (un) premier vérin hydraulique associé à l'(un) accumulateur hydropneumatique, et un deuxième vérin hydraulique dont le piston qui peut se déplacer jusqu'à une position prédéterminée dans le cylindre dudit deuxième vérin hydraulique et qui est désolidarisé de la tige du premier vérin hydraulique (correspondant), agit directement ou indirectement sur cette dernière par l'intermédiaire de l'huile contenue dans le premier vérin hydraulique (correspondant) ;
- on lève et on abaisse l'unité de travail à l'aide du (des) deuxième(s) vérin(s) hydraulique(s) ;
- en levant l'unité de travail :
   - on augmente le volume d'huile dans le(s) premier(s) vérin(s) hydraulique(s) si et seulement si le(s) piston(s) du (des) deuxième(s) vérin(s) hydraulique(s) étant dans sa (leur) position prédéterminée, l'unité de travail n'atteint pas une hauteur prédéterminée ;
   - on diminue le volume d'huile du (des) premier(s) vérin(s) hydraulique(s) si et seulement si l'unité de travail a atteint la hauteur prédéterminée, alors que le(s) piston(s) du (des) deuxième(s) vérin(s) hydraulique(s) n'a (n'ont) pas encore atteint sa (leur) position prédéterminée,
      de telle sorte que l'unité de travail soit toujours à la hauteur prédéterminée en fin de course de levée, c'est-à-dire quand le (les) piston(s) du (des) deuxième(s) vérin(s) hydraulique(s) est (sont) dans sa (leur) position prédéterminée ;
- en abaissant l'unité de travail, on maintient le volume d'huile dans le(s) premier(s) vérin(s) hydraulique(s).

L'invention concerne également un dispositif de réglage automatique de l'allégement d'une unité de travail d'une machine pour la mise en oeuvre du procédé ci-dessus, laquelle unité de travail est portée par une structure porteuse de sorte à être en appui sur le sol durant le travail et éloignée dudit sol lorsque le travail est interrompu ou durant le transport, ladite unité de travail pouvant être abaissée pour être amenée en appui sur le sol ou être levée pour être éloignée dudit sol au moyen dudit dispositif comprenant au moins un transformateur d'énergie hydraulique alimenté par une source de fourniture d'huile au travers d'un circuit hydraulique et comportant un premier vérin hydraulique muni d'une tige et associé à un accumulateur hydropneumatique dont la pression du gaz peut être réglée initialement à une valeur correspondant au degré de l'allégement souhaité pour l'unité de travail, ledit circuit hydraulique comprenant un premier réseau hydraulique couplé au premier vérin hydraulique dudit (de chaque) transformateur d'énergie hydraulique qui comporte un (des) orifice(s) adéquat(s) en vue de la liaison avec ce premier réseau hydraulique, ledit dispositif étant **caractérisé en ce** que :
- le (chaque) transformateur d'énergie hydraulique comporte un deuxième vérin hydraulique dont le piston qui peut se déplacer jusqu'à une position prédéterminée dans le cylindre dudit deuxième vérin hydraulique et qui est désolidarisé de la tige du premier vérin hydraulique (correspondant), agit directement ou indirectement sur cette dernière par l'intermédiaire de l'huile contenue dans le premier vérin hydraulique (correspondant) ;
- le circuit hydraulique comprend un deuxième réseau hydraulique couplé au deuxième vérin hydraulique du (de chaque) transformateur d'énergie hydraulique, ledit (chaque) transformateur d'énergie hydraulique comportant également un (des) orifice(s) adéquat(s) en vue de la liaison de ce deuxième réseau hydraulique ;
- des moyens permettent, le cas échéant, d'augmenter ou de diminuer le volume de l'huile du (de chaque) premier vérin hydraulique en fin de course de levée de l'unité de travail ;
- des moyens permettent de maintenir le volume de l'huile dans le (chaque) premier vérin hydraulique lors de l'abaissement de l'unité de travail.

L'invention concerne enfin également une machine comportant un dispositif de réglage automatique de l'allégement de son unité de travail tel que décrit ci-dessus.

La solution proposée ne fait donc appel ni à des capteurs placés sous l'unité de travail, ni à une intervention manuelle de la part de l'utilisateur de la machine pour maintenir la valeur prédéterminée de l'allégement quelle que soit l'évolution du poids de ladite unité de travail au cours de l'utilisation. Elle ne présente donc pas non plus les inconvénients qui en découlent.

Dans une réalisation avantageuse du dispositif de réglage automatique de l'allégement d'une unité de travail d'une machine, il pourra être prévu que l'(chaque) accumulateur hydropneumatique soit intégré dans le transformateur d'énergie hydraulique (correspondant). De préférence d'ailleurs, cet accumulateur hydropneumatique entourera notamment le cylindre du premier vérin hydraulique dudit transformateur d'énergie hydraulique. A cet effet, ledit transformateur d'énergie hydraulique pourra comporter un cylindre intérieur formant notamment le cylindre du premier vérin hydraulique, un cylindre extérieur et une membrane déformable séparant l'espace entre ces deux cylindres en deux volumes : un premier volume contenant le gaz et un deuxième volume contenant de l'huile dont la pression sera identique à la pression de l'huile contenue dans le premier vérin hydraulique. Ce premier volume contenant le gaz et ce deuxième volume contenant de l'huile constitueront ledit accumulateur hydropneumatique. Le premier volume pourra être avantageusement celui notamment délimité par le cylindre extérieur et la membrane et le deuxième volume celui notamment délimité par le cylindre intérieur et la membrane. Dans ce cas, le cylindre extérieur ou une bague d'obturation liée audit cylindre extérieur pourra également comporter une valve de gonflage permettant d'insuffler du gaz dans le premier volume. Le cylindre intérieur, enfin, pourra également constituer le cylindre du deuxième vérin hydraulique.

Dans une autre solution, c'est la tige du (de chaque) premier vérin hydraulique qui pourra être creuse et constituer le cylindre du deuxième vérin hydraulique (correspondant). Dans ce cas, l'orifice d'alimentation du (de chaque) deuxième vérin hydraulique sera avantageusement prévu dans le voisinage de l'extrémité extérieure de la tige.

Dans le cas où le transformateur d'énergie hydraulique lève l'unité de travail en s'allongeant (première famille de réalisation), le piston du (de chaque) deuxième vérin hydraulique pourra être réalisé sous forme de piston plongeur ou de piston annulaire.

Dans le cas, par contre, où le transformateur d'énergie hydraulique lève l'unité de travail en se raccourcissant (deuxième famille de réalisation), le piston du (de chaque) deuxième vérin hydraulique sera avantageusement réalisé sous forme de piston annulaire traversé par la tige du transformateur d'énergie hydraulique (correspondant).

La position prédéterminée jusqu'à laquelle peut se déplacer le piston dans le cylindre du (de chaque) deuxième vérin hydraulique, pourra être avantageusement déterminée par une butée. Cette butée pourra être constituée d'un tirant solidaire de l'extrémité du transformateur d'énergie hydraulique (correspondant) située du côté du deuxième vérin hydraulique. Ce tirant pourra s'étendre partiellement à l'intérieur du piston du deuxième vérin hydraulique ou traverser ledit piston. Dans les deux cas, il sera avantageux que le tirant s'étende coaxialement audit piston.

Ladite butée pourra également être constituée d'un épaulement, fixe ou rapporté, prévu dans le cylindre du deuxième vérin hydraulique.

Dans une autre solution, ladite position prédéterminée jusqu'à laquelle peut se déplacer le piston dans le cylindre du (de chaque) deuxième vérin hydraulique, pourra être déterminée par au moins un orifice de limitation prévu dans le cylindre du deuxième vérin hydraulique et destiné à évacuer le surplus d'huile injecté dans ledit deuxième vérin hydraulique. Cet (ces) orifice(s) de limitation pourra (pourront) d'ailleurs avantageusement déboucher directement ou indirectement dans le premier vérin hydraulique (correspondant).

Il pourra également être prévu qu'un amortisseur amortisse les déplacements de la tige du (de chaque) transformateur d'énergie hydraulique autorisés par l'accumulateur hydropneumatique (correspondant). De préférence, ledit amortisseur comportera des moyens qui freinent davantage la montée de l'unité de travail que la descente de celle-ci. Ces moyens pourront être conçus pour freiner davantage la circulation de l'huile dans le (chaque) premier vérin hydraulique lors de la montée de l'unité de travail que lors de la descente de celle-ci. Dans une réalisation avantageuse, ledit amortisseur pourra s'étendre dans le premier vérin hydraulique (correspondant) et comporter une partie discoïdale dans laquelle sont pratiqués un trou central et au moins un trou disposé à côté du trou central, une vis creuse vissée dans le trou central et une rondelle concave s'étendant entre la vis creuse et la face correspondante de la partie discoïdale, la concavité étant dirigée vers ladite face de sorte à couvrir partiellement le (les) trou(s) disposé(s) à côté du trou central. Il pourra en sus être prévu qu'une (que des) rondelle(s) élastique(s) soit (soient) interposée(s) entre la rondelle concave et la face correspondante de la partie discoïdale.

Cet amortisseur pourra du reste être implanté dans une partie creuse que présente la tige du transformateur d'énergie hydraulique correspondant.

Comme dit plus haut, le (chaque) transformateur d'énergie hydraulique comporte des orifices adéquats en liaison avec le premier réseau hydraulique (correspondant) et avec le deuxième réseau hydraulique (correspondant). L'un de ces orifices en liaison avec le premier réseau hydraulique (correspondant) sera avantageusement un orifice de fuite qui permettra à de l'huile contenue dans le premier vérin hydraulique de retourner à la source de fourniture d'huile au travers dudit premier réseau hydraulique. L'orifice d'alimentation dudit premier vérin hydraulique et cet orifice de fuite feront ainsi partie des moyens permettant d'augmenter ou de diminuer le volume de l'huile dans ledit premier vérin hydraulique.

Le (chaque) transformateur d'énergie hydraulique pourra avantageusement comporter une bague susceptible de coulisser de manière étanche dans le corps dudit transformateur d'énergie hydraulique et présentant au moins un orifice qui permettra de faire communiquer le premier vérin hydraulique avec l'orifice de fuite. Cet (ces) orifice(s) de ladite bague sera (seront) mis en communication avec l'orifice de fuite lors de la levée de l'unité de travail. Cet (ces) orifice(s) de ladite bague pourra (pourront) d'ailleurs être avantageusement mis en communication avec l'orifice de fuite par la tige du transformateur d'énergie hydraulique elle-même. La mise hors communication dudit (desdits) orifice(s) de la bague avec l'orifice de fuite pourra, quant à elle, être effectuée par un organe élastiquement déformable.

Dans une réalisation avantageuse, la tige du (de chaque) transformateur d'énergie hydraulique pourra présenter une partie creuse dans laquelle débouche au moins un trou permettant de mettre en communication, directement ou indirectement, le premier vérin hydraulique avec l'orifice de fuite. Le (chaque) transformateur d'énergie hydraulique pourra en sus comporter un collecteur raccordé à l'orifice de fuite et entourant au moins partiellement la tige dudit transformateur d'énergie hydraulique.

Le (chaque) premier réseau hydraulique pourra avantageusement comporter une première voie hydraulique destinée à alimenter le premier vérin hydraulique (correspondant) et une deuxième voie hydraulique en liaison avec l'orifice de fuite dudit premier vérin hydraulique. Le (chaque) deuxième réseau hydraulique, quant à lui, comportera une troisième voie hydraulique en liaison avec l'orifice d'alimentation du deuxième vérin hydraulique (correspondant). Du reste, les moyens permettant de maintenir le volume d'huile dans le (chaque) premier vérin hydraulique lors de l'abaissement de l'unité de travail, pourront avantageusement comporter un moyen interdisant tout simplement la sortie de l'huile dudit premier vérin hydraulique au travers de la première voie hydraulique. Il sera enfin également prévu un moyen qui favorisera l'alimentation du deuxième vérin hydraulique lors de la levée de l'unité de travail.

Dans une première réalisation non limitative, la première voie hydraulique sera couplée, directement ou indirectement, à la troisième voie hydraulique, tandis que le moyen interdisant la sortie de l'huile du premier vérin hydraulique au travers de la première voie hydraulique sera implanté entre l'orifice d'alimentation du premier vérin hydraulique (correspondant) et le couplage de ladite première voie hydraulique sur ladite troisième voie hydraulique.

Dans une deuxième réalisation non limitative, la première voie hydraulique sera constituée au moins partiellement par la troisième voie hydraulique et par une communication entre le deuxième vérin hydraulique et le premier vérin hydraulique. Dans ce cas, le moyen interdisant la sortie de l'huile du premier vérin hydraulique au travers de la première voie hydraulique pourra avantageusement agir notamment au niveau de ladite communication entre le deuxième vérin hydraulique et le premier vérin hydraulique. Dans le cas où la butée définissant la position prédéterminée jusqu'à laquelle peut se déplacer le piston dans le cylindre du (de chaque) deuxième vérin hydraulique est constituée d'un tirant qui traverse le piston dudit deuxième vérin hydraulique, ladite communication entre le deuxième vérin hydraulique et le premier vérin hydraulique pourra être avantageusement prévue dans ledit tirant.

Mais cette communication pourra également être avantageusement prévue au moins partiellement dans le piston du deuxième vérin hydraulique. Dans le cas où la position prédéterminée jusqu'à laquelle peut se déplacer le piston dans le cylindre du (de chaque) deuxième vérin hydraulique est déterminée par au moins un orifice de limitation prévu dans le cylindre du deuxième vérin hydraulique, ladite communication pourra en sus être constituée par ledit (lesdits) orifice(s) de limitation.

Le moyen interdisant la sortie de l'huile du premier vérin hydraulique au travers de la première voie hydraulique pourra être tout simplement constitué d'un premier clapet anti-retour.

En ce qui concerne le moyen qui favorise l'alimentation du deuxième vérin hydraulique lors de la levée de l'unité de travail, celui-ci sera, de préférence, réalisé sous forme de moyen qui empêchera l'alimentation du premier vérin hydraulique tant que le piston du deuxième vérin hydraulique ne sera pas dans sa position prédéterminée. Ce moyen pourra être tout simplement constitué par le premier clapet anti-retour qui sera réalisé, à cet effet, sous forme de clapet anti-retour taré.

Il pourra en outre être avantageusement prévu que l'alimentation du premier vérin hydraulique se fasse au travers d'un étrangleur, de préférence réglable. Ceci permettra une alimentation progressive du premier vérin hydraulique en vue du réglage précis de l'allégement lors de la levée de l'unité de travail.

Dans le cas où le dispositif de réglage automatique de l'allégement de l'unité de travail comprend plusieurs transformateurs d'énergie hydraulique, il sera préférable d'alimenter tous les premiers vérins hydrauliques de ceux-ci au travers d'un seul étrangleur.

La deuxième voie hydraulique, quant à elle, pourra également comprendre un deuxième clapet anti-retour interdisant la circulation de l'huile dans le sens source de fourniture d'huile/premier vérin hydraulique.

La troisième voie hydraulique, de son côté, pourra avantageusement comprendre un premier clapet anti-retour piloté interdisant la circulation de l'huile dans le sens deuxième vérin hydraulique/source de fourniture d'huile et dont l'ouverture sera commandée par la pression régnant dans la deuxième voie hydraulique.

Ce premier clapet anti-retour piloté constituera un élément de sécurité qui évitera la sortie de l'huile du deuxième vérin hydraulique lorsque l'unité de travail sera éloignée du sol (position de transport par exemple). L'huile contenue dans le deuxième vérin hydraulique ne pourra en effet sortir de celui-ci que lorsque l'huile contenue dans la deuxième voie hydraulique sera sous pression.

De même, la deuxième voie hydraulique pourra également comprendre un deuxième clapet anti-retour piloté interdisant la circulation de l'huile dans le sens premier vérin hydraulique / source de fourniture d'huile. L'ouverture du premier clapet anti-retour piloté, respectivement de ce deuxième clapet anti retour piloté, sera commandée par la pression régnant dans la deuxième voie hydraulique en amont du deuxième clapet anti-retour piloté, respectivement par la pression régnant dans la troisième voie hydraulique en amont du premier clapet anti-retour piloté. Ce deuxième clapet anti-retour piloté constituera également un élément de sécurité qui évitera la sortie de l'huile du premier vérin hydraulique par l'orifice de fuite lorsque cela n'est pas souhaité. L'huile contenue dans le premier vérin hydraulique ne pourra sortir de celui-ci que lorsque l'huile contenue dans la troisième voie hydraulique sera sous pression. Ce deuxième clapet anti-retour piloté sera avantageusement prévu en amont du deuxième clapet anti-retour que pourra également comporter la deuxième voie hydraulique.

Il convient de préciser que les mots "en amont" et "en aval" dans la description ci-dessus et suivante sont à comprendre en considérant le circuit hydraulique dans le sens source de fourniture d'huile / transformateur(s) d'énergie hydraulique.

L'invention trouve une application tout particulièrement dans le domaine des machines agricoles et notamment des machines de coupe, en particulier celles destinées à la récolte, telles que les faucheuses avec ou sans dispositif de traitement du produit coupé.

D'autres caractéristiques de l'invention ressortent de la description suivante faite en référence au dessin annexé dans lequel :
- les **figures 1 à 10** illustrent schématiquement le procédé de réglage automatique de l'allégement d'une unité de travail d'une machine selon l'invention sur la base de la première famille de réalisation de dispositifs mettant en oeuvre ledit procédé, dont le (les) transformateur(s) d'énergie hydraulique lève(nt) l'unité de travail en s'allongeant ;
- la **figure 11** représente une vue de dessus d'une machine selon l'invention comportant un dispositif de réglage automatique de l'allégement de son unité de travail mettant en oeuvre le procédé selon l'invention ;
- la **figure 12** représente une vue suivant la flèche XII définie sur la figure 11;
- la **figure 13** représente une vue suivant la flèche XIII définie sur la figure 11 ;
- la **figure 14** représente, en coupe, le transformateur d'énergie hydraulique d'un premier exemple de réalisation d'un tel dispositif de réglage automatique de l'allégement, ledit transformateur d'énergie hydraulique étant dans la position normale de travail ;
- la **figure 15** représente, en coupe, le transformateur d'énergie hydraulique de la figure 14 quand l'unité de travail est éloignée dudit sol ;
- la **figure 16** représente, à une échelle agrandie, la zone XVI de la figure 15 ;
- la **figure 17** représente à une échelle agrandie, la zone XVII de la figure 16 ;
- les **figures 18 et 19** représentent, à une échelle agrandie, un autre exemple de réalisation de l'amortisseur équipant le transformateur d'énergie hydraulique des figures 14 à 17 ;
- la **figure 20** représente, en coupe, le transformateur d'énergie hydraulique d'un deuxième exemple de réalisation d'un dispositif de réglage automatique de l'allégement, ledit transformateur d'énergie hydraulique étant dans la position normale de travail ;
- la **figure 21** représente, en coupe, le transformateur d'énergie hydraulique de la figure 20 quand l'unité de travail est éloignée du sol ;
- la **figure 22** représente, à une échelle agrandie, la zone XXII de la figure 21 ;
- la **figure 23** représente, partiellement et en coupe, le transformateur d'énergie hydraulique d'un troisième exemple de réalisation d'un dispositif de réglage automatique de l'allégement, ledit transformateur d'énergie hydraulique étant dans la position normale de travail ;
- la **figure 24** représente, en coupe, le transformateur d'énergie hydraulique d'un quatrième exemple de réalisation d'un dispositif de réglage automatique de l'allégement, ledit transformateur d'énergie hydraulique étant dans la position normale de travail ;
- la **figure 25** représente, en coupe, le transformateur d'énergie hydraulique de la figure 24 quand l'unité de travail est éloignée du sol ;
- la **figure 26** représente, à une échelle agrandie, la zone XXVI de la figure 25 ;
- la **figure 27** représente schématiquement un dispositif de réglage automatique de l'allégement d'une unité de travail d'une machine selon la deuxième famille de réalisation, le transformateur d'énergie hydraulique se trouvant en position normale de travail ;
- la **figure 28** représente le transformateur d'énergie hydraulique de la figure 27 quand l'unité de travail est éloignée du sol.

L'invention se rapporte à un procédé de réglage automatique de l'allégement d'une unité de travail (U) d'une machine.

Cette unité de travail (U) est généralement portée par une structure porteuse de sorte à être en appui sur le sol (S) durant le travail et éloignée dudit sol (S) lorsque le travail est interrompu ou durant le transport. Ladite unité de travail (U) peut être abaissée pour être amenée en appui sur le sol (S) ou être levée pour être éloignée dudit sol (S) au moyen d'au moins un transformateur d'énergie hydraulique (37/38) alimenté par une source de fourniture d'huile (103) au travers d'un circuit hydraulique (94).

Ce transformateur d'énergie hydraulique (37/38) comporte un premier vérin hydraulique (57) muni notamment d'une tige (46) et associé à un accumulateur hydropneumatique (67) dont la pression du gaz (G) peut être réglée initialement à une valeur correspondant au degré de l'allégement souhaité pour l'unité de travail (U).

Ce transformateur d'énergie hydraulique (37/38) comporte en sus un deuxième vérin hydraulique (58) dont le piston (53) peut se déplacer dans le cylindre (C₂) dudit deuxième vérin hydraulique (58) jusqu'à une position prédéterminée (PP) prévue dans ledit cylindre (C₂). Le piston (53) du deuxième vérin hydraulique (58) est désolidarisé de la tige (46) du premier vérin hydraulique (57) et agit sur celle-ci par l'intermédiaire de l'huile (O) contenue dans le premier vérin hydraulique (57).

L'alimentation en huile du premier vérin hydraulique (57) se fait au travers d'un orifice d'alimentation (87). Le transformateur d'énergie hydraulique (37/38) comporte en sus un orifice de fuite (90) par lequel peut sortir de l'huile contenue dans le premier vérin hydraulique (57).

L'alimentation du deuxième vérin hydraulique (58), quant à elle, se fait au travers d'un orifice d'alimentation (93).

Le circuit hydraulique (94) comprend un premier réseau hydraulique (95) couplé au premier vérin hydraulique (57), et un deuxième réseau hydraulique (96) couplé au deuxième vérin hydraulique (58). Le premier réseau hydraulique (95) comporte une première voie hydraulique (97) en liaison avec l'orifice d'alimentation (87) du premier vérin hydraulique (57), et une deuxième voie hydraulique (98) branchée sur l'orifice de fuite (90) dudit premier vérin hydraulique (57). Le deuxième réseau hydraulique (96), quant à lui, comporte une troisième voie hydraulique (99) branchée sur l'orifice d'alimentation (93) du deuxième vérin hydraulique (58) et couplée à la première voie hydraulique (97). Cette dernière présente en outre un moyen (109) empêchant d'une part l'alimentation du premier vérin hydraulique (57) tant que le piston (53) du deuxième vérin hydraulique (58) n'est pas dans sa position prédéterminée (PP) et interdisant d'autre part la sortie de l'huile (O) dudit premier vérin hydraulique (57) par l'orifice d'alimentation (87).

La source de fourniture d'huile (103) comporte une pompe (104), un réservoir (105) et un distributeur (106). Le distributeur (106) comporte quatre orifices : un premier orifice (P) sur lequel est branchée la pompe (104), un deuxième orifice (T) sur lequel est branché le réservoir (105), un troisième orifice (A) en liaison avec la troisième voie hydraulique (99) et, de ce fait, la première voie hydraulique (97), et un quatrième orifice (B) en liaison avec la deuxième voie hydraulique (98). Le distributeur (106) comporte également trois positions : une position neutre (106¹) dans laquelle la pompe (104) et le réservoir (105) sont isolés du circuit hydraulique (94), une première position active (106²) dans laquelle la pompe (104) respectivement le réservoir (105) sont en liaison avec le troisième orifice (A) respectivement le quatrième orifice (B), et une deuxième position active (106³) dans laquelle la pompe (104) respectivement le réservoir (105) sont en liaison avec le quatrième orifice (B) respectivement le troisième orifice (A).

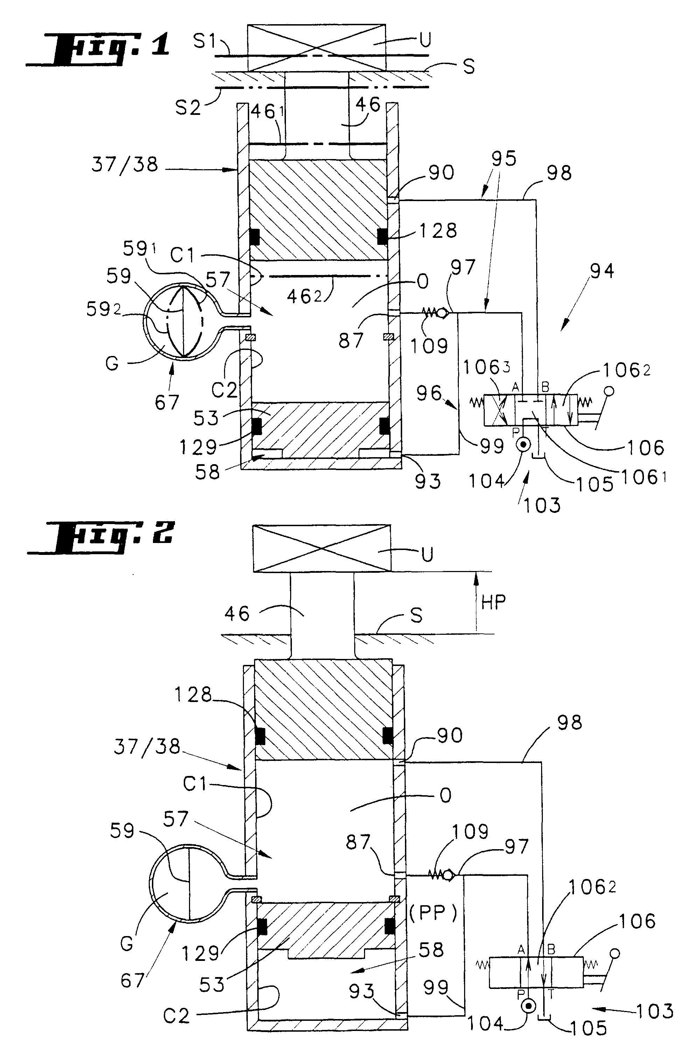

La figure 1 illustre la position de travail. L'unité de travail (U) est en appui sur le sol (S). La pression du gaz (G) dans l'accumulateur hydropneumatique (67) est réglée à une valeur donnée correspondant au poids apparent souhaité pour l'unité de travail (U). Dans cette position, l'unité de travail (U) peut suivre le relief du sol (S) variant entre (S¹) et (S²), puisque l'accumulateur hydropneumatique (67) autorise le déplacement de la tige (46) dans le cylindre (C₁) du premier vérin hydraulique (57) entre les positions (46¹) et (46²) par déformation de la membrane (59) entre les positions (59¹) et (59²).

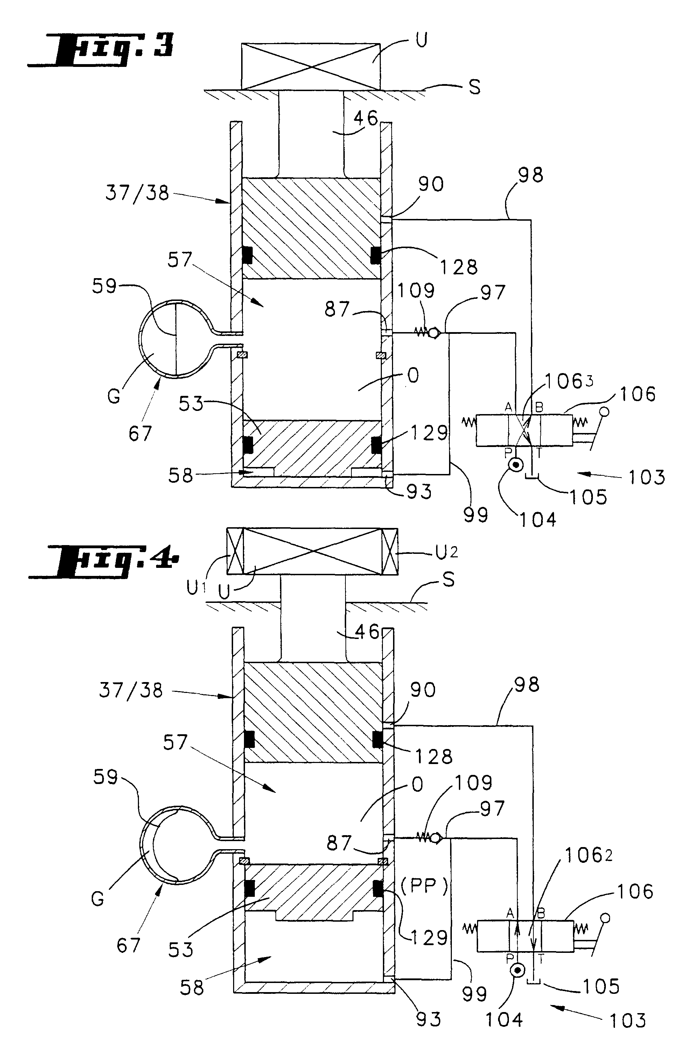

La figure 2 illustre la position dans laquelle l'unité de travail (U) est éloignée du sol (S). Le passage de la situation de la figure 1 à la situation de la figure 2 s'opère en plaçant le distributeur (106) dans la première position active (106²). Etant donné que le moyen (109) empêche l'alimentation du premier vérin hydraulique (57) tant que le piston (53) du deuxième vérin hydraulique (58) ne se trouve pas dans sa position prédéterminée (PP) dans le cylindre (C₂) dudit deuxième vérin hydraulique (58), l'huile fournie par la pompe (104) pénètre dans le deuxième vérin hydraulique (58) et déplace ledit piston (53) vers sa position prédéterminée (PP). Ce faisant, le piston (53) repousse la tige (46) du premier vérin hydraulique (57) hors du transformateur d'énergie hydraulique (37/38) par l'intermédiaire de l'huile (O) contenue dans le premier vérin hydraulique (57). L'orifice de fuite (90) est prévu dans le cylindre (C₁) du premier vérin hydraulique (57) à un endroit tel que, lorsque le piston (53) du deuxième vérin hydraulique (58) arrive dans sa position prédéterminée (PP), la tige (46) du premier vérin hydraulique (57) dégage sensiblement l'orifice de fuite (90). L'unité de travail (U) se trouvera alors à une hauteur prédéterminée (HP).

En continuant d'alimenter le circuit hydraulique (94), l'huile fournie par la pompe (104) pourrait certes pénétrer dans le premier vérin hydraulique (57) par l'orifice d'alimentation (87) - le moyen (109) permet en effet l'alimentation du premier vérin hydraulique (57) quand le piston (53) du deuxième vérin hydraulique (58) est dans sa position prédéterminée (PP) - mais en ressortirait aussitôt par l'orifice de fuite (90).

En replaçant le distributeur (106) dans sa position neutre (106¹), l'unité de travail (U) sera maintenue éloignée du sol (S).

Pour repasser de la position dans laquelle l'unité de travail (U) est éloignée du sol (S) dans la position illustrée sur la figure 1, on place le distributeur (106) dans la deuxième position active (106³) : c'est ce qui est illustrée sur la figure 3. Le poids de l'unité de travail (U) refoule alors l'huile contenue dans le deuxième vérin hydraulique (58) vers le réservoir (105) de la source de fourniture d'huile (103). Le volume de l'huile (O) contenue dans le premier vérin hydraulique (57) reste par contre maintenu puisque aucune huile ne peut sortir par l'orifice de fuite (90) et par l'orifice d'alimentation (87). La valeur de l'allégement de l'unité de travail (U) reste ainsi conservée.

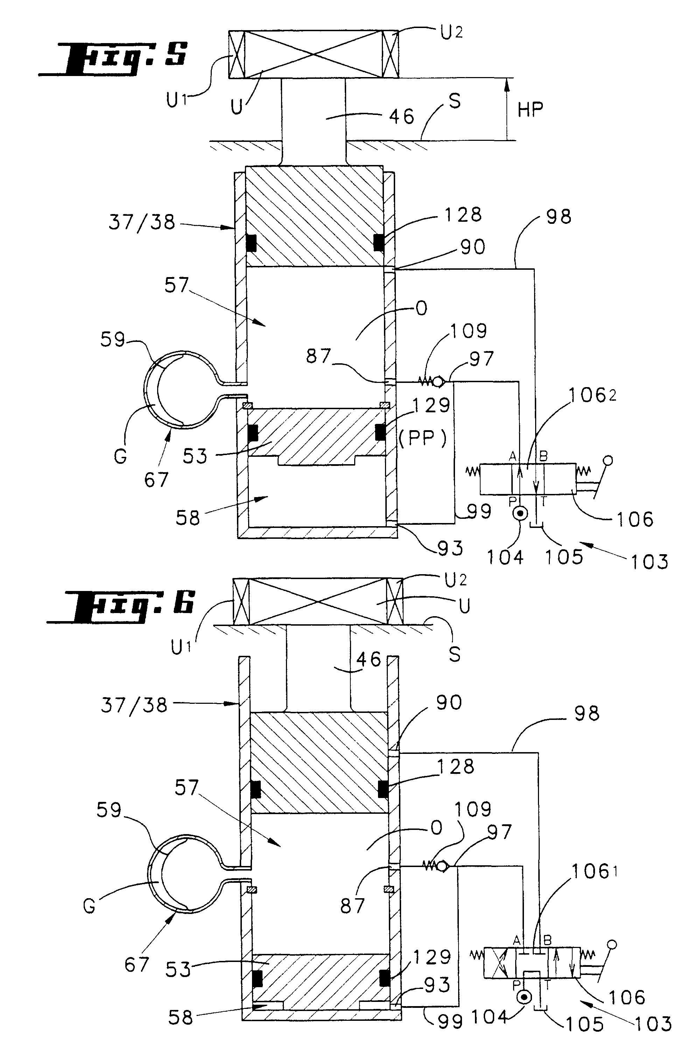

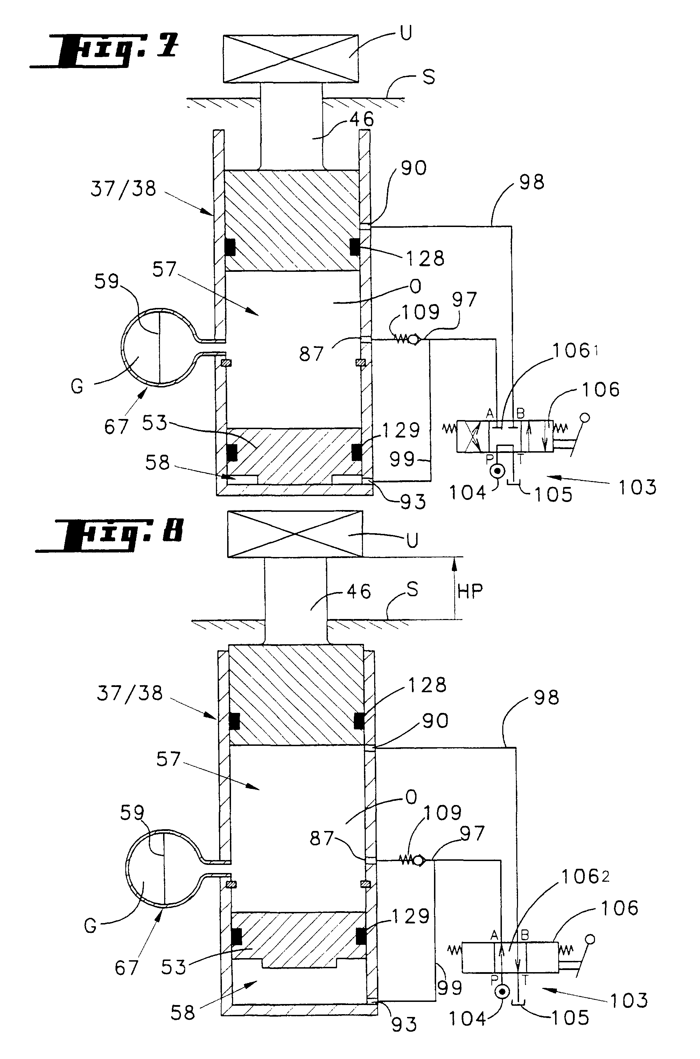

Si, au cours du travail, le poids de l'unité de travail (U) a augmenté - cette augmentation a été visualisée sur les figures 4 à 6 par l'ajout de deux masses (U¹) et (U²) -, ladite unité de travail (U) reposera plus lourdement sur le sol (S) jusqu'à la prochaine levée de l'unité de travail (U) (figures 4 et 5) au cours de laquelle s'effectuera le réglage de l'allégement.

La figure 4 illustre la première phase de la levée. En plaçant le distributeur (106) dans la première position active (106²), on alimente le deuxième vérin hydraulique (58). L'huile fournie par la pompe (104) déplace le piston (53) vers sa position prédéterminée (PP). Ce faisant, le piston (53) repousse la tige (46) hors du transformateur d'énergie hydraulique (37/38) par l'intermédiaire de l'huile (O) contenue dans le premier vérin hydraulique (57). Etant donné que le poids de l'unité de travail (U) a augmenté, le volume du gaz (G) de l'accumulateur hydropneumatique (67) a diminué. Ainsi, lorsque le piston (53) du deuxième vérin hydraulique (58) arrive dans sa position prédéterminée (PP), la tige (46) du premier vérin hydraulique (57) n'a pas encore dégagé l'orifice de fuite (90). A ce moment, débute la deuxième phase de la levée au cours de laquelle s'effectue le réglage de l'allégement. En continuant en effet d'alimenter le circuit hydraulique (94), l'huile fournie par la pompe (104) pénètre alors dans le premier vérin hydraulique (57) par l'orifice d'alimentation (87) étant donné que le moyen (109) devient passant. L'huile qui pénètre ainsi dans le premier vérin hydraulique (57), continue de repousser la tige (46) hors du transformateur d'énergie hydraulique (37/38) jusqu'à ce que ladite tige (46) dégage sensiblement l'orifice de fuite (90). L'unité de travail (U) se trouvera alors à nouveau à la hauteur prédéterminée (HP).

Pour repasser à la position de travail (figure 6), on place tout d'abord le distributeur (106) dans la deuxième position active (106³). Le poids de l'unité de travail (U) refoule l'huile contenue dans le deuxième vérin hydraulique (58) vers le réservoir (105) de la source de fourniture d'huile (103). Le nouveau volume de l'huile (O) contenue dans le premier vérin hydraulique (57) reste là aussi maintenu. Lorsque l'unité de travail (U) est en appui sur le sol (S), on replace le distributeur (106) dans la position neutre (106¹). Bien que l'unité de travail (U) soit plus lourde, le poids apparent avec lequel elle repose sur le sol (S) est à nouveau identique au poids apparent initial quand les deux masses (U¹) et (U²) n'existaient pas.

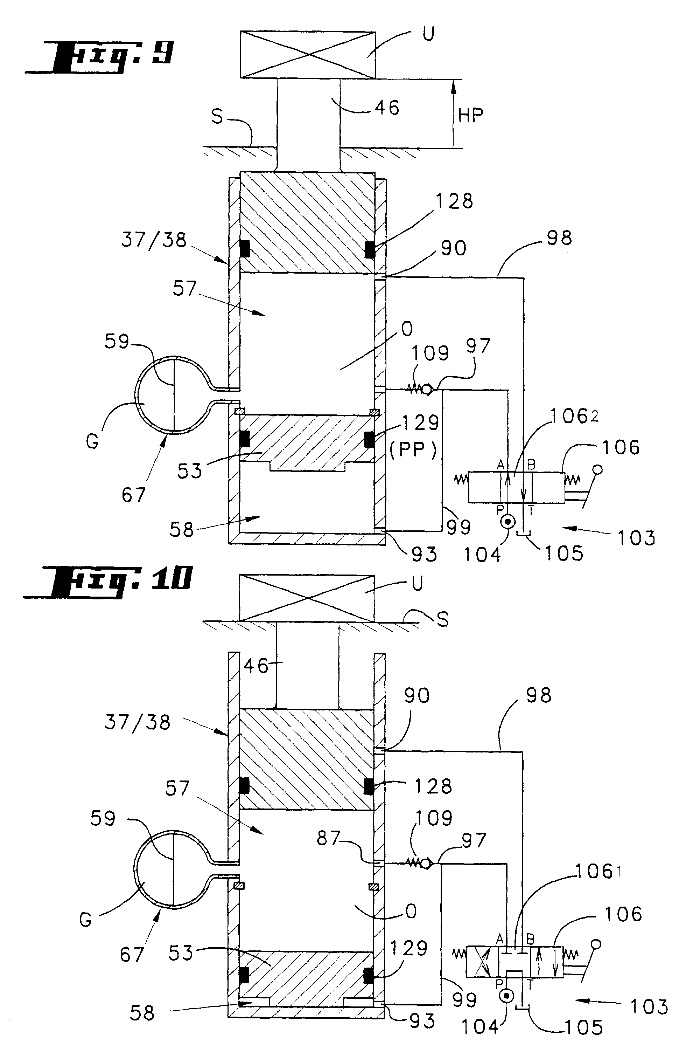

Dans l'hypothèse où le poids de l'unité de travail (U) diminue à nouveau, le volume du gaz (G) contenu dans l'accumulateur hydropneumatique (67) augmentera en conséquence. L'unité de travail (U) reposera alors trop légèrement sur le sol (S) ou, dans le cas où l'unité de travail (U) retrouve son poids initial, elle décollera tout simplement de la surface du sol (S) : c'est ce qui est représentée sur la figure 7.

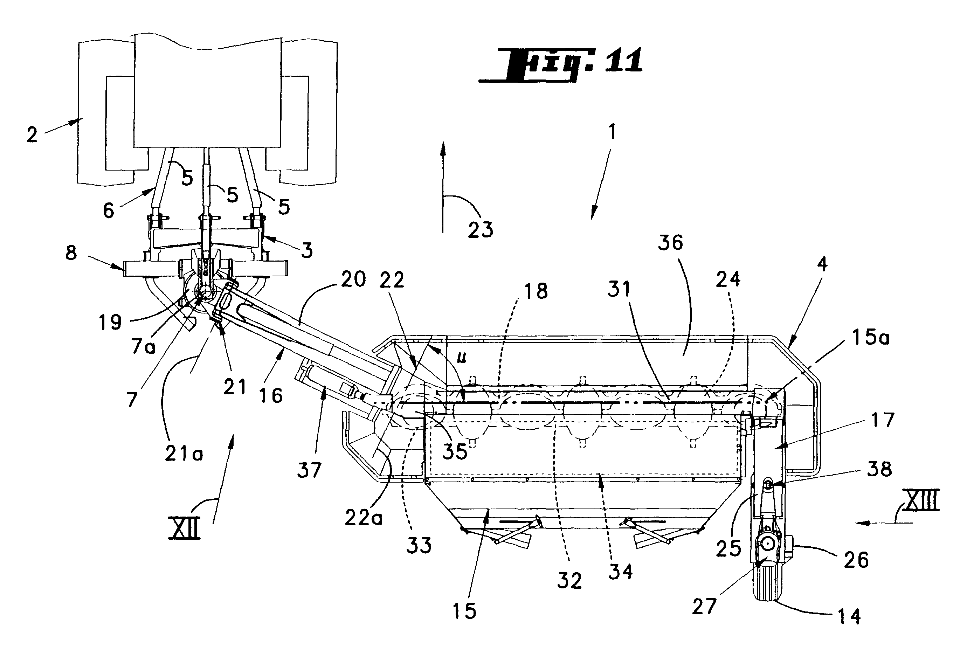

En levant l'unité de travail (U), on procédera à nouveau au réglage de l'allégement. Pour ce faire, on place le distributeur (106) dans la première position active (106²). L'huile fournie par la pompe (104) déplace le piston (53) vers sa position prédéterminée (PP). Ce faisant, le piston (53) repousse la tige (46) hors du transformateur d'énergie hydraulique (37/38) par l'intermédiaire de l'huile (O) contenue dans le premier vérin hydraulique (57). Etant donné que le poids de l'unité de travail (U) a diminué, le volume du gaz (G) de l'accumulateur hydropneumatique a augmenté. Ainsi, la tige (46) dégage déjà l'orifice de fuite (90), c'est-à-dire que l'unité de travail (U) se trouve déjà à la hauteur prédéterminée (HP), alors que le piston (53) n'a pas encore atteint sa position prédéterminée (PP) : c'est ce qui est illustré sur la figure 8. La poursuite du déplacement du piston (53) vers sa position prédéterminée (PP) chasse de l'huile hors du premier vérin hydraulique (57) au travers de l'orifice de fuite (90), laquelle huile retourne au réservoir (105). Lorsque le piston (53) atteint sa position prédéterminée (PP), l'unité de travail (U) se trouve toujours à la hauteur prédéterminée (HP).

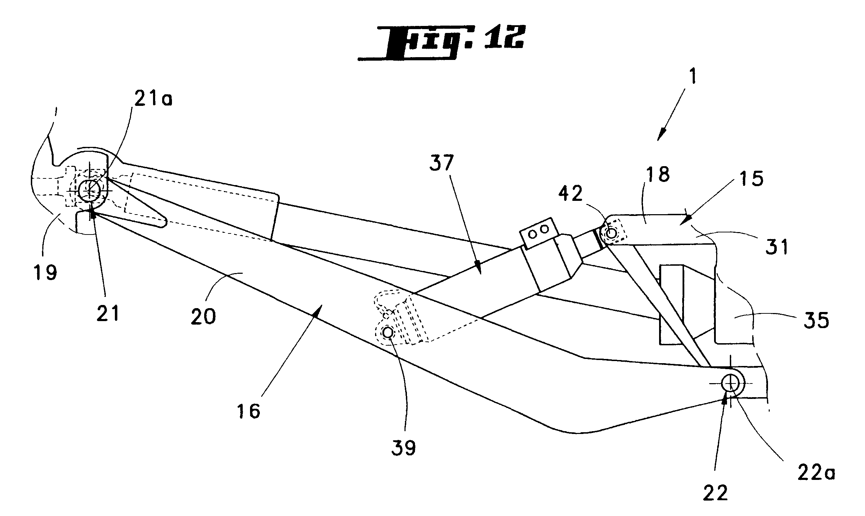

Pour repasser à la position de travail (figure 10), on place tout d'abord le distributeur (106) dans la deuxième position active (106³). Le poids de l'unité de travail (U) refoule l'huile contenue dans le deuxième vérin hydraulique (58) vers le réservoir (105) de la source de fourniture d'huile (103). Le nouveau volume de l'huile (O) contenu dans le premier vérin hydraulique (57) reste là aussi maintenu. Lorsque l'unité de travail (U) est en appui sur le sol (S), on replace le distributeur (106) dans la position neutre (106¹). Bien que l'unité de travail (U) soit à nouveau moins lourde que précédemment, le poids apparent avec lequel elle repose sur le sol (S) est à nouveau identique au poids apparent initial.

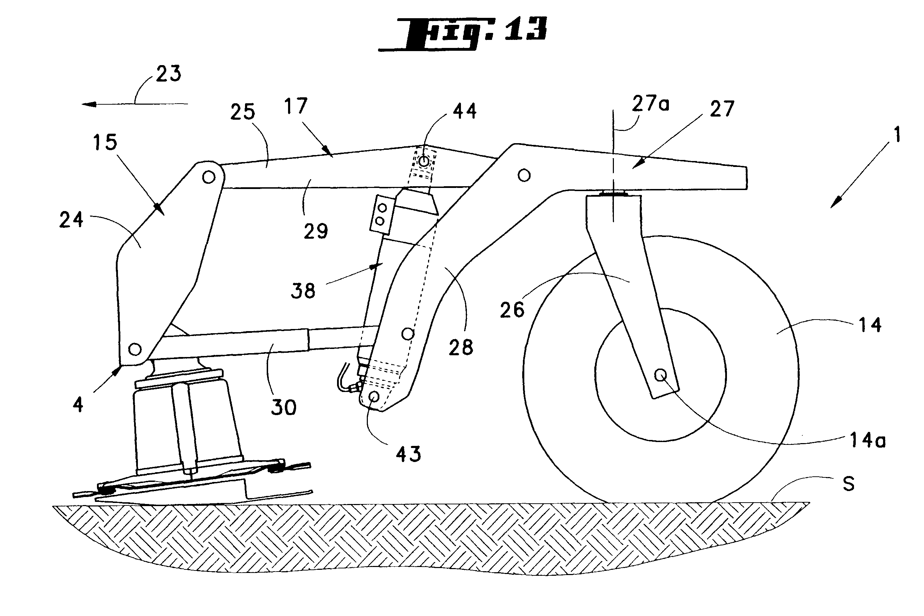

Une machine selon l'invention est représentée sur les figures 11 à 13 ; c'est une faucheuse (1) dont l'unité de travail est constituée par le mécanisme de récolte (15). Cette faucheuse (1) est similaire à celle décrite dans les documents EP 0 570 314 A1, EP 0 570 315 A1, EP 0 570 316 A1 et EP 0 579 564 A1 auxquels on pourra se reporter en cas de besoin. Sur la figure 11, la faucheuse (1) est représentée attelée à un tracteur agricole (2) et en position de travail. Elle se compose d'une structure d'attelage (3) et d'un corps (4).

La structure d'attelage (3) est destinée à être liée, à sa partie frontale, aux trois points (5) du dispositif de relevage (6) du tracteur (2). Le corps (4) est lié à la structure d'attelage (3) au moyen d'une articulation cylindrique (7) d'axe géométrique (7a) au moins sensiblement vertical. La position angulaire du corps (4) par rapport à la structure d'attelage (3) peut être modifiée en faisant pivoter le corps (4) autour dudit axe géométrique (7a). La mise dans la position angulaire souhaitée est réalisée sous l'action d'un vérin hydraulique de manoeuvre (8). Le corps (4) peut ainsi être amené d'une position de transport (non représentée) où il s'étend longitudinalement derrière le tracteur (2), dans la position de travail (figure 11) où il s'étend au moins sensiblement à côté de la voie du tracteur (2). Lorsque le corps (4) est dans sa position de travail, on empêche l'huile de s'écouler du vérin de manoeuvre (8), ce qui a pour effet de condamner le pivotement dudit corps (4) autour de l'axe géométrique (7a). A l'inverse, au transport, le vérin de manoeuvre (8) autorise le libre pivotement du corps (4) autour de l'axe géométrique (7a). De ce fait, au transport, le corps (4) se comporte comme une remorque étant donné qu'il est doté d'une roue (14) implantée à son extrémité longitudinale éloignée de la structure d'attelage (3). Le dispositif d'orientation et de verrouillage de la roue (14) en position de transport n'est pas décrit étant donné qu'il est bien expliqué dans le document EP 0 570 314 A1 notamment.

Le corps (4) de la faucheuse (1) comporte par ailleurs le mécanisme de récolte (15), deux organes de liaison (16, 17) et un dispositif de réglage automatique de l'allégement du mécanisme de récolte (15) comportant notamment deux transformateurs d'énergie hydraulique (37, 38).

La structure d'attelage (3), les deux organes de liaison (16, 17) et la roue (14) constituent ainsi la structure porteuse du mécanisme de récolte (15).

Le premier organe de liaison (16) qui est représenté plus en détail sur la figure 12, lie la première extrémité longitudinale (18) du mécanisme de récolte (15) à la structure d'attelage (3). A cet effet, ce premier organe de liaison (16) se compose d'une tête (19) montée pivotante autour de l'axe géométrique (7a) de la structure d'attelage (3), et d'un bras oscillant (20) liant le mécanisme de récolte (15) à ladite tête (19). Grâce à ce bras oscillant (20), la première extrémité longitudinale (18) du mécanisme de récolte (15) peut se déplacer en hauteur de manière importante par rapport à la structure d'attelage (3) afin de s'adapter au relief du sol (S). A cet effet, ce bras oscillant (20) est lié, à l'une de ses extrémités, à la tête (19) au moyen d'une première liaison pivot (21) dont l'axe géométrique (21a) s'étend au moins sensiblement orthogonalement à l'axe longitudinal du bras oscillant (20) et l'axe géométrique (7a). A son autre extrémité, le bras oscillant (20) est lié au mécanisme de récolte (15) au moyen d'une deuxième liaison pivot (22) d'axe géométrique (22a) au moins sensiblement parallèle à l'axe géométrique (2 la) de la première liaison pivot (21). Du reste, l'axe géométrique (22a) de la deuxième liaison pivot (22) s'étend, en vue suivant la direction de travail (23), au moins sensiblement à mi-hauteur du mécanisme de récolte (15) et forme, en vue de dessus, un angle (µ) d'environ 60° avec l'axe longitudinal (15a) dudit mécanisme de récolte (15).

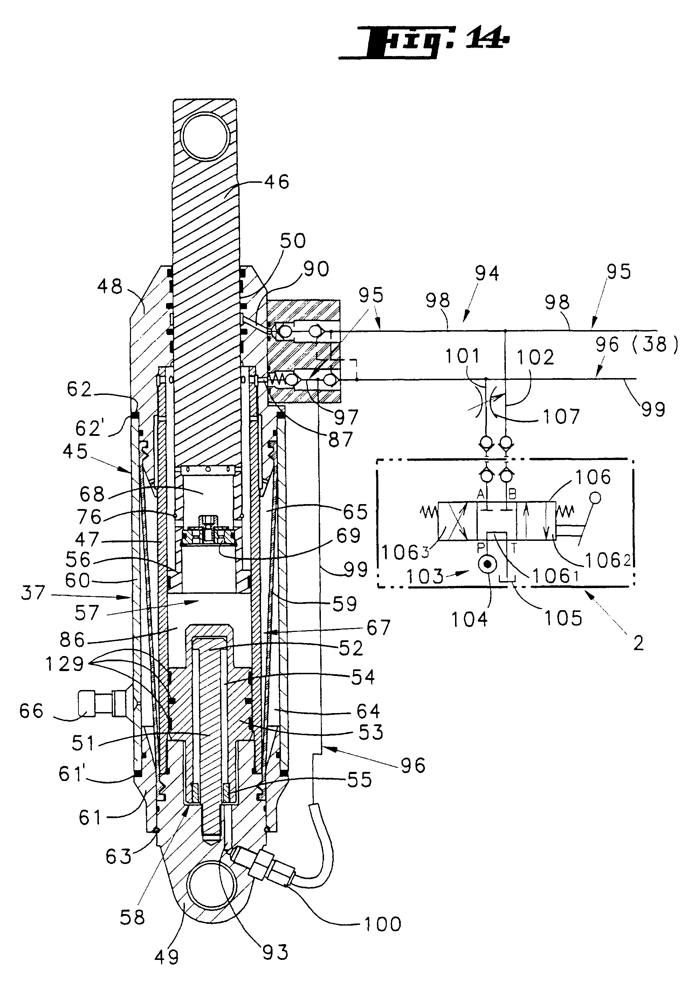

Le deuxième organe de liaison (17) (figure 13) lie la deuxième extrémité longitudinale (24) du mécanisme de récolte (15) à la roue (14). Ce deuxième organe de liaison (17) se compose d'un quadrilatère déformable (25) et d'un organe de guidage (26) de la roue (14). Le quadrilatère déformable (25) s'étend, en vue de dessus, au moins sensiblement orthogonalement à l'axe longitudinal (15a) du mécanisme de récolte (15). L'organe de guidage (26) de la roue (14), quant à lui, est lié au quadrilatère déformable (25) au moyen d'une articulation cylindrique (27) d'axe géométrique (27a) au moins sensiblement vertical. Grâce à cet agencement la deuxième extrémité longitudinale (24) du mécanisme de récolte (15) peut, durant le travail, aisément se déplacer en hauteur par rapport à la roue (14) pour s'adapter au relief du sol (S), tout en autorisant le pivotement de la roue (14). Le quadrilatère déformable (25) comporte une console (28) à la partie supérieure de laquelle est articulé l'organe de guidage (26) de la roue (14), et deux bielles (29, 30) liant cette console (28) au mécanisme de récolte (15). Ce quadrilatère déformable (25) a au moins sensiblement la forme d'un parallélogramme dont le côté matérialisé par la console (28) s'étend vers le haut et vers l'arrière par rapport à la direction de travail (23), de sorte à ménager un espace permettant à la roue (14) de pivoter de 360° autour de l'axe géométrique (27a).

Le mécanisme de récolte (15) qui s'étend entre les deux organes de liaison (16, 17), comporte une poutre porteuse (31) à laquelle sont liés les deux organes de liaison (16, 17). Cette poutre porteuse (31) supporte une barre de coupe (32) équipée d'organes de coupe (33) (disques tournant autour d'axes dirigés vers le haut et munis de couteaux articulés), et un organe de traitement (34) destiné à traiter le produit coupé par lesdits organes de coupe (33). La poutre porteuse (31) s'étend au moins sensiblement orthogonalement à la direction de travail (23) et comporte un carter d'entrée (35) servant à l'entraînement des organes de coupe (33) et de l'organe de traitement (34). Le carter d'entrée (35) est implanté dans le voisinage de la deuxième liaison pivot (22) liant le premier organe de liaison (16) au mécanisme de récolte (15). L'animation des organes de coupe (33) et de l'organe de traitement (34) du mécanisme de récolte (15) n'est pas décrite étant donné qu'elle est bien expliquée dans le document EP 0 570 316 A1 notamment. Le mécanisme de récolte (15) comporte aussi des organes de protection (36) qui s'étendent autour de la barre de coupe (32) et de l'organe de traitement (34).

L'allégement du mécanisme de récolte (15) est réalisé au moyen du dispositif de réglage automatique dudit allégement muni notamment de deux transformateurs d'énergie hydraulique (37, 38) associés chacun à un organe de liaison (16, 17) correspondant. Le premier transformateur d'énergie hydraulique (37) (figure 12) est implanté entre le bras oscillant (20) du premier organe de liaison (16) et la poutre porteuse (31) du mécanisme de récolte (15). Comme visible sur la figure 12, le premier transformateur d'énergie hydraulique (37) est lié d'une part au moins sensiblement au milieu du bras oscillant (20) à l'aide d'une articulation (39) et d'autre part à la poutre porteuse (31) au moyen d'une autre articulation (42).

Le deuxième transformateur d'énergie hydraulique (38) (figure 13) s'étend entre la partie inférieure de la console (28) du quadrilatère déformable (25) à laquelle il est lié au moyen d'une articulation (43), et la bielle supérieure (29) dudit quadrilatère déformable (25) à laquelle il est lié au moyen d'une autre articulation (44).

Divers exemples de réalisation de dispositifs de réglage automatique de l'allégement du mécanisme de récolte (15) de la faucheuse (1) sont décrits ci-après.

Les divers éléments identiques qui constituent ces dispositifs ne seront décrits qu'une seule fois et garderont le même numéro de repère tout au long de la description.

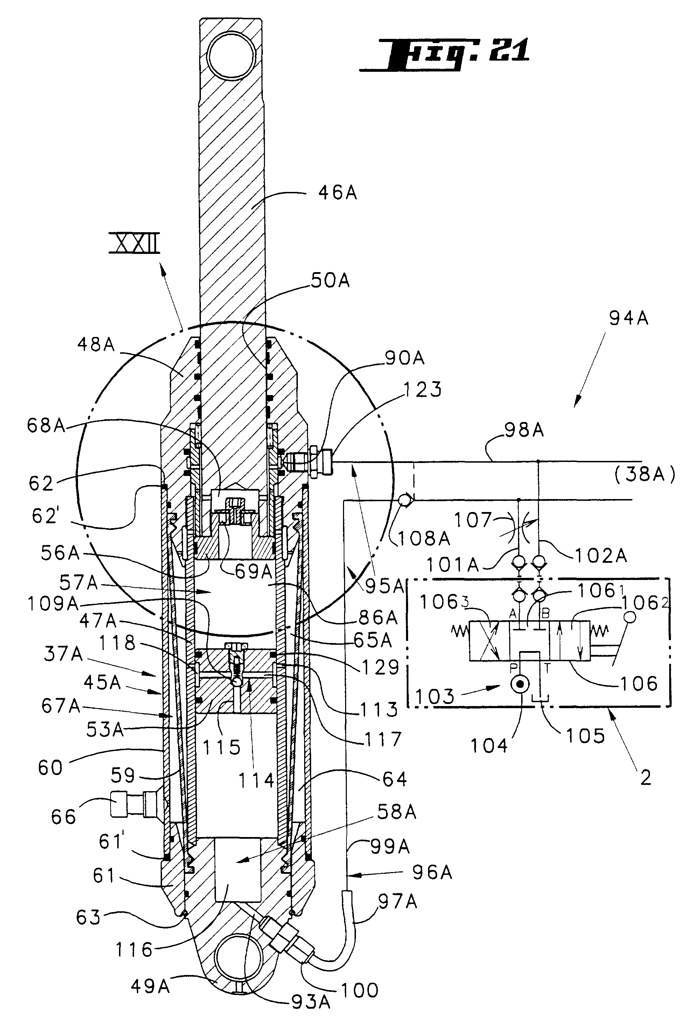

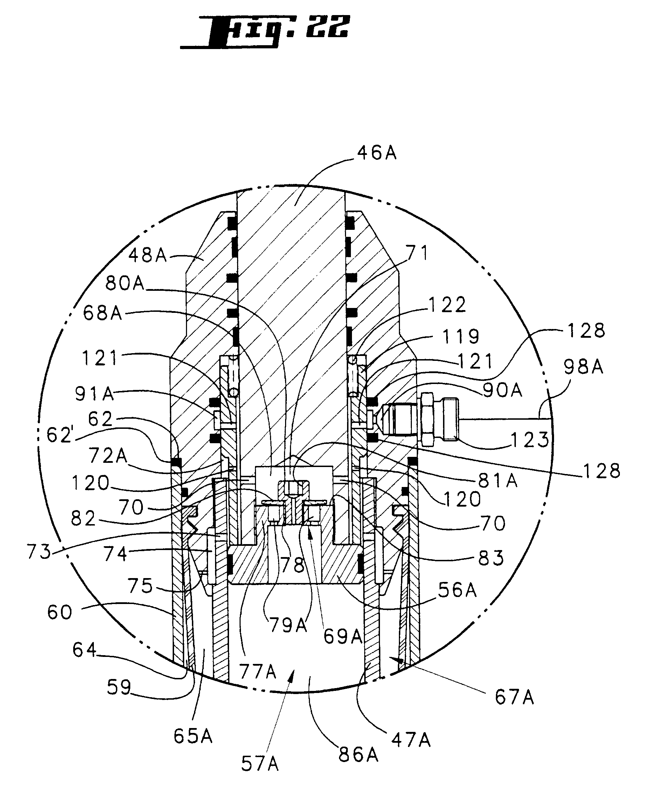

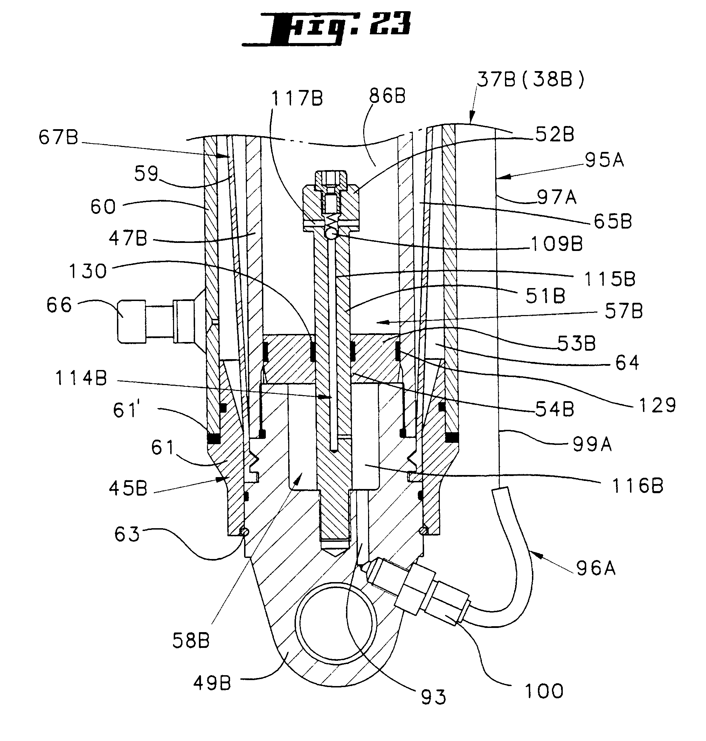

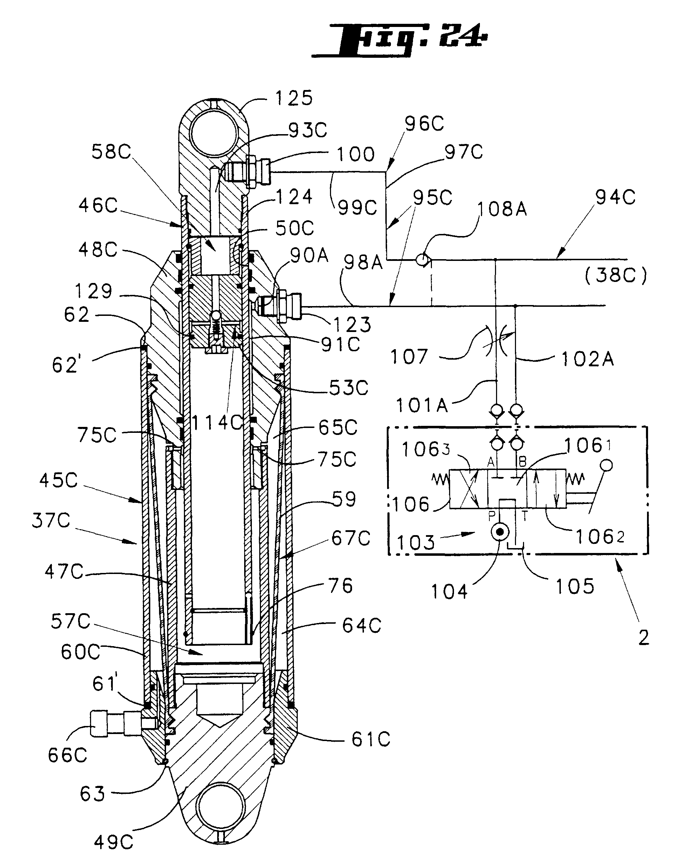

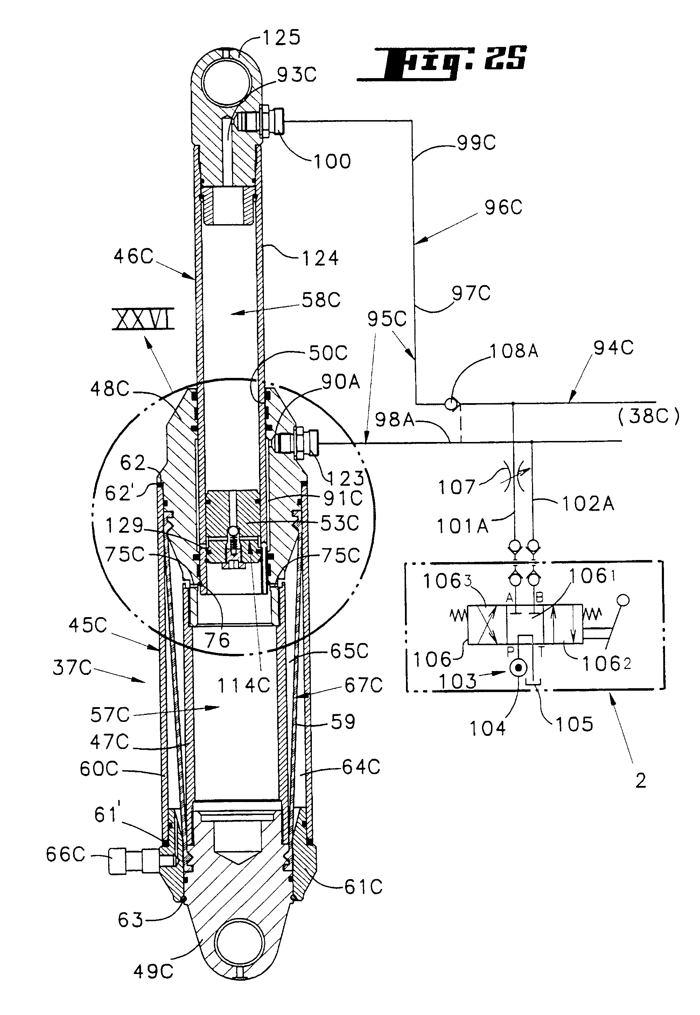

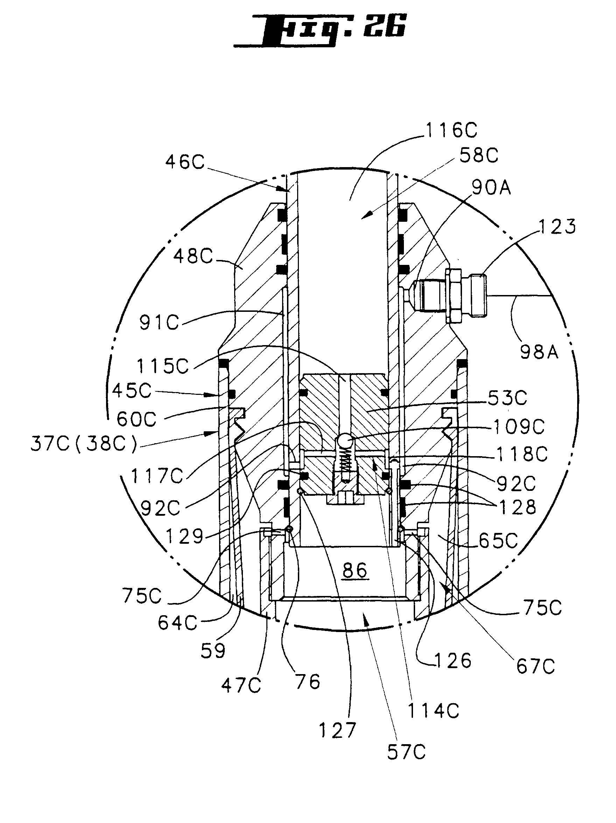

Ces dispositifs comportent également un certain nombre d'éléments similaires en ce qui concerne leur(s) fonction(s). Ces éléments similaires seront affectés du même numéro de repère suivi de la lettre **A** (figures 20 à 22), **B** (figure 23) et **C** (figures 24 à 26).

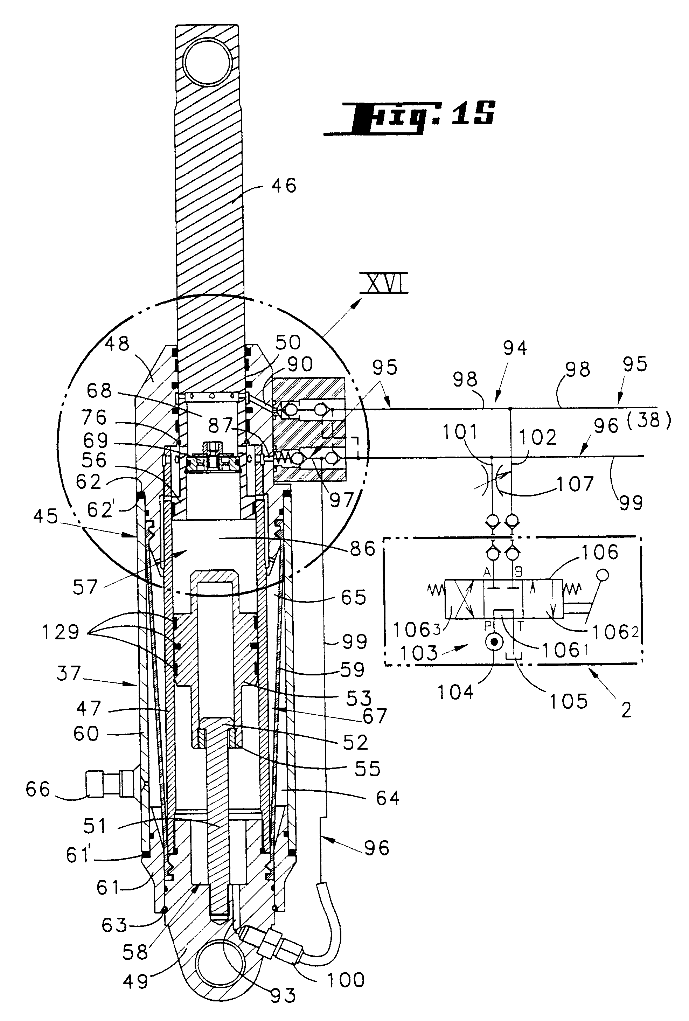

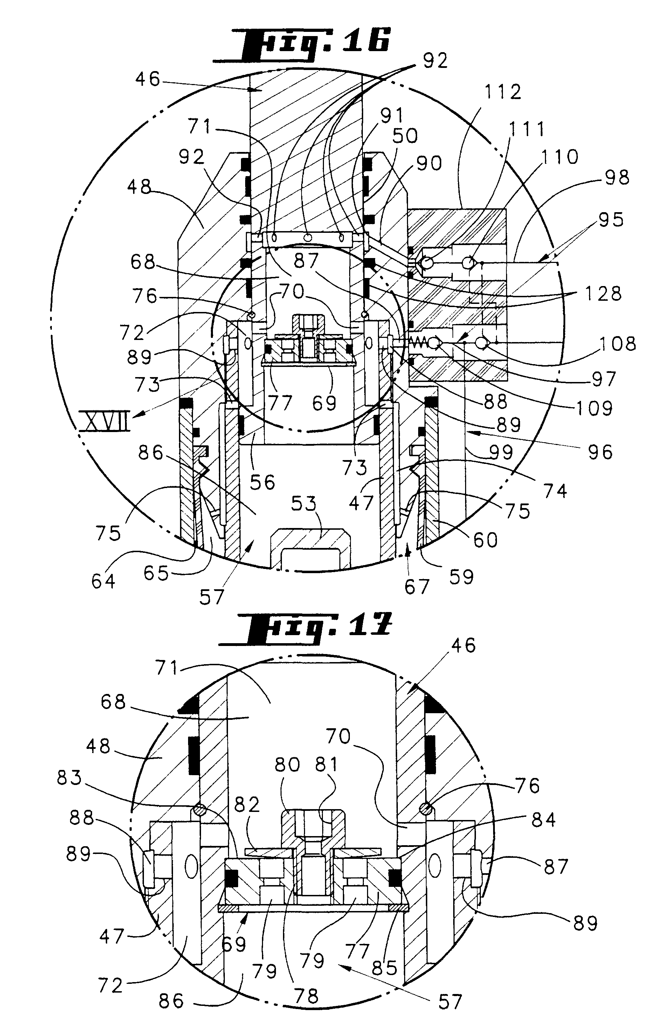

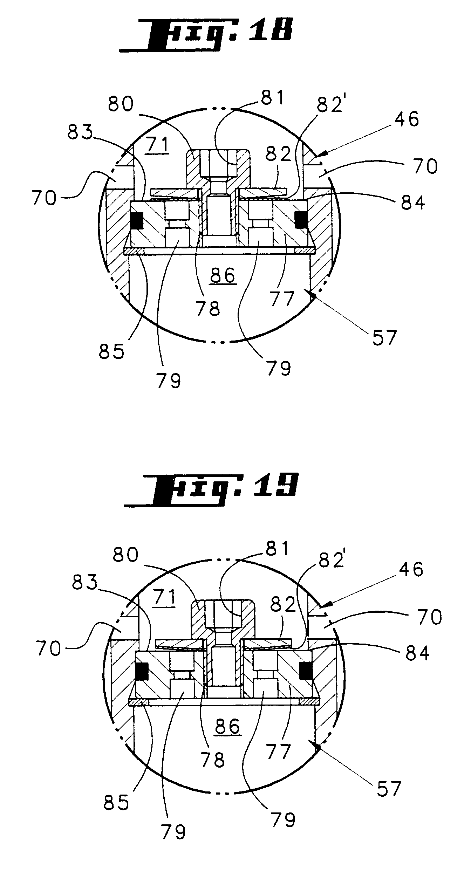

Les figures 14 à 17 montrent un premier exemple de réalisation d'un dispositif de réglage automatique de l'allégement du mécanisme de récolte (15) de la faucheuse (1).

Les transformateurs d'énergie hydraulique (37, 38) qui équipent ce dispositif, comportent chacun un corps (45) et une tige (46). Le corps (45) comporte tout d'abord un cylindre intérieur (47) sur l'extrémité côté tige (46) duquel est vissée une pièce (48) de fermeture du corps (45) et de guidage de la tige (46), et sur l'autre extrémité duquel est vissée une pièce de fermeture (49). La pièce de fermeture et de guidage (48) présente un alésage (50) pour le passage et le guidage de ladite tige (46). La pièce de fermeture (49), quant à elle, comporte un tirant (51) qui est vissé dans ladite pièce de fermeture (49) et qui présente, à son extrémité libre, un épaulement (52). Ce tirant (51) s'étend coaxialement à l'intérieur d'un piston (53) qui présente, à cet effet, un alésage (54) non débouchant et fermé, à son extrémité où pénètre ledit tirant (51), par une bague de fermeture (55) vissée dans ladite extrémité. Ce piston (53), du type plongeur, est destiné à coulisser à l'intérieur du cylindre intérieur (47).

L'extrémité de la tige (46) qui s'étend à l'intérieur du cylindre intérieur (47), comporte également un piston (56).

Ainsi, chaque transformateur d'énergie hydraulique (37, 38) comporte un premier vérin hydraulique (57) formé essentiellement par le cylindre intérieur (47), le piston plongeur (53), la tige (46) munie de son piston (56) et la pièce de fermeture et de guidage (48). Il comporte également un deuxième vérin hydraulique (58) formé par le cylindre intérieur (47), le piston plongeur (53) et la pièce de fermeture (49).

Chaque transformateur d'énergie hydraulique (37, 38) comporte également une membrane déformable (59), de forme conique, qui s'étend entre la pièce de fermeture et de guidage (48) et la pièce de fermeture (49) sur lesquelles elle est montée. Le transformateur d'énergie hydraulique (37, 38) comporte aussi un cylindre extérieur (60) et une bague d'obturation (61) qui sont montés sur la pièce de fermeture et de guidage (48) et la pièce de fermeture (49) en coiffant la membrane déformable (59). Le cylindre extérieur (60) et la bague d'obturation (61) sont maintenus en place entre un épaulement (62) de la pièce de fermeture et de guidage (48) et un jonc d'arrêt (63) monté sur la pièce de fermeture (49) après interposition d'un joint (61'), respectivement d'un joint (62'), entre la bague d'obturation (61) et le cylindre extérieur (60), respectivement entre ce dernier et l'épaulement (62) de la pièce de fermeture et de guidage (48). La membrane déformable (59) sépare ainsi l'espace entre le cylindre intérieur (47), le cylindre extérieur (60), la pièce de fermeture et de guidage (48) et la bague d'obturation (61) en deux volumes : un volume extérieur (64) délimité par le cylindre extérieur (60), la bague d'obturation (61) et la membrane déformable (59), et un volume intérieur (65) délimité par ladite membrane déformable (59), la pièce de fermeture et de guidage (48) et le cylindre intérieur (47). Le volume extérieur (64) est destiné à contenir un gaz, de préférence de l'azote. A cet effet, le cylindre extérieur (60) est pourvu d'une valve de gonflage (66) qui permet d'insuffler le volume de gaz nécessaire. Le volume intérieur (65), quant à lui, est destiné à contenir de l'huile dont la pression est identique à la pression de l'huile contenue dans le premier vérin hydraulique (57). Ce volume extérieur (64) contenant un gaz sous pression et ce volume intérieur (65) contenant de l'huile sous pression constituent ainsi l'accumulateur hydropneumatique (67) associé au premier vérin hydraulique (57). L'accumulateur hydropneumatique (67) est ainsi intégré dans le transformateur d'énergie hydraulique (37, 38) et entoure le premier vérin hydraulique (57) et le deuxième vérin hydraulique (58).

Dans l'exemple représenté, la liaison hydraulique entre le premier vérin hydraulique (57) et l'accumulateur hydropneumatique (67) est réalisée de la manière suivante. La tige (46) présente, à son extrémité s'étendant à l'intérieur du premier vérin hydraulique (57), une partie creuse (68) dans la partie médiane de laquelle est implanté un amortisseur (69) qui sera décrit en détail plus loin. Dans la tige (46) est réalisé au moins un premier trou (70) qui fait communiquer l'espace (71) de la partie creuse (68) situé au-delà de l'amortisseur (69), avec la petite chambre (72) du premier vérin hydraulique (57). Le cylindre intérieur (47), quant à lui, comporte au moins un premier trou (73) qui fait communiquer ladite petite chambre (72) du premier vérin hydraulique (57) avec un premier volume collecteur (74) aménagé entre ledit cylindre intérieur (47) et la pièce de fermeture et de guidage (48). Cette pièce de fermeture et de guidage (48), enfin, présente au moins un premier trou (75) qui fait communiquer le premier volume collecteur (74) avec le volume intérieur (65) de l'accumulateur hydropneumatique (67). La sortie de la tige (46) du transformateur d'énergie hydraulique (37, 38) est limitée par un jonc d'arrêt (76) monté sur ladite tige (46) et butant contre la pièce de fermeture et de guidage (48). Le(s) premier(s) trou(s) (73) du cylindre intérieur (47) est (sont) positionné(s) de telle manière qu'il(s) ne soit (soient) pas totalement obturé(s) par le piston (56) de la tige (46) quand cette dernière se trouve dans sa position de sortie maximale.

L'amortisseur (69) est constitué d'un disque (77) dans lequel sont pratiqués un trou central fileté (78) et un certain nombre de trous (79) disposés autour dudit trou central (78). Une vis creuse (80), munie en son centre d'un trou (81), est vissée dans le trou central fileté (78) après interposition d'une rondelle concave (82) s'étendant à l'intérieur de l'espace (71) de la partie creuse (68) de la tige (46), entre ladite vis creuse (80) et la face correspondante (83) du disque (77) avec la concavité dirigée vers ladite face (83) du disque (77). En vue suivant l'axe de la vis creuse (80), la rondelle concave (82) couvre entièrement les trous (79). En vue en coupe, il apparaît toutefois, que du fait de la concavité de la rondelle concave (82), lesdits trous (79) ne sont obturés. L'amortisseur (69), ainsi prémonté, est monté dans la partie creuse (68) de la tige (46) et y est maintenu en place par un épaulement (84) prévu dans ladite partie creuse (68), et un segment d'arrêt (85). Grâce à cet amortisseur (69), l'huile contenue dans le premier vérin hydraulique (57) circule plus rapidement dans le sens grande chambre (86) dudit premier vérin hydraulique (57) / espace (71) de la partie creuse (68) de la tige (46) que dans le sens contraire. En effet, dans le premier sens, l'huile s'écoule au travers du trou (81) de la vis creuse (80) et des trous (79) pratiqués dans le disque (77). Dans l'autre sens par contre, la rondelle concave (82) freine substantiellement la circulation de l'huile au travers des trous (79) et l'huile ne s'écoule pratiquement que par le trou (81) de la vis creuse (80). Ainsi, la sortie de la tige (46) hors du transformateur d'énergie hydraulique (37, 38) est davantage freinée que la rentrée de celle-ci. Ceci veut dire que la montée du mécanisme de récolte (15) est davantage freinée que sa descente.

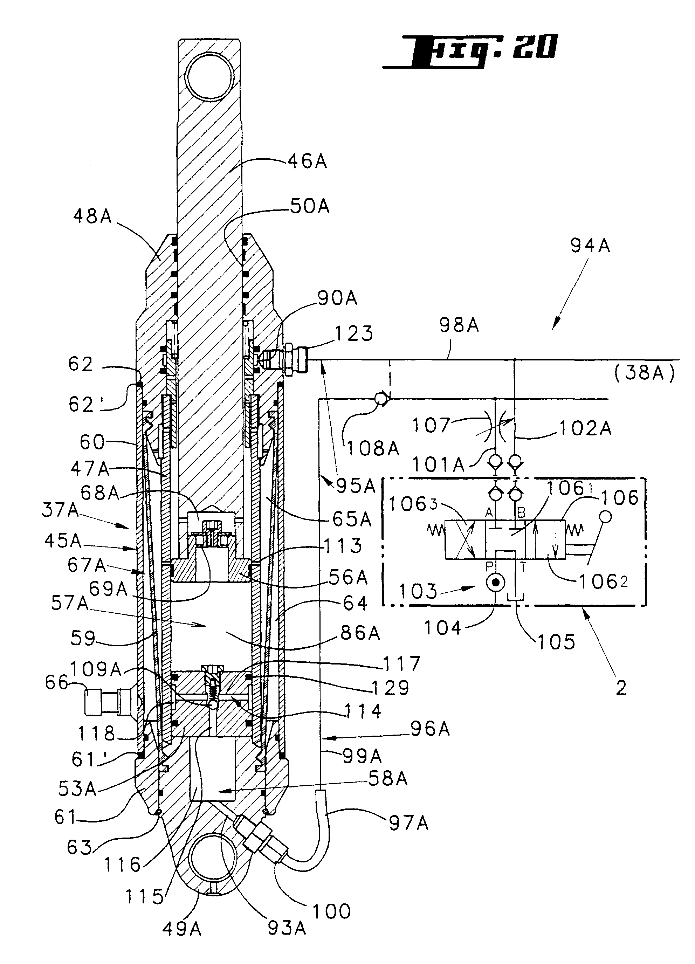

Dans une autre solution (figures 18 et 19), on pourra même prévoir d'interposer une (des) rondelle(s) élastique(s) (82') entre la face (83) du disque (77) et la rondelle concave (82). Sous l'effet de la pression de l'huile, cette (ces) rondelle(s) élastique(s) (82') permettra (permettront) la circulation de l'huile au travers des trous (79) dans le sens grande chambre (86) du premier vérin hydraulique (57) / espace (71) de la partie creuse (68) de la tige (46) (figure 19), mais pas dans le sens contraire (figure 18).

L'alimentation du premier vérin hydraulique (57) se fait au travers d'un orifice d'alimentation (87) prévu dans la pièce de fermeture et de guidage (48). Cet orifice d'alimentation (87) débouche dans un deuxième volume collecteur (88) aménagé entre le cylindre intérieur (47) et la pièce de fermeture et de guidage (48). Le cylindre intérieur (47), quant à lui, comporte au moins un deuxième trou (89) qui fait communiquer le deuxième volume collecteur (88) avec la petite chambre (72) du premier vérin hydraulique (57), laquelle petite chambre (72) communique elle-même avec la grande chambre (86) du premier vérin hydraulique (57) au travers du (des) premier(s) trou(s) (70) pratiqué(s) dans la tige (46) et débouchant dans l'espace (71) de la partie creuse (68) de ladite tige (46) et au travers de l'amortisseur (69).

Chaque transformateur d'énergie hydraulique (37, 38) comporte également un orifice de fuite (90) pratiqué dans la pièce de fermeture et de guidage (48) et qui débouche dans un troisième volume collecteur (91) aménagé entre la pièce de fermeture et de guidage (48) et la tige (46). Cette dernière, quant à elle, présente au moins un deuxième trou (92) qui fait communiquer l'espace (71) de la partie creuse (68) de la tige (46) avec le troisième volume collecteur (91).

L'alimentation du deuxième vérin hydraulique (58) se fait au travers d'un orifice d'alimentation (93), partiellement fileté, prévu dans la pièce de fermeture (49).

Ce premier dispositif de réglage automatique de l'allégement du mécanisme de récolte (15) de la faucheuse (1) comporte également un circuit hydraulique (94) alimentant les deux transformateurs d'énergie hydraulique (37, 38). Ce circuit hydraulique (94) comprend, pour chaque transformateur d'énergie hydraulique (37, 38), un premier réseau hydraulique (95) couplé au premier vérin hydraulique (57), et un deuxième réseau hydraulique (96) couplé au deuxième vérin hydraulique (58) dudit transformateur d'énergie hydraulique (37, 38).

Le premier réseau hydraulique (95) comporte une première voie hydraulique (97) branchée sur l'orifice d'alimentation (87) du premier vérin hydraulique (57), et une deuxième voie hydraulique (98) branchée sur l'orifice de fuite (90) dudit premier vérin hydraulique (57).

Le deuxième réseau hydraulique (96), quant à lui, comporte une troisième voie hydraulique (99) branchée sur l'orifice d'alimentation (93) du deuxième vérin hydraulique (58). La troisième voie hydraulique (99) est pourvue, à cet effet, d'un raccord fileté (100) vissé dans le filetage de l'orifice d'alimentation (93) du deuxième vérin hydraulique (58). La première voie hydraulique (97), quant à elle, est couplée à la troisième voie hydraulique (99). En outre, dans cet exemple de réalisation, les deux troisièmes voies hydrauliques (99) sont branchées sur une première conduite d'alimentation commune (101) et les deux deuxièmes voies hydrauliques (98) sont branchées sur une deuxième conduite d'alimentation commune (102). Cette première conduite d'alimentation commune (101) et cette deuxième conduite d'alimentation commune (102) sont couplées à la source de fourniture d'huile (103) qui comporte la pompe (104), le réservoir (105) et le distributeur (106). De manière plus précise, la première conduite d'alimentation commune (101) est couplée au troisième orifice (A) du distributeur (106) et la deuxième conduite d'alimentation commune (102) est couplée au quatrième orifice (B) dudit distributeur (106). Dans le cas présent, ladite source de fourniture d'huile (103) est celle existant sur le tracteur agricole (2) auquel est attelée la faucheuse (1). Il apparaît du reste que la première conduite d'alimentation commune (101) est pourvue, en aval du distributeur (106), d'un étrangleur (107) du type réglable. Il va de soi, qu'au lieu de cet étrangleur (107) commun, on pourrait prévoir un tel étrangleur sur chacune des premières voies hydrauliques (97) ou sur chacune des troisièmes voies hydrauliques (99) en amont du couplage de la première voie hydraulique (97) correspondante.

Chaque troisième voie hydraulique (99) comprend aussi un premier clapet anti-retour piloté (108) interdisant la circulation de l'huile dans le sens transformateur d'énergie hydraulique (37, 38)/source de fourniture d'huile (103) et prévu en amont du couplage de la première voie hydraulique (97) sur la troisième voie hydraulique (99).

Chaque première voie hydraulique (97), quant à elle, comprend un clapet anti-retour taré (109) permettant, sous certaines conditions, la circulation de l'huile dans le sens source de fourniture d'huile (103) / premier vérin hydraulique (57), mais interdisant la circulation de l'huile dans le sens contraire.

Chaque deuxième voie hydraulique (98), quant à elle, comprend un deuxième clapet anti-retour piloté (110) interdisant la circulation de l'huile dans le sens premier vérin hydraulique (57) / source de fourniture d'huile (103) et, en aval de ce deuxième clapet anti-retour piloté (110), un clapet anti-retour (111) interdisant la circulation de l'huile dans le sens source de fourniture d'huile (103) /premier vérin hydraulique (57). L'ouverture du premier clapet anti-retour piloté (108), respectivement du deuxième clapet anti-retour piloté (110), est commandée par la pression régnant dans la deuxième voie hydraulique (98) en amont du deuxième clapet anti-retour piloté (110), respectivement par la pression régnant dans la troisième voie hydraulique (99) en amont du premier clapet anti-retour piloté (108). Ces deux clapets anti-retour pilotés (108, 110), le clapet anti-retour taré (109) et le clapet anti-retour (111) sont avantageusement logés dans un bloc hydraulique (112) fixé sur la pièce de fermeture et de guidage (48).

Le fonctionnement de ce premier exemple de réalisation d'un dispositif de réglage automatique de l'allégement du mécanisme de récolte (15) de la faucheuse (1) est tout à fait conforme au principe de fonctionnement expliqué précédemment.

En position de travail, le mécanisme de récolte (15) repose sur le sol (S) avec un certain poids apparent et il peut suivre le relief dudit sol (S).

Lorsque le mécanisme de récolte (15) passe sur une élévation du sol (S), l'un au moins des deux transformateurs d'énergie hydraulique (37, 38) doit s'allonger. Ceci veut dire que la tige (46) sort hors du corps (45) dudit transformateur d'énergie hydraulique (37, 38). Ce faisant, de l'huile contenue dans le volume intérieur (65) de l'accumulateur hydropneumatique (67) est transvasée dans le premier vérin hydraulique (57) au travers du (des) premier(s) trou(s) (75) de la pièce de fermeture et de guidage (48), du (des) premier(s) trou(s) (73) du cylindre intérieur (47), du (des) premier(s) trou(s) (70) de la tige (46) et essentiellement du trou (81) de la vis creuse (80) de l'amortisseur (69). La diminution du volume de l'huile contenue dans le volume intérieur (65) de l'accumulateur hydropneumatique (67) est compensée par l'augmentation du volume du gaz contenu dans le volume extérieur (64) dudit accumulateur hydropneumatique (67).

Lorsqu'au contraire le mécanisme de récolte (15) tombe dans une dépression du sol (S), au moins l'un des transformateurs d'énergie hydraulique (37, 38) se raccourcit. Ceci veut dire que la tige (46) rentre dans le corps (45) dudit transformateur d'énergie hydraulique (37, 38). Ce faisant, de l'huile contenue dans le premier vérin hydraulique (57) est transvasée dans le volume intérieur (65) de l'accumulateur hydropneumatique (67) au travers des trous (79) et du trou (81) de l'amortisseur (69), du (des) premier(s) trou(s) (70) de la tige (46), du (des) premier(s) trou(s) (73) du cylindre intérieur (47) et du (des) premier(s) trou(s) (75) de la pièce de fermeture et de guidage (48). L'augmentation du volume de l'huile contenue dans le volume intérieur (65) de l'accumulateur hydropneumatique (67) est compensée par la diminution du volume du gaz contenu dans le volume extérieur (64) dudit accumulateur hydropneumatique (67).

Pour lever le mécanisme de récolte (15), on place le distributeur (106) dans sa première position active (106²). L'huile fournie par la pompe (104) circule dans la première conduite d'alimentation commune (101) (elle passe dans celle-ci au travers de l'étrangleur (107)), dans les troisièmes voies hydrauliques (99) (elle passe dans celles-ci au travers du premier clapet anti-retour piloté (108) correspondant) et pénètre dans le deuxième vérin hydraulique (58) de chaque transformateur d'énergie hydraulique (37, 38). En pénétrant dans chaque deuxième vérin hydraulique (58), elle déplace le piston (53) correspondant vers la position prédéterminée de celui-ci qui est définie par l'épaulement (52) du tirant (51). Ce faisant, ledit piston (53) fait sortir la tige (46) correspondante au moyen de l'huile contenue dans le premier vérin hydraulique (57) correspondant.

Si le poids du mécanisme de récolte (15) n'a pas varié depuis la dernière levée, le piston (53) arrive en butée sur l'épaulement (52) du tirant (51) et le(s) deuxième(s) trou(s) (92) de la tige (46) arrive(nt) au niveau du troisième volume collecteur (91) (qui est en communication avec l'orifice de fuite (90)) simultanément.

En continuant l'alimentation, l'huile fournie par la pompe (104) traverse le clapet anti-retour taré (109), l'orifice d'alimentation (87), le(s) deuxième(s) trou(s) (89) du cylindre intérieur (47), le(s) premier(s) trou(s) (70) de la tige (46), le(s) deuxième(s) trou(s) (92) de la tige (46) et l'orifice de fuite (90), puis retourne au réservoir (105) par la deuxième voie hydraulique (98) (où elle traverse le clapet anti-retour (111) et le deuxième clapet anti-retour piloté (110)) et la deuxième conduite d'alimentation commune (102).

Si le poids du mécanisme de récolte (15) a augmenté depuis la dernière levée, le piston (53) arrive en butée sur l'épaulement (52) du tirant (51), alors que le(s) deuxième(s) trou(s) (92) de la tige (46) n'ont pas encore atteint le troisième volume collecteur (91). En continuant l'alimentation, l'huile fournie par la pompe (104), traverse le clapet anti-retour taré (109), l'orifice d'alimentation (87), le(s) deuxième(s) trous (89) du cylindre intérieur (47), le(s) premier(s) trou(s) (70) de la tige (46), et pénètre dans la grande chambre (86) du premier vérin hydraulique (57) essentiellement au travers du trou (81) de la vis creuse (80) de l'amortisseur (69). Cette huile qui pénètre dans ladite grande chambre (86) du premier vérin hydraulique (57) continue de faire sortir la tige (46) hors du corps (45) jusqu'à ce que le(s) deuxième(s) trou(s) (92) de la tige (46) atteigne(nt) le troisième volume collecteur (91). La sortie de la tige (46) s'arrête alors et tout surplus d'huile pénétrant dans le premier vérin hydraulique (57) retourne au réservoir (105) comme expliqué plus haut.

Si le poids du mécanisme de récolte (15) a diminué depuis la dernière levée, le(s) deuxième(s) trou(s) (92) de la tige (46) atteint (atteignent) le troisième volume collecteur (91), alors que le piston (53) n'a pas encore atteint l'épaulement (52) du tirant (51). Comme la sortie de la tige (46) est alors stoppée, la poursuite du déplacement du piston (53) chasse le surplus d'huile contenu dans la grande chambre (86) du premier vérin hydraulique (57) au travers des trous (79, 81) de l'accumulateur (69), après quoi tout surplus d'huile pénétrant dans le premier vérin hydraulique (57) retourne au réservoir (105) comme expliqué plus haut.

Pour abaisser le mécanisme de récolte (15), on place le distributeur (106) dans la deuxième position active (106³). Le poids du mécanisme de récolte (15) chasse alors l'huile contenue dans le deuxième vérin hydraulique (58) hors de celui-ci via la tige (46) et son piston (56), l'huile contenue dans le premier vérin hydraulique (57), et le piston (53). Cette huile chassée retourne au réservoir (105) au travers de la troisième voie hydraulique (99) (où elle traverse le premier clapet anti-retour piloté (108)) et la première conduite d'alimentation commune (101). La rentrée de la tige (46) dans le corps (45) du transformateur d'énergie hydraulique (37, 38) correspondant est stoppée lorsque le mécanisme de récolte (15) arrive en contact avec le sol (S). Il convient de noter que le volume de l'huile contenue dans le premier vérin hydraulique (57) est maintenu par le clapet anti-retour taré (109) lors de la descente du mécanisme de récolte (15).

Les deux clapets anti-retour pilotés (108 et 110) ne font pas directement partie du dispositif de réglage automatique de l'allégement du mécanisme de récolte (15). Ils constituent uniquement des éléments de sécurité qui évitent que l'huile ne sorte du transformateur d'énergie (37, 38) correspondant quand le mécanisme de récolte (15) est en position levée de transport. Il en est de même du clapet anti-retour (111) qui garantit uniquement la montée en pression correcte de la deuxième voie hydraulique (98) correspondante quand le distributeur (106) est placé dans sa deuxième position active (106³). Cette montée en pression correcte de la deuxième voie hydraulique (98) garantit l'ouverture du premier clapet anti-retour piloté (108).

Les figures 20 à 22 montrent un deuxième exemple de réalisation d'un dispositif de réglage automatique de l'allégement du mécanisme de récolte (15) de la faucheuse (1).

Chaque transformateur d'énergie hydraulique (37A, 38A) de ce dispositif comporte un corps (45A) et une tige (46A). Le corps (45A) comporte tout d'abord un cylindre (47A) sur l'extrémité côté tige (46A) duquel est vissée une pièce (48A) de fermeture du corps (45A) et de guidage de la tige (46A), et sur l'autre extrémité duquel est soudée une pièce de fermeture (49A). La pièce de fermeture et de guidage (48A) présente un alésage (50A) pour le passage et le guidage de ladite tige (46A). Un piston (53A), du type plongeur, est destiné à coulisser à l'intérieur du cylindre intérieur (47A).

L'extrémité de la tige (46A) qui s'étend à l'intérieur du cylindre intérieur (47A), comporte également un piston (56A) qui est vissé dans une partie creuse (68A) de la tige (46A).

Ainsi, chaque transformateur d'énergie hydraulique (37A, 38A) comporte un premier vérin hydraulique (57A) formé essentiellement par le cylindre intérieur (47A), le piston plongeur (53A), la tige (46A) munie de son piston (56A), et la pièce de fermeture et de guidage (48A). Il comporte également un deuxième vérin hydraulique (58A) formé par le cylindre intérieur (47A), le piston plongeur (53A) et la pièce de fermeture (49A).

Outre le cylindre intérieur (47A), chaque transformateur d'énergie hydraulique (37A, 38A) comporte également la membrane déformable (59) ainsi que le cylindre extérieur (60) et la bague d'obturation (61) qui forment le volume extérieur (64) contenant le gaz. La membrane déformable (59) forme en outre, conjointement avec le cylindre intérieur (47A) et la pièce de fermeture et de guidage (48A), le volume intérieur (65A) contenant de l'huile dont la pression est identique à la pression de l'huile contenue dans le premier vérin hydraulique (57A). Ce volume extérieur (64) et ce volume intérieur (65A) constituent l'accumulateur hydropneumatique (67A) associé au premier vérin hydraulique (57A).

Comme dit plus haut, le piston (56A) est vissé dans la partie creuse (68A) de la tige (46A). A son extrémité s'étendant à l'intérieur de cette partie creuse (68A), le piston (56A) comporte une partie discoïdale (77A) dans laquelle sont pratiqués un trou central fileté (78) et au moins un trou (79A) disposé à côté dudit trou central (78). Une vis creuse (80A) munie en son centre d'un trou (81A), est vissée dans le trou central fileté (78) après interposition d'une rondelle concave (82) s'étendant à l'intérieur de l'espace (71) de la partie creuse (68A) de la tige (46A), entre ladite vis creuse (80A) et la face correspondante (83) de la partie discoïdale (77A) avec la concavité dirigée vers ladite face (83). Cet amortisseur (69A) fonctionne comme l'amortisseur (69) décrit précédemment.

La partie creuse (68A) de la tige (46A) comporte également un (des) trou(s) (70) qui fait (font) communiquer l'espace (71) de ladite partie creuse (68A) avec la petite chambre (72A) du premier vérin hydraulique (57A). Le cylindre intérieur (47A), quant à lui, comporte un (des) trou(s) (73) qui fait (font) communiquer ladite petite chambre (72A) du premier vérin hydraulique (57A) avec un premier volume collecteur (74) aménagé entre ledit cylindre intérieur (47A) et la pièce de fermeture et de guidage (48A). Cette dernière enfin présente un (des) trou(s) (75) qui fait (font) communiquer le premier volume collecteur (74) avec le volume intérieur (65A) de l'accumulateur hydropneumatique (67A).

Le cylindre intérieur (47A) présente également un (des) orifice(s) de limitation (113) qui fait (font) communiquer la grande chambre (86A) du premier vérin hydraulique (57A) avec le volume intérieur (65A) de l'accumulateur hydropneumatique (67A). La fonction de cet (ces) orifice(s) de limitation (113) sera décrite ultérieurement.

L'alimentation du deuxième vérin hydraulique (58A) se fait au travers d'un orifice d'alimentation (93A), partiellement fileté, prévu dans la pièce de fermeture (49A).

L'alimentation du premier vérin hydraulique (57A), quant à elle, se fait au travers d'une communication (114) prévue dans le piston (53A) du deuxième vérin hydraulique (58A). Cette communication (114) est constituée d'un premier canal (115) débouchant dans la chambre (116) du deuxième vérin hydraulique (58A), et d'un deuxième canal (117) qui fait communiquer le premier canal (115) avec un deuxième volume collecteur (118) prévu à la périphérie du piston (53A). Ce dernier comporte en outre un clapet anti-retour (107A) destiné à obturer le premier canal (115).

Chaque transformateur d'énergie hydraulique (37A, 38A) comporte également un orifice de fuite (90A) pratiqué dans la pièce de fermeture et de guidage (48A) et qui débouche dans un troisième volume collecteur (91A) aménagé dans la pièce de fermeture et de guidage (48A). Cet orifice de fuite (90A) est partiellement fileté.

Chaque transformateur d'énergie hydraulique (37A, 38A) comporte du reste une bague (119) s'étendant dans la petite chambre (72A) du premier vérin hydraulique (57A). Cette bague (119) est susceptible de coulisser, de manière étanche, dans la pièce de fermeture et de guidage (48A), tandis qu'un espace est prévu entre ladite bague (119) et la tige (46A). Cette bague (119) comporte en outre un (des) premier(s) trou(s) (120) et un (des) deuxième(s) trou(s) (121). Le(s) deuxième(s) trou(s) (121) est (sont) destiné(s) à faire communiquer la petite chambre (72A) du premier vérin hydraulique (57A) avec l'orifice de fuite (90A). Le(s) premier(s) trou(s) (120), quant à lui (eux), s'étend(ent) dans la partie de la bague (119) comprise entre le(s) deuxième(s) trou(s) (121) et l'extrémité de la bague (119) destinée à venir en contact avec le piston (56A) de la tige (46A). Près de l'autre extrémité de ladite bague (119) est prévu un ressort de compression (122) qui agit entre la pièce de fermeture et de guidage (48A) et la bague (119).

Ce deuxième dispositif de réglage automatique de l'allégement du mécanisme de récolte (15) de la faucheuse (1) comporte également un circuit hydraulique (94A) alimentant les deux transformateurs d'énergie hydraulique (37A, 38A). Ce circuit hydraulique (94A) comprend, pour chaque transformateur d'énergie hydraulique (37A, 38A), un premier réseau hydraulique (95A) couplé au premier vérin hydraulique (57A), et un deuxième réseau hydraulique (96A) couplé au deuxième vérin hydraulique (58A).

Le premier réseau hydraulique (95A) comporte une première voie hydraulique (97A) destinée à alimenter le premier vérin hydraulique (57A), et une deuxième voie hydraulique (98A) branchée sur l'orifice de fuite (90A) dudit premier vérin hydraulique (57A). La deuxième voie hydraulique (98A) présente, à cet effet, un raccord fileté (123) vissé dans le filetage dudit orifice de fuite (90A).

Le deuxième réseau hydraulique (96A), quant à lui, comporte une troisième voie hydraulique (99A) branchée sur l'orifice d'alimentation (93A) du deuxième vérin hydraulique (58A). La troisième voie hydraulique (99A) présente, à cet effet, un raccord fileté (100) vissé dans le filetage de l'orifice d'alimentation (93A) du deuxième vérin hydraulique (58A). La troisième voie hydraulique (99A) comporte en outre un clapet anti-retour piloté (108A) interdisant la circulation de l'huile dans le sens transformateur d'énergie hydraulique (37A, 38A) / source de fourniture d'huile (103). L'ouverture de ce clapet anti-retour piloté (108A) est commandée par la pression régnant dans la deuxième voie hydraulique (98A).

Dans cet exemple de réalisation, la première voie hydraulique (97A) est donc constituée par la troisième voie hydraulique (99A) et par la communication (114) entre le deuxième vérin hydraulique (58A) et le premier vérin hydraulique (57A).

En outre, les deux troisièmes voies hydrauliques (99A) (et, de ce fait, les deux premières voies hydrauliques (97A)) sont branchées sur une première conduite d'alimentation commune (101A) et les deux deuxièmes voies hydrauliques (98A) sont branchées sur une deuxième conduite d'alimentation commune (102A). Ces deux conduites d'alimentation communes (101A, 102A) sont par ailleurs couplées à la source de fourniture d'huile (103). La première conduite d'alimentation commune (101A) comporte en sus un étrangleur (107).

Ce deuxième exemple de réalisation d'un dispositif de réglage automatique de l'allégement du mécanisme de récolte (15) de la faucheuse (1), qui vient d'être décrit, fonctionne de la manière suivante.

En position de travail, le mécanisme de récolte (15) repose sur le sol (S) avec un certain poids apparent et il peut suivre le relief dudit sol (S). Pour ce faire, l'un au moins des transformateurs d'énergie hydraulique (37A, 38A) s'allonge ou se raccourcit selon le cas. Ce faisant, de l'huile contenue dans le volume intérieur (65A) de l'accumulateur hydropneumatique (67A) est transvasée dans le premier vérin hydraulique (57A) ou de l'huile contenue dans le premier vérin hydraulique (57A) est transvasée dans le volume intérieur (65A) de l'accumulateur hydropneumatique (67A). Ce transvasement s'effectue au travers du (des) trou(s) (75) pratiqué(s) dans la pièce de fermeture et de guidage (48A), du (des) trou(s) (73) pratiqué(s) dans le cylindre intérieur (47A), du (des) trou(s) (70) pratiqué(s) dans la tige (46A), des trous (79A, 81A) de l'amortisseur (69A) et, éventuellement, du (des) orifice(s) de limitation (113).

Pour lever le mécanisme de récolte (15), on place le distributeur (106) dans sa première position active (106²). L'huile fournie par la pompe (104) circule dans la première conduite d'alimentation commune (101A) (elle passe dans celle-ci au travers de l'étrangleur (107)) et dans les troisièmes voies hydrauliques (99A) (elle passe dans celles-ci au travers du clapet anti retour piloté (108A) correspondant), et pénètre dans le deuxième vérin hydraulique (58A) de chaque transformateur d'énergie hydraulique (37A, 38A). En pénétrant dans chaque deuxième vérin hydraulique (58A), elle déplace le piston (53A) correspondant vers la position prédéterminée de celui-ci qui est définie par l'(les) orifice(s) de limitation (113). Ce faisant, ledit piston (53A) fait sortir la tige (46A) correspondante au moyen de l'huile contenue dans le premier vérin hydraulique (57A) correspondant. Vers la fin de la sortie de la tige (46A), le piston (56A) de celle-ci arrive en contact avec la bague (119) et fait coulisser cette dernière dans la pièce de fermeture et de guidage (48A) à l'encontre du ressort de compression (122).

Si le poids du mécanisme de récolte (15) n'a pas varié depuis la dernière levée, le deuxième volume collecteur (118) du piston (53A) arrive au niveau de l'(des) orifice(s) de limitation (113) et le(s) deuxième(s) trou(s) (121) de la bague (119) arrive(nt) au niveau du troisième volume collecteur (91A) (qui est en communication avec l'orifice de fuite (90A)) simultanément.

En continuant l'alimentation, l'huile qui pénètre dans le deuxième vérin hydraulique (58A), circule dans le premier canal (115), traverse le clapet anti-retour (109A), circule dans le deuxième canal (117), traverse l'(les) orifice(s) de limitation (113), le(s) trou(s) (75) de la pièce de fermeture et de guidage (48A), le(s) trou(s) (73) du cylindre intérieur (47A), le(s) premier(s) trou(s) (120) et le(s) deuxième(s) trou(s) (121) de la bague (119) et l'orifice de fuite (90A), puis retourne au réservoir (105) par la deuxième voie hydraulique (98A) et la deuxième conduite d'alimentation commune (102A).

Si le poids du mécanisme de récolte (15) a augmenté depuis la dernière levée, le deuxième volume collecteur (118) du piston (53A) arrive au niveau de l'(des) orifice(s) de limitation (113), alors que le(s) deuxième(s) trou(s) (121) de la bague (119) n'a (n'ont) pas encore atteint le troisième volume collecteur (91A). En continuant l'alimentation, l'huile fournie par la pompe (104), qui pénètre dans le deuxième vérin hydraulique (58A), circule dans le premier canal (115), traverse le clapet anti-retour (109A), circule dans le deuxième canal (117), traverse l'(les) orifice(s) de limitation (113), le(s) trou(s) (75) de la pièce de fermeture et de guidage (48A), le(s) trou(s) (73) du cylindre intérieur (47A), le(s) premier(s) trou(s) (120) de la bague (119) et le(s) trou(s) (70) de la tige (46A), et pénètre dans la grande chambre (86A) du premier vérin hydraulique (57A) au travers des trous (79A, 81A) de l'amortisseur (69A). Cette huile qui pénètre dans la grande chambre (86A) du premier vérin hydraulique (57A), continue de faire sortir la tige (46A) hors du corps (45A) jusqu'à ce que le(s) deuxième(s) trou(s) (121) de la bague (119) atteigne(nt) le troisième volume collecteur (91A). La sortie de la tige (46A) s'arrête alors et tout surplus d'huile pénétrant dans le transformateur d'énergie hydraulique (37A, 38A) retourne au réservoir (105) comme expliqué plus haut.

Si le poids du mécanisme de récolte (15) a diminué depuis la dernière levée, le(s) deuxième(s) trou(s) (121) de la bague (119) atteint (atteignent) le troisième volume collecteur (91A), alors que le deuxième volume collecteur (118) du piston (53A) n'a pas encore atteint l'(les) orifice(s) de limitation (113). Comme la sortie de la tige (46A) est alors stoppée, la poursuite du déplacement du piston (53A) chasse le surplus d'huile contenu dans la grande chambre (86A) du premier vérin hydraulique (57A) au travers des trous (79A, 81A) de l'amortisseur (69A), du (des) trou(s) (70) de la tige (46A), du (des) deuxième(s) trou(s) (121) de la bague (119), et de l'orifice de fuite (90A), d'où il retourne au réservoir (105). En continuant l'alimentation, tout surplus d'huile pénétrant dans le transformateur d'énergie hydraulique (37A, 38A) après que le deuxième volume collecteur (118) du piston (53A) ait atteint l' (les) orifices de limitation (113), retourne au réservoir (105) comme expliqué précédemment.

Pour abaisser le mécanisme de récolte (15), on place le distributeur (106) dans la deuxième position active (106³). Le poids du mécanisme de récolte (15) chasse alors l'huile contenue dans le deuxième vérin hydraulique (58A) hors de celui-ci via la tige (46A) et son piston (56A), l'huile contenue dans le premier vérin hydraulique (57A), et le piston (53A). Cette huile retourne au réservoir (105) au travers de la troisième voie hydraulique (99A) (où elle traverse le clapet anti-retour piloté (108A)) et de la première conduite d'alimentation commune (101A). La rentrée de la tige (46A) dans le corps (45A) du transformateur d'énergie hydraulique (37A, 38A) correspondant est stoppée lorsque le mécanisme de récolte (15) arrive en contact avec le sol (S). Il convient de noter que le volume de l'huile contenue dans le premier vérin hydraulique (57A) est maintenu, lors de la descente du mécanisme de récolte (15), par le clapet anti-retour (109A) qui bouche le premier canal (115) du piston (53A).

La figure 23 montre un troisième exemple de réalisation d'un dispositif de réglage automatique de l'allégement du mécanisme de récolte (15) de la faucheuse (1). En fait, la figure 23 montre partiellement une coupe d'un transformateur d'énergie hydraulique (37B, 38B) dudit dispositif et plus précisément l'extrémité de celui-ci opposée à celle où sort la tige.

Le corps (45B) de ce transformateur d'énergie hydraulique (37B, 38B) comporte un cylindre intérieur (47B). Sur l'extrémité de ce cylindre intérieur (47B), opposée à celle où s'étend la tige, est vissée une pièce de fermeture (49B). Cette pièce de fermeture (49B) comporte un tirant (51B) qui est vissé dans ladite pièce de fermeture (49B) et qui présente, à son extrémité libre, un épaulement (52B). Ce tirant (51B) traverse un piston (53B) qui présente un alésage (54B) à cet effet.

L'autre extrémité du transformateur d'énergie hydraulique (37B, 38B) peut être identique à celle des transformateurs d'énergie hydraulique (37A, 38A) équipant le dispositif selon le deuxième exemple de réalisation représenté sur les figures 20 à 22.

Le transformateur d'énergie hydraulique (37B, 38B) comporte donc également un premier vérin hydraulique (57B) formé par le cylindre (47B), le piston annulaire (53B), le tirant (51B), la tige (46A) munie de son piston (56A), et la pièce de fermeture et de guidage (48A). Il comporte également un deuxième vérin hydraulique (58B) formé par le cylindre intérieur (47B), le piston annulaire (53B), le tirant (51B) et la pièce de fermeture (49B).

Outre le cylindre intérieur (47B), le transformateur d'énergie hydraulique (37B, 38B) comporte également la membrane déformable (59) ainsi que le cylindre extérieur (60) et la bague d'obturation (61) qui forment le volume extérieur (64) contenant le gaz. La membrane déformable (59) forme en outre, conjointement avec le cylindre intérieur (47B) et la pièce de fermeture et de guidage (48A), le volume intérieur (65B) contenant de l'huile dont la pression est identique à celle de l'huile contenue dans le premier vérin hydraulique (57B). Ce volume extérieur (64) et ce volume intérieur (65B) constituent l'accumulateur hydropneumatique (67B) associé audit premier vérin hydraulique (57B).

L'alimentation du deuxième vérin hydraulique (58B) se fait au travers d'un orifice d'alimentation (93) partiellement fileté prévu dans la pièce de fermeture (49A).

L'alimentation du premier vérin hydraulique (57B), quant à elle, se fait au travers d'une communication (114B) prévue dans le tirant (51B). Cette communication (114B) est constituée d'un premier canal (115B) débouchant dans la chambre (116B) du deuxième vérin hydraulique (58B), et d'un deuxième canal (117B) qui fait communiquer le premier canal (115B) avec la grande chambre (86B) du premier vérin hydraulique (57B). Le tirant (51B) comporte en outre un clapet anti-retour taré (107B) destiné à obturer le premier canal (115B).

Ce troisième exemple de réalisation d'un dispositif de réglage automatique de l'allégement du mécanisme de récolte (15) de la faucheuse (1), qui vient d'être décrit, fonctionne de la manière suivante.

En position de travail, ce dispositif fonctionne comme le dispositif selon le deuxième exemple de réalisation. Le mécanisme de récolte (15) repose sur le sol (S) avec un certain poids apparent et il peut suivre le relief dudit sol (S).

Pour ce faire, l'un au moins des transformateurs d'énergie hydraulique (37B, 38B) s'allonge ou se raccourcit selon le cas. Ce faisant, de l'huile contenue dans le volume intérieur (65B) de l'accumulateur hydropneumatique (67B) est transvasée dans le premier vérin hydraulique (57B), ou de l'huile contenue dans le premier vérin hydraulique (57B) est transvasée dans le volume intérieur (65B) de l'accumulateur hydropneumatique (67B). Ce transvasement s'effectue au travers du (des) trou(s) (75) pratiqué(s) dans la pièce de fermeture et de guidage (48A), du (des) trou(s) (73) pratiqué(s) dans le cylindre intérieur (47A), du (des) trou(s) (70) pratiqué(s) dans la tige (46A), et des trous (79A, 81A) de l'amortisseur (69A).

Pour lever le mécanisme de récolte (15), on place le distributeur (106) dans sa première position active (106²). L'huile fournie par la pompe (104) circule dans la première conduite d'alimentation commune (101A) (elle passe dans celle-ci au travers de l'étrangleur (107)), dans les troisièmes voies hydrauliques (99A) (elle passe dans celles-ci au travers du clapet anti-retour piloté (108A) correspondant) et pénètre dans le deuxième vérin hydraulique (58B) de chaque transformateur d'énergie hydraulique (37B, 38B). En pénétrant dans chaque deuxième vérin hydraulique (58B), elle déplace le piston (53B) correspondant vers la position prédéterminée de celui-ci qui est définie par l'épaulement (52B) du tirant (51B). Ce faisant, ledit piston (53B) fait sortir la tige (46A) correspondante au moyen de l'huile contenue dans le premier vérin hydraulique (57B) correspondant. Vers la fin de la sortie de la tige (46A), le piston (56A) de celle-ci arrive en contact avec la bague (119) et fait coulisser cette dernière dans la pièce de fermeture et de guidage (48A) à l'encontre du ressort de compression (122). Le clapet anti-retour piloté (109B) empêche que de l'huile puisse pénétrer dans le premier vérin hydraulique (57B) durant cette phase de sortie de la tige (46A).

Si le poids du mécanisme de récolte (15) n'a pas varié depuis la dernière levée, le piston (53B) arrive en butée sur l'épaulement (52B) du tirant (51B) et le(s) deuxièmes(s) trou(s) (121) de la bague (119) arrive(nt) au niveau du troisième volume collecteur (91A) (qui est en communication avec l'orifice de fuite (90A)) simultanément.

En continuant l'alimentation, l'huile qui pénètre dans le deuxième vérin hydraulique (58B), circule dans le premier canal (115B), traverse le clapet anti-retour taré (109B), circule dans le deuxième canal (117B), pénètre dans la grande chambre (86B) du premier vérin hydraulique (57B), traverse les trous (79A, 81A) de l'amortisseur (69A), le(s) trou(s) (70) de la tige (46A), le(s) deuxième(s) trou(s) (121) de la bague (119) et l'orifice de fuite (90A), puis retourne au réservoir (105) par la deuxième voie hydraulique (98A) et la deuxième conduite d'alimentation commune (102A).

Si le poids du mécanisme de récolte (15) a augmenté depuis la dernière levée, le piston (53B) arrive en butée sur l'épaulement (52B) du tirant (51B), alors que le(s) deuxième(s) trou(s) (121) de la bague (119) n'a (n'ont) pas encore atteint le troisième volume collecteur (91A). En continuant l'alimentation, l'huile fournie par la pompe (104), qui pénètre dans le deuxième vérin hydraulique (58B), circule dans le premier canal (115B), traverse le clapet anti-retour taré (109B), circule dans le deuxième canal (117B) et pénètre dans la grande chambre (86B) du premier vérin hydraulique (57B). Cette huile qui pénètre dans la grande chambre (86B) du premier vérin hydraulique (57B), continue de faire sortir la tige (46A) hors du corps (45B) jusqu'à ce que le(s) deuxième(s) trou(s) (121) de la bague (119) atteigne(nt) le troisième volume collecteur (91A). La sortie de la tige (46A) s'arrête alors et tout surplus d'huile pénétrant dans le transformateur d'énergie hydraulique (37B, 38B) retourne au réservoir (105) comme expliqué plus haut.

Si le poids du mécanisme de récolte (15) a diminué depuis la dernière levée, le(s) deuxième(s) trou(s) (121) de la bague (119) atteint (atteignent) le troisième volume collecteur (91A), alors que le piston (53B) n'a pas encore atteint l'épaulement (52B) du tirant (51B). Comme la sortie de la tige (46A) est alors stoppée, la poursuite du déplacement du piston (53B) chasse le surplus d'huile contenu dans la grande chambre (86B) du premier vérin hydraulique (57B) au travers des trous (79A, 81A) de l'amortisseur (69A), du (des) trou(s) (70) de la tige (46A) du (des) deuxième(s) trou(s) (121) de la bague (119), et de l'orifice de fuite (90A), d'où il retourne au réservoir (105). En continuant l'alimentation, tout surplus d'huile qui pénètre dans le deuxième vérin hydraulique (58B), après que le piston (53B) soit en appui sur l'épaulement (52B) du tirant (51B), retourne au réservoir (105) comme expliqué précédemment.

Pour abaisser le mécanisme de récolte (15), on place le distributeur (106) dans la deuxième position active (106³). Le poids du mécanisme de récolte (15) chasse alors l'huile contenue dans le deuxième vérin hydraulique (58B) hors de celui-ci via la tige (46A) et son piston (56A), l'huile contenue dans le premier vérin hydraulique (57B), et le piston (53B). Cette huile retourne au réservoir (105) au travers de la troisième voie hydraulique (99A) (où elle traverse le clapet anti-retour piloté (108A)) et de la première conduite d'alimentation commune (101A). La rentrée de la tige (46A) dans le corps (45B) du transformateur d'énergie hydraulique (37B, 38B) correspondant est stoppée lorsque le mécanisme de récolte (15) arrive en contact avec le sol (S). Il convient de noter que le volume de l'huile contenue dans le premier vérin hydraulique (57B) est maintenu lors de la descente du mécanisme de récolte (15) par le clapet anti-retour taré (109B) qui bouche le premier canal (115B) du tirant (51B).

Les figures 24 à 26 montrent un quatrième exemple de réalisation d'un dispositif de réglage automatique de l'allégement du mécanisme de récolte (15) de la faucheuse (1).

Chaque transformateur d'énergie hydraulique (37C, 38C) de ce dispositif comporte un corps (45C) et une tige (46C). Le corps (45C) comporte tout d'abord un cylindre intérieur (47C) sur l'extrémité côté tige (46C) duquel est vissée une pièce (48C) de fermeture du corps (45C) et de guidage de la tige (46C), et sur l'autre extrémité duquel est vissée une pièce de fermeture (49C). La pièce de fermeture et de guidage (48C) présente un alésage (50C) pour le passage et le guidage de ladite tige (46C).

La tige (46C) est creuse et est formée d'un tube (124) sur l'extrémité extérieure duquel est vissé un embout (125). A son autre extrémité, c'est-à-dire celle qui s'étend à l'intérieur du corps (45C), la tige (46C) comporte un premier jonc d'arrêt (76) qui limite la sortie de la tige (46C) hors du corps (45C) en butant sur la pièce de fermeture et de guidage (48C). Un piston (53C), du type plongeur, est destiné à coulisser à l'intérieur de la tige (46C).

Ainsi, chaque transformateur d'énergie hydraulique (37C, 38C) comporte un premier vérin hydraulique (57C) formé par le cylindre intérieur (47C), la tige (46C), le piston (53C), la pièce de fermeture et de guidage (48C) et la pièce de fermeture (49C). Il comporte également un deuxième vérin hydraulique (58C) formé par la tige (46C), le piston plongeur (53C) et l'embout (125).

Outre le cylindre intérieur (47C), chaque transformateur d'énergie hydraulique (37C, 38C) comporte également la membrane déformable (59) ainsi qu'un cylindre extérieur (60C) et une bague d'obturation (61C) qui forment le volume extérieur (64C) contenant le gaz. La membrane déformable (59) forme en outre, conjointement avec le cylindre intérieur (47C) et la pièce de fermeture et de guidage (48C), le volume intérieur (65C) contenant de l'huile dont la pression est identique à la pression de l'huile contenue dans le premier vérin hydraulique (57C). Ce volume extérieur (64C) et ce volume intérieur (65C) constituent l'accumulateur hydropneumatique (67C) associé au premier vérin hydraulique (57C). La bague d'obturation (61C) est pourvue d'une valve de gonflage (66C) qui permet d'insuffler le volume de gaz nécessaire.

L'alimentation du deuxième vérin hydraulique (58C) se fait au travers d'un orifice d'alimentation (93C), partiellement fileté, prévu dans l'embout (125).

L'alimentation du premier vérin hydraulique (57C), quant à elle, se fait au travers d'une communication (114C) prévue dans le piston plongeur (53C) du deuxième vérin hydraulique (58C). Cette communication (114C) est constituée d'un premier canal (115C) débouchant dans la chambre (116C) du deuxième vérin hydraulique (58C), et d'un deuxième canal (117C) qui fait communiquer le premier canal (115C) avec un deuxième volume collecteur (118C) prévu à la périphérie du piston (53C). Ce dernier comporte en outre un clapet anti-retour (107C) destiné à obturer le premier canal (115C).

Chaque transformateur d'énergie hydraulique (37C, 38C) comporte également un orifice de fuite (90A) pratiqué dans la pièce de fermeture et de guidage (48C) et qui débouche dans un troisième volume collecteur (91C) aménagé dans la pièce de fermeture et de guidage (48C). Cet orifice de fuite (90A) est partiellement fileté.

La pièce de fermeture et de guidage (48C) comporte en outre un (des) trou(s) (75C) qui fait (font) communiquer le volume intérieur (65C) de l'accumulateur hydropneumatique (67C) avec le premier vérin hydraulique (57C).

La tige (46C), quant à elle, comporte un (des) trou(s) (92C) qui est (sont) destiné(s) à faire communiquer le deuxième volume collecteur (118C) avec le troisième volume collecteur (91C). Elle comporte également un troisième canal (126) qui fait communiquer le (l'un des) trou(s) (92C) avec le premier vérin hydraulique (57C).

Ce quatrième dispositif de réglage automatique de l'allégement du mécanisme de récolte (15) de la faucheuse (1) comporte également un circuit hydraulique (94C) alimentant les deux transformateurs d'énergie hydraulique (37C, 38C). Ce circuit hydraulique (94C) comprend pour chaque transformateur d'énergie hydraulique (37C, 38C), un premier réseau hydraulique (95C) couplé au premier vérin hydraulique (57C) et un deuxième réseau hydraulique (96C) couplé au deuxième vérin hydraulique (58C).

Le premier réseau hydraulique (95C) comporte une première voie hydraulique (97C) destinée à alimenter le premier vérin hydraulique (57C), et une deuxième voie hydraulique (98A) branchée sur l'orifice de fuite (90A) dudit premier vérin hydraulique (57C). La deuxième voie hydraulique (98A) présente, à cet effet, un raccord fileté (123) vissé dans le filetage dudit orifice de fuite (90A).

Le deuxième réseau hydraulique (96C), quant à lui, comporte une troisième voie hydraulique (99C) branchée sur l'orifice d'alimentation (93C) du deuxième vérin hydraulique (58C). La troisième voie hydraulique (99C) présente, à cet effet, un raccord fileté (100) vissé dans le filetage de l'orifice d'alimentation (93C) du deuxième vérin hydraulique (58C). La troisième voie hydraulique (99C) comporte en outre un clapet anti-retour piloté (108A) interdisant la circulation de l'huile dans le sens transformateur d'énergie hydraulique (37C, 38C) / source de fourniture d'huile (103). L'ouverture de ce clapet anti-retour piloté (108A) est commandée par la pression régnant dans la deuxième voie hydraulique (98A).

Dans cet exemple de réalisation, la première voie hydraulique (97C) est donc constituée par la troisième voie hydraulique (99C) et par la communication (114C) entre le deuxième vérin hydraulique (58C) et le premier vérin hydraulique (57C).

En outre, les deux troisièmes voies hydrauliques (99C) (et, de ce fait, les deux premières voies hydrauliques (97C)) sont branchées sur une première conduite d'alimentation commune (101A) et les deux deuxièmes voies hydrauliques (98A) sont branchées sur une deuxième conduite d'alimentation commune (102A). Ces deux conduites d'alimentation communes (101A, 102A) sont par ailleurs couplées à la source de fourniture d'huile (103). La première conduite d'alimentation commune (101A) comporte en sus un étrangleur (107).

Ce quatrième exemple de réalisation d'un dispositif de réglage automatique de l'allégement du mécanisme de récolte (15) de la faucheuse (1), qui vient d'être décrit, fonctionne de la manière suivante.

En position de travail, le mécanisme de récolte (15) repose sur le sol (S) avec un certain poids apparent et il peut suivre le relief dudit sol (S). Pour ce faire, l'un au moins des transformateurs d'énergie hydraulique (37C, 38C) s'allonge ou se raccourcit selon le cas. Ce faisant, de l'huile contenue dans le volume intérieur (65C) de l'accumulateur hydropneumatique (67C) est transvasée dans le premier vérin hydraulique (57C) ou de l'huile contenue dans le premier vérin hydraulique (57C) est transvasée dans le volume intérieur (65C) de l'accumulateur hydropneumatique (67C). Ce transvasement se fait au travers du (des) trou(s) (75C) pratiqué(s) dans la pièce de fermeture et de guidage (48C).

Pour lever le mécanisme de récolte (15), on place le distributeur (106) dans sa première position active (106²). L'huile fournie par la pompe (104) circule dans la première conduite d'alimentation commune (101A) (elle passe dans celle-ci au travers de l'étrangleur (107)), dans les troisièmes voies hydrauliques (99C) (elle passe dans celles-ci au travers du clapet anti-retour piloté (108A) correspondant) et pénètre dans le deuxième vérin hydraulique (58C) de chaque transformateur d'énergie hydraulique (37C, 38C). En pénétrant dans chaque deuxième vérin hydraulique (58C), elle déplace le piston (53C) correspondant vers la position prédéterminée de celui-ci qui est définie par un deuxième jonc d'arrêt (127) monté dans la tige (46C). Ce faisant, ledit piston (53C) fait sortir la tige (46C) correspondante au moyen de l'huile contenue dans le premier vérin hydraulique (57C) correspondant.

Si le poids du mécanisme de récolte (15) n'a pas varié depuis la dernière levée, le piston (53C) arrive en butée sur le deuxième jonc d'arrêt (127) et le(s) trou(s) (92C) de la tige (46C) arrive(nt) au niveau du troisième volume collecteur (91C) (qui est en communication avec l'orifice de fuite (90A)) simultanément.

En continuant l'alimentation, l'huile qui pénètre dans le deuxième vérin hydraulique (58C), circule dans le premier canal (115), traverse le clapet anti-retour (109C), circule dans le deuxième canal (117C), dans le deuxième volume collecteur (118C), traverse le(s) trou(s) (92C) de la tige (46C), circule dans le troisième volume collecteur (91C), traverse l'orifice de fuite (90A), puis retourne au réservoir (105) par la deuxième voie hydraulique (98A) et la deuxième conduite d'alimentation commune (102A).

Si le poids du mécanisme de récolte (15) a augmenté depuis le dernière levée, le piston (53C) arrive en butée sur le deuxième jonc d'arrêt (127), alors que le(s) trou(s) (92C) de la tige (46C) n'a (n'ont) pas encore atteint le troisième volume collecteur (91C). En continuant l'alimentation, l'huile fournie par la pompe (104), qui pénètre dans le deuxième vérin hydraulique (58C), circule dans le premier canal (115C), traverse le clapet anti-retour (109C), circule dans le deuxième canal (117C), dans le deuxième volume collecteur (118C), traverse le trou (92C) de la tige (46C) communiquant avec le troisième canal (126), circule dans ledit troisième canal (126), et pénètre dans le premier vérin hydraulique (57C). Cette huile qui pénètre dans le premier vérin hydraulique (57C), continue de faire sortir la tige (46C) hors du corps (45C) jusqu'à ce que le(s) trou(s) (92C) de la tige (46C) atteigne(nt) le troisième volume collecteur (91C). La sortie de la tige (46C) s'arrête alors et tout surplus d'huile pénétrant dans le transformateur d'énergie hydraulique (37C, 38C) retourne au réservoir (105) comme expliqué plus haut.

Si le poids du mécanisme de récolte (15) a diminué depuis la dernière levée, le(s) trou(s) (92C) de la tige (46C) atteint (atteignent) le troisième volume collecteur (91C), alors que le piston (53C) n'est pas encore en butée sur le deuxième jonc d'arrêt (127). Comme la sortie de la tige (46C) est alors stoppée, la poursuite du déplacement du piston (53C) chasse le surplus d'huile contenu dans le premier vérin hydraulique (57C) au travers du troisième canal (126), du trou (92C) correspondant de la tige (46C), du troisième volume collecteur (91C) et de l'orifice de fuite (90A), d'où il retourne au réservoir (105). En continuant l'alimentation, tout surplus d'huile pénétrant dans le transformateur d'énergie hydraulique (37C, 38C) après que le piston (53C) soit en butée sur le deuxième jonc d'arrêt (127), retourne au réservoir (105) comme expliqué précédemment.

Pour abaisser le mécanisme de récolte (15), on place le distributeur (106) dans la deuxième position active (106³). Le poids du mécanisme de récolte (15) chasse alors l'huile contenue dans le deuxième vérin hydraulique (58C) hors de celui-ci via la tige (46C), l'huile contenue dans le premier vérin hydraulique (57C), et le piston (53C). Cette huile retourne au réservoir (105) au travers de la troisième voie hydraulique (99C) (où elle traverse le clapet anti-retour piloté (108A)), et de la première conduite d'alimentation commune (101A). La rentrée de la tige (46C) dans le corps (45C) du transformateur d'énergie hydraulique (37C, 38C) correspondant est stoppée lorsque le mécanisme de récolte (15) arrive en contact avec le sol (S). Il convient de noter que le volume de l'huile contenue dans le premier vérin hydraulique (57C) est maintenu lors de la descente du mécanisme de récolte (15) par le clapet anti-retour (109C) qui bouche le premier canal (115C) du piston (53C).

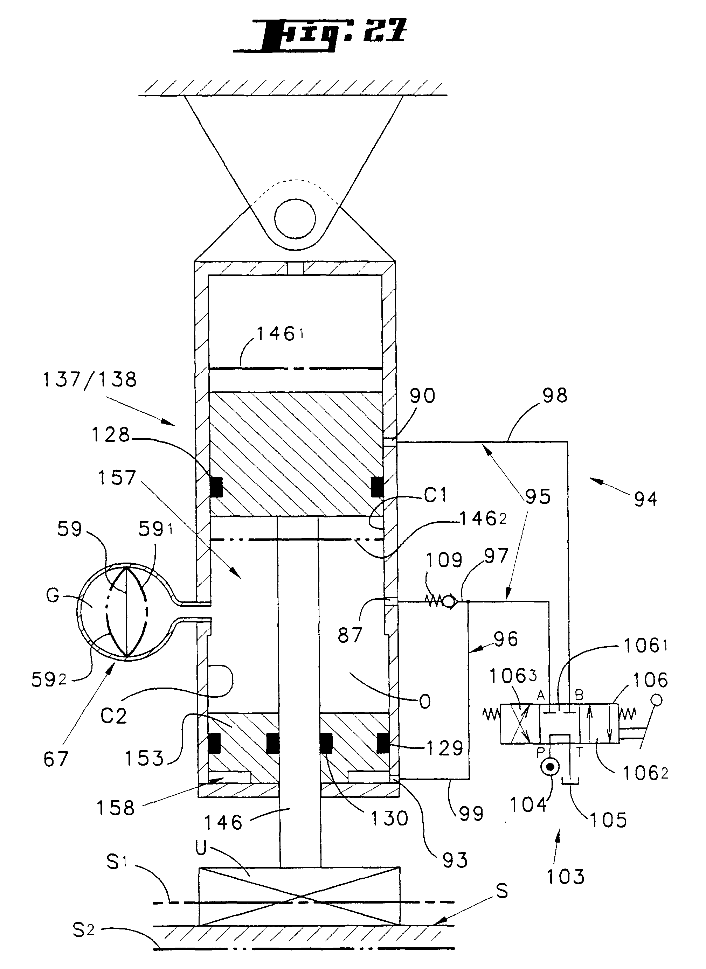

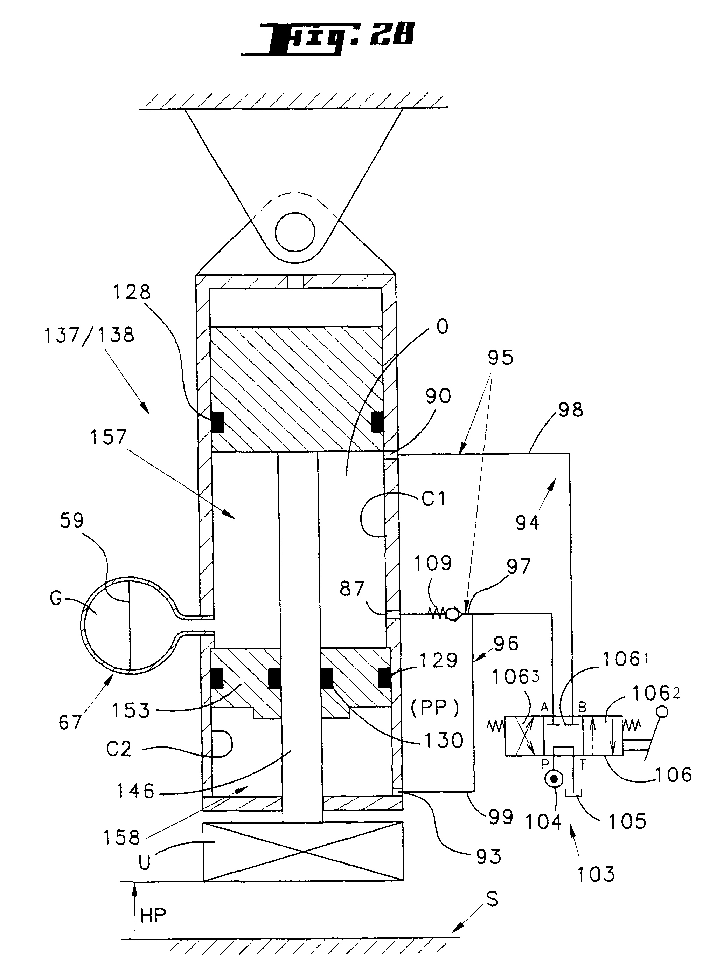

Alors que les figures 1 à 10 montrent schématiquement la première famille de réalisation de dispositifs de réglage automatique de l'allégement d'une unité de travail (U) dont le(s) transformateur(s) d'énergie hydraulique (37/38) lève(nt) l'unité de travail (U) en s'allongeant, les figures 27 et 28 montrent schématiquement la deuxième famille de réalisation de dispositifs de réglage automatique de l'allégement d'une unité de travail (U) dont le(s) transformateur(s) d'énergie hydraulique (137/138) lève(nt) l'unité de travail (U) en se raccourcissant.

Dans la deuxième famille de réalisation, le(s) transformateur(s) d'énergie hydraulique (137/138) comporte(nt) également (chacun) un premier vérin hydraulique (157) muni notamment d'une tige (146) et associé à un accumulateur hydropneumatique (67) (correspondant) dont la pression du gaz (G) peut être réglée initialement à une valeur correspondant au degré de l'allégement souhaité pour l'unité de travail (U).

Ce(s) transformateur(s) d'énergie hydraulique (137/138) comporte(nt) aussi (chacun) un deuxième vérin hydraulique (158) dont le piston (153) peut se déplacer dans le cylindre (C₂) dudit deuxième vérin hydraulique (158) jusqu'à une position prédéterminée (PP) prévue dans ledit cylindre (C₂). Le piston (153) du deuxième vérin hydraulique (158), du type annulaire, est désolidarisé de la tige (146) du premier vérin hydraulique (157) et agit sur celle-ci par l'intermédiaire de l'huile (O) contenue dans le premier vérin hydraulique (157).

L'alimentation du premier vérin hydraulique (157) et du deuxième vérin hydraulique (158) du (de chaque) transformateur d'énergie hydraulique (137/138) se fait de la même manière que celle du premier vérin hydraulique (57) et du deuxième vérin hydraulique (58) du (des) transformateur(s) d'énergie hydraulique (37/38) des dispositifs de réglage automatique de l'allégement d'une unité de travail (U) de la première famille.

Il en est de même du principe de fonctionnement.

Il convient enfin encore de mentionner que tout homme du métier sait qu'un transformateur d'énergie hydraulique comporte des joints d'étanchéité pour éviter des fuites d'huile. Ces joints ont été représentés sur les figures 14 à 26 (leur section respective est noircie), mais n'ont pas été mentionnés dans la description de ces figures. Les seuls joints dont il convient de faire référence sont ceux qui évitent que de l'huile ne s'échappe inopinément de l'orifice de fuite (90, 90A) ( ces premiers joints sont référencés (128)) et les joints qui évitent que de l'huile ne puisse s'écouler du deuxième vérin hydraulique (58 ; 58A ; 58B ; 58C ; 158) vers le premier vérin hydraulique (57 ; 57A ; 57B ; 57C ; 157) ou vice versa. Ces deuxièmes joints sont référencés (129, 130). Ce(s) premier(s) joint(s) et ce(s) deuxième(s) joint(s) contribuent donc notamment à maintenir le volume de l'huile dans le (chaque) premier vérin hydraulique (57 ; 57A ; 57B ; 57C ; 157) lors de l'abaissement de l'unité de travail (U ; 15). En outre, ils contribuent également à favoriser l'alimentation du deuxième vérin hydraulique (58 ; 58A ; 58B ; 58C ; 158) tant que le piston (53 ; 53A ; 53B ; 53C ; 153) de celui-ci n'est pas dans sa position prédéterminée (PP).

Dans l'exemple de réalisation selon les figures 14 à 19, le(s) premier(s) joint(s) (128) agit (agissent) entre la tige (46) et la pièce de fermeture et de guidage (48) et est (sont) implanté(s) dans la partie de ladite pièce de fermeture et de guidage (48) s'étendant entre l'orifice de fuite (90) et la petite chambre (72) du premier vérin hydraulique (57). Le(s) deuxième(s) joint(s) (129) agit (agissent), de leur côté, entre le piston (53) et le cylindre intérieur (47).

Dans l'exemple de réalisation de la figure 23, le(s) deuxième(s) joint(s) (129) agit (agissent) également entre le piston (53B) et le cylindre intérieur (47B). Le(s) deuxième(s) joint(s) (130), quant à lui (eux), agit (agissent) entre le piston (53B) et le tirant (51B).

Dans l'exemple de réalisation des figures 20 à 22, les premiers joints (128) agissent entre la bague (119) et la pièce de fermeture et de guidage (48A). En fait, ces premiers joints (128) sont implantés de part et d'autre du troisième volume collecteur (91A). Le(s) deuxièmes(s) joint(s) (129) agit (agissent), de leur côté, entre le piston (53A) et le cylindre intérieur (47A). Il(s) est (sont) monté(s) sur la partie du piston (53A) s'étendant entre le deuxième volume collecteur (118) et la grande chambre (86A) du premier vérin hydraulique (57A).

Dans l'exemple de réalisation des figures 24 à 26, le(s) premier(s) joint(s) (128) agit (agissent) entre la tige (46C) et la pièce de fermeture et de guidage (48C) et est (sont) implanté(s) dans la partie de ladite pièce de fermeture et de guidage (48C) s'étendant entre le troisième volume collecteur (91C) et la chambre (86C) du premier vérin hydraulique (57C). Le(s) deuxième(s) joint(s) (129) agit (agissent) entre le piston (53C) et la tige (46C). Il(s) est (sont) implanté(s) entre le deuxième volume collecteur (118C) dudit piston (53C) et la chambre (86C) du premier vérin hydraulique (57C).

Dans la deuxième famille de réalisation (figures 27 et 28), le(s) premier(s) joint(s) (128) agit (agissent) entre la tige (146) et le cylindre (C₁) du premier vérin hydraulique (157). Les deuxièmes joints (129, 130), quant à eux, agissent entre le piston (153) et le cylindre (C₂) du deuxième vérin hydraulique (158), respectivement entre le piston (153) et la tige (146).

Il convient de noter que les exemples de réalisation des figures 20 à 26 pourraient également être dotés d'un deuxième clapet anti-retour piloté (110) et/ou d'un deuxième clapet anti-retour (111).

## Revendications

1. Procédé de réglage automatique de l'allégement d'une unité de travail (U ; 15) d'une machine (1), laquelle unité de travail (U ; 15) est portée par une structure porteuse (3 - 16 - 17 - 14) de sorte à être en appui sur le sol (S) durant le travail et éloignée dudit sol (S) lorsque le travail est interrompu ou durant le transport, ladite unité de travail (U ; 15) pouvant être abaissée pour être amenée en appui sur le sol (S) ou être levée pour être éloignée dudit sol (S) au moyen d'au moins un transformateur d'énergie hydraulique (37, 38 ; 37A, 38A ; 37B, 38B ; 37C, 38C ; 137, 138) alimenté par une source de fourniture d'huile (103) au travers d'un circuit hydraulique (94 ; 94A ; 94C) et comportant un premier vérin hydraulique (57 ; 57A ; 57B ; 57C ; 157) muni d'une tige (46 ; 46A ; 46C ; 146) et associé à un accumulateur hydropneumatique (67 ; 67A ; 67B ; 67C) dont la pression du gaz (G) peut être réglée initialement à une valeur correspondant au degré de l'allégement souhaité pour l'unité de travail (U ; 15), procédé ***caractérisé en ce* que** :
- on utilise un (des) transformateur(s) d'énergie hydraulique (37, 38 ; 37A, 38A ; 37B, 38B ; 37C, 38C ; 137, 138) comportant (chacun) le (un) premier vérin hydraulique (57 ; 57A ; 57B ; 57C ; 157) associé à l'(un) accumulateur hydropneumatique (67 ; 67A ; 67B ; 67C), et un deuxième vérin hydraulique (58 ; 58A ; 58B ; 58C ; 158) dont le piston (53 ; 53A ; 53B ; 53C ; 153) qui peut se déplacer jusqu'à une position prédéterminée (PP) dans le cylindre (C₂ ; 47 ; 47A ; 47B ; 47C) dudit deuxième vérin hydraulique (58 ; 58A ; 58B ; 58C ; 158) et qui est désolidarisé de la tige (46 ; 46A ; 46C ; 146) du premier vérin hydraulique (57 ; 57A ; 57B ; 57C ; 157) (correspondant), agit directement ou indirectement sur cette dernière par l'intermédiaire de l'huile (O) contenue dans le premier vérin hydraulique (57 ; 57A ; 57B ; 57C ; 157) (correspondant) ;
- on lève et on abaisse l'unité de travail (U ; 15) à l'aide du (des) deuxième(s) vérin(s) hydraulique(s) (58 ; 58A ; 58B ; 58C ; 158) ;
- en levant l'unité de travail (U ; 15) :
• on augmente le volume d'huile dans le(s) premier(s) vérin(s) hydraulique(s) (57 ; 57A ; 57B ; 57C ; 157) si et seulement si, le(s) piston(s) (53 ; 53A ; 53B ; 53C ; 153) du (des) deuxième(s) vérin(s) hydraulique(s) (58 ; 58A ; 58B ; 58C ; 158) étant dans sa (leur) position prédéterminée (PP), l'unité de travail (U ; 15) n'atteint pas une hauteur prédéterminée (HP) ;
• on diminue le volume d'huile du (des) premier(s) vérin(s) hydraulique(s) (57 ; 57A ; 57B ; 57C ; 157) si et seulement si l'unité de travail (U ; 15) a atteint la hauteur prédéterminée (HP), alors que le(s) piston(s) (53 ; 53A ; 53B ; 53C ; 153) du (des) deuxième(s) vérin(s) hydraulique(s) (58 ; 58A ; 58B ; 58C ; 158) n'a (n'ont) pas encore atteint sa (leur) position prédéterminée (PP) ;
de telle sorte que l'unité de travail (U ; 15) soit toujours à la hauteur prédéterminée (HP) en fin de course de levée, c'est-à-dire quand le(s) piston(s) (53 ; 53A ; 53B ; 53C ; 153) du (des) deuxième(s) vérin(s) hydraulique(s) (58 ; 58A ; 58B ; 58C ; 158) est (sont) dans sa (leur) position prédéterminée (PP) ;
- en abaissant l'unité de travail (U ; 15), on maintient le volume d'huile dans le(s) premier(s) vérin(s) hydraulique(s) (57 ; 57A ; 57B ; 57C ; 157).

2. Dispositif de réglage automatique de l'allégement d'une unité de travail (U ; 15) d'une machine (1) pour la mise en oeuvre du procédé selon la revendication 1, laquelle unité de travail (U ; 15) est portée par une structure porteuse (3 - 16 - 17 - 14) de sorte à être en appui sur le sol (S) durant le travail et éloignée dudit sol (S) lorsque le travail est interrompu ou durant le transport, ladite unité de travail (U ; 15) pouvant être abaissée pour être amenée en appui sur le sol (S) ou être levée pour être éloignée dudit sol (S) au moyen dudit dispositif comprenant au moins un transformateur d'énergie hydraulique (37, 38 ; 37A, 38A ; 37B, 38B ; 37C, 38C ; 137, 138) alimenté par une source de fourniture d'huile (103) au travers d'un circuit hydraulique (94 ; 94A ; 94C) et comportant un premier vérin hydraulique (57 ; 57A ; 57B ; 57C ; 157) muni d'une tige (46 ; 46A ; 46C ; 146) et associé à un accumulateur hydropneumatique (67 ; 67A ; 67B ; 67C) dont la pression du gaz (G) peut être réglée initialement à une valeur correspondant au degré de l'allégement souhaité pour l'unité de travail (U ; 15), ledit circuit hydraulique (94 ; 94A ; 94C) comprenant un premier réseau hydraulique (95 ; 95A ; 95C) couplé au premier vérin hydraulique (57 ; 57A ; 57B ; 57C ; 157) dudit (de chaque) transformateur d'énergie hydraulique (37, 38 ; 37A, 38A ; 37B, 38B ; 37C, 38C ; 137, 138) qui comporte un (des) orifice(s) adéquat(s) (87, 90 ; 93A, 90A ; 93C, 90A) en vue de la liaison avec ce premier réseau hydraulique (95 ; 95A ; 95C), ledit dispositif étant ***caractérisé en ce* que** :
- le (chaque) transformateur d'énergie hydraulique (37, 38 ; 37A, 38A ; 37B, 38B ; 37C, 38C ; 137, 138) comporte un deuxième vérin hydraulique (58 ; 58A ; 58B ; 58C ; 158) dont le piston (53 ; 53A ; 53B ; 53C ; 153) qui peut se déplacer jusqu'à une position prédéterminée (PP) dans le cylindre (C₂ ; 47 ; 47A ; 47B ; 47C) dudit deuxième vérin hydraulique (58 ; 58A ; 58B ; 58C ; 158) et qui est désolidarisé de la tige (46 ; 46A ; 46C ; 146) du premier vérin hydraulique (57 ; 57A ; 57B ; 57C ; 157) (correspondant), agit directement ou indirectement sur cette dernière par l'intermédiaire de l'huile (O) contenue dans le premier vérin hydraulique (57 ; 57A ; 57B ; 57C ; 157) (correspondant) ;
- le circuit hydraulique (94 ; 94A ; 94C) comprend un deuxième réseau hydraulique (96 ; 96A ; 96C) couplé au deuxième vérin hydraulique (58 ; 58A ; 58B ; 58C ; 158) du (de chaque) transformateur d'énergie hydraulique (37, 38 ; 37A, 38A ; 37B, 38B ; 37C ; 38C ; 137, 138) ledit (chaque) transformateur d'énergie hydraulique (37, 38 ; 37A, 38A ; 37B, 38B ; 37C, 38C ; 137, 138) comportant également un (des) orifice(s) adéquat(s) (93 ; 93A ; 93C) en vue de la liaison de ce deuxième réseau hydraulique (96 ; 96A ; 96C) ;
- des moyens (87, 109, 90 ; 93A, 109A, 90A ; 93, 109B, 90A ; 93C, 109C, 90A) permettent, le cas échéant, d'augmenter ou de diminuer le volume de l'huile (O) du (de chaque) premier vérin hydraulique (57 ; 57A ; 57B ; 57C ; 157) en fin de course de levée de l'unité de travail (U ; 15) ;
- des moyens (109, 128, 129 ; 109A, 128, 129 ; 109B, 128, 129, 130 ; 109C, 128, 129 ; 109, 128, 129, 130) permettent de maintenir le volume de l'huile (O) dans le (chaque) premier vérin hydraulique (57 ; 57A ; 57B ; 57C ; 157) lors de l'abaissement de l'unité de travail (U ; 15).

3. Dispositif de réglage automatique de l'allégement d'une unité de travail (U ; 15) d'une machine (1) selon la revendication 2, ***caractérisé en ce* que** l' (chaque) accumulateur hydropneumatique (67 ; 67A ; 67B ; 67C) est intégré dans le transformateur d'énergie hydraulique (37, 38 ; 37A, 38A ; 37B, 38B ; 37C, 38C ; 137, 138) (correspondant).

4. Dispositif de réglage automatique de l'allégement d'une unité de travail (U ; 15) d'une machine (1) selon la revendication 3, ***caractérisé en ce* que** ledit accumulateur hydropneumatique (67 ; 67A ; 67B ; 67C) entoure notamment le cylindre (47 ; 47A ; 47B ; 47C) du premier vérin hydraulique (57 ; 57A ; 57B ; 57C) dudit transformateur d'énergie hydraulique (37, 38 ; 37A, 38A ; 37B, 38B ; 37C, 38C).

5. Dispositif de réglage automatique de l'allégement d'une unité de travail (U ; 15) d'une machine (1) selon la revendication 4, ***caractérisé en ce* que** ledit transformateur d'énergie hydraulique (37, 38 ; 37A, 38A ; 37B, 38B ; 37C, 38C) comporte :
- un cylindre intérieur (47 ; 47A ; 47B ; 47C) formant notamment le cylindre du premier vérin hydraulique (57 ; 57A ; 57B ; 57C),
- un cylindre extérieur (60 ; 60C), et
- une membrane déformable (59) séparant l'espace entre le cylindre intérieur (47 ; 47A ; 47B ; 47C) et le cylindre extérieur (60 ; 60C) en deux volumes (64, 65 ; 64, 65A ; 64, 65B ; 64C, 65C) : un premier volume (64 ; 64C) contenant le gaz (G) et un deuxième volume (65 ; 65A ; 65B ; 65C) contenant de l'huile dont la pression est identique à la pression de l'huile (O) contenue dans le premier vérin hydraulique (57 ; 57A ; 57B ; 57C), ce premier volume (64 ; 64C) contenant le gaz (G) et ce deuxième volume (65 ; 65A ; 65B ; 65C) contenant de l'huile constituant ledit accumulateur hydropneumatique (67 ; 67A ; 67B ; 67C).

6. Dispositif de réglage automatique de l'allégement d'une unité de travail (U ; 15) d'une machine (1) selon la revendication 5, ***caractérisé en ce* que** le premier volume (64 ; 64C) est notamment délimité par le cylindre extérieur (60 ; 60C) et la membrane (59), tandis que le deuxième volume (65 ; 65A ; 65B ; 65C) est notamment délimité par le cylindre intérieur (47 ; 47A ; 47B ; 47C) et la membrane (59).

7. Dispositif de réglage automatique de l'allégement d'une unité de travail (U ; 15) d'une machine (1) selon la revendication 6, ***caractérisé en ce* que** ledit cylindre extérieur (60) ou une bague d'obturation (61C) liée audit cylindre extérieur (60C) est pourvu(e) d'une valve de gonflage (66 ; 66C) du premier volume (64 ; 64C).

8. Dispositif de réglage automatique de l'allégement d'une unité de travail (U ; 15) d'une machine (1) selon la revendication 5, 6 ou 7, ***caractérisé en ce* que** ledit cylindre intérieur (47 ; 47A ; 47B) constitue également le cylindre du deuxième vérin hydraulique (58 ; 58A ; 58B).

9. Dispositif de réglage automatique de l'allégement d'une unité de travail (U ; 15) d'une machine (1) selon l'une quelconque des revendications 2 à 7, ***caractérisé en ce* que** la tige (46C) du (de chaque) premier vérin hydraulique (57C) est creuse et constitue le cylindre du deuxième vérin hydraulique (58C) (correspondant).

10. Dispositif de réglage automatique de l'allégement d'une unité de travail (U ; 15) d'une machine (1) selon la revendication 9, ***caractérisé en ce* que** l'orifice d'alimentation (93C) du (de chaque) deuxième vérin hydraulique (58C) est prévu dans le voisinage de l'extrémité extérieure de la tige (46C).

11. Dispositif de réglage automatique de l'allégement d'une unité de travail (U ; 15) d'une machine (1) selon l'une quelconque des revendications 2 à 10, ***caractérisé en ce* que** le piston (53 ; 53A ; 53C) du (de chaque) deuxième vérin hydraulique (58 ; 58A ; 58C) est un piston plongeur.

12. Dispositif de réglage automatique de l'allégement d'une unité de travail (U ; 15) d'une machine (1) selon l'une quelconque des revendications 2 à 10, ***caractérisé en ce* que** le piston (53B ; 153) du (de chaque) deuxième vérin hydraulique (58B ; 158) est un piston annulaire.

13. Dispositif de réglage automatique de l'allégement d'une unité de travail (U ; 15) d'une machine (1) selon l'une quelconque des revendications 2 à 12, ***caractérisé en ce* que** ladite position prédéterminée (PP) jusqu'à laquelle peut se déplacer le piston (53 ; 53B ; 53C) dans le cylindre du (de chaque) deuxième vérin hydraulique (58 ; 58B ; 58C) est déterminée par une butée (51-52 ; 51B-52B ; 127).

14. Dispositif de réglage automatique de l'allégement d'une unité de travail (U ; 15) d'une machine (1) selon la revendication 13, ***caractérisé en ce* que** ladite butée (51-52 ; 51B-52B) est constituée d'un tirant (51 ; 51B) solidaire de l'extrémité du transformateur d'énergie hydraulique (37, 38 ; 37B ; 38B) (correspondant) située du côté du deuxième vérin hydraulique (58 ; 58B).

15. Dispositif de réglage automatique de l'allégement d'une unité de travail (U ; 15) d'une machine (1) selon la revendication 14, ***caractérisé en ce* que** le tirant (51 ; 51B) s'étend au moins partiellement à l'intérieur du piston (53 ; 53B) du deuxième vérin hydraulique (58 ; 58B).

16. Dispositif de réglage automatique de l'allégement d'une unité de travail (U ; 15) d'une machine (1) selon la revendication 15, ***caractérisé en ce* que** le tirant (51 ; 51B) s'étend coaxialement à l'intérieur du piston (53 ; 53B) du deuxième vérin hydraulique (58 ; 58B).

17. Dispositif de réglage automatique de l'allégement d'une unité de travail (U ; 15) d'une machine (1) selon la revendication 15 ou 16, ***caractérisé en ce* que** le tirant (51B) traverse le piston (53B) du deuxième vérin hydraulique (58B).

18. Dispositif de réglage automatique de l'allégement d'une unité de travail (U ; 15) d'une machine (1) selon la revendication 13, ***caractérisé en ce* que** ladite butée est constituée d'un épaulement, fixe ou rapporté (127), prévu dans le cylindre (C₂ ; 46C) du deuxième vérin hydraulique (158 ; 58C).

19. Dispositif de réglage automatique de l'allégement d'une unité de travail (U ; 15) d'une machine (1) selon l'une quelconque des revendications 2 à 12, ***caractérisé en ce* que** ladite position prédéterminée (PP) jusqu'à laquelle peut se déplacer le piston (53A) dans le cylindre du (de chaque) deuxième vérin hydraulique (58A) est déterminée par au moins un orifice de limitation (113) prévu dans le cylindre (47A) du deuxième vérin hydraulique (58A) et destiné à évacuer le surplus d'huile injecté dans ledit deuxième vérin hydraulique (58A).

20. Dispositif de réglage automatique de l'allégement d'une unité de travail (U ; 15) d'une machine (1) selon la revendication 19, ***caractérisé en ce* que** ledit (lesdits) orifice(s) de limitation (113) débouche(nt) directement ou indirectement dans le premier vérin hydraulique (57A) (correspondant).

21. Dispositif de réglage automatique de l'allégement d'une unité de travail (U ; 15) d'une machine (1) selon l'une quelconque des revendications 2 à 20, ***caractérisé en ce* qu'**un amortisseur (69 ; 69A) amortit les déplacements de la tige (46 ; 46A) du (de chaque) transformateur d'énergie hydraulique (37, 38 ; 37A, 38A) autorisés par l'accumulateur hydropneumatique (67 ; 67A) (correspondant).

22. Dispositif de réglage automatique de l'allégement d'une unité de travail (U ; 15) d'une machine (1) selon la revendication 21, ***caractérisé en ce* que** ledit amortisseur (69 ; 69A) comporte des moyens (82 ; 82') qui freinent davantage la montée de l'unité de travail (U ; 15) que la descente de celle-ci.

23. Dispositif de réglage automatique de l'allégement d'une unité de travail (U ; 15) d'une machine (1) selon la revendication 22, ***caractérisé en ce* que** lesdits moyens (82 ; 82') freinent davantage la circulation de l'huile dans le (chaque) premier vérin hydraulique (57 ; 57A) lors de la montée de l'unité de travail (U ; 15) que lors de la descente de celle-ci.

24. Dispositif de réglage automatique de l'allégement d'une unité de travail (U ; 15) d'une machine (1) selon la revendication 23, ***caractérisé en ce* que** ledit amortisseur (69 ; 69A) comporte
- une partie discoïdale (77 ; 77A) implantée à l'intérieur du (de chaque) premier vérin hydraulique (57 ; 57A) et dans laquelle sont pratiqués un trou central (78) et au moins un trou (79 ; 79A) disposé à côté de ce trou central (78),
- une vis creuse (80 ; 80A) vissée dans le trou central (78), et
- une rondelle concave (82) s'étendant entre la vis creuse (80 ; 80A) et la face (83) correspondante de la partie discoïdale (77 ; 77A), la concavité étant dirigée vers ladite face (83) de sorte à couvrir partiellement le (les) trou(s) (79 ; 79A) disposé(s) à côté du trou central (78).

25. Dispositif de réglage automatique de l'allégement d'une unité de travail (U ; 15) d'une machine (1) selon la revendication 24, ***caractérisé en ce* qu'**il est prévu en sus une (des) rondelle(s) élastique(s) (82') interposée(s) entre la rondelle concave (82) et la face (83) correspondante de la partie discoïdale (77 ; 77A).

26. Dispositif de réglage automatique de l'allégement d'une unité de travail (U ; 15) d'une machine (1) selon l'une quelconque des revendications 21 à 25, ***caractérisé en ce* que** la tige (46 ; 46A) présente une partie creuse (68 ; 68A) dans laquelle est implanté ledit amortisseur (69 ; 69A).

27. Dispositif de réglage automatique de l'allégement d'une unité de travail (U ; 15) d'une machine (1) selon l'une quelconque des revendications 2 à 26, ***caractérisé en ce* que** l'un des orifices (87, 90 ; 93A, 90A ; 93C, 90A) du transformateur d'énergie hydraulique (37, 38 ; 37A, 38A ; 37B, 38B ; 37C, 38C ; 137, 138) en liaison avec le premier réseau hydraulique (95 ; 95A ; 95C) (correspondant) est un orifice de fuite (90 ; 90A) qui permet à de l'huile contenue dans le premier vérin hydraulique (57 ; 57A ; 57B ; 57C ; 157) de retourner à la source de fourniture d'huile (103) au travers dudit premier réseau hydraulique (95 ; 95A ; 95C), l'orifice d'alimentation (87 ; 93A ; 93C) dudit premier vérin hydraulique (57 ; 57A ; 57B ; 57C ; 157) et cet orifice de fuite (90 ; 90A) faisant partie des moyens permettant d'augmenter ou de diminuer le volume de l'huile (O) dans ledit premier vérin hydraulique (57 ; 57A ; 57B ; 57C ; 157).

28. Dispositif de réglage automatique de l'allégement d'une unité de travail (U ; 15) d'une machine (1) selon la revendication 27, ***caractérisé en ce* que** le (chaque) transformateur d'énergie hydraulique (37A, 38A ; 37B, 38B) comporte une bague (119) susceptible de coulisser, de manière étanche, dans le corps (45A ; 45B) dudit transformateur d'énergie hydraulique (37A, 38A ; 37B, 38B) et présentant au moins un orifice (121) qui permet de faire communiquer le premier vérin hydraulique (57A ; 57B) avec l'orifice de fuite (90A), I' (les) orifice(s) (121) de ladite bague (119) étant mis en communication avec l'orifice de fuite (90A) lors de la levée de l'unité de travail (U ; 15).

29. Dispositif de réglage automatique de l'allégement d'une unité de travail (U ; 15) d'une machine (1) selon la revendication 28, ***caractérisé en ce* que** l' (les) orifice(s) (121) de ladite bague (119) est (sont) mis en communication avec l'orifice de fuite (90A) par la tige (46A) elle-même.

30. Dispositif de réglage automatique de l'allégement d'une unité de travail (U ; 15) d'une machine (1) selon la revendication 28 ou 29, ***caractérisé en ce* que** l' (les) orifice(s) (121) de la bague (119) est (sont) mis hors communication avec l'orifice de fuite (90A) par un organe élastiquement déformable (122).

31. Dispositif de réglage automatique de l'allégement d'une unité de travail (U ; 15) d'une machine (1) selon l'une quelconque des revendications 27 à 30, ***caractérisé en ce* que** la tige (46 ; 46A ; 46C) du (de chaque) premier vérin hydraulique (57 ; 57A ; 57B ; 57C) présente une partie creuse (68 ; 68A) dans laquelle débouche au moins un trou (92 ; 70 ; 92C) permettant de mettre en communication, directement ou indirectement, le premier vérin hydraulique (57 ; 57A ; 57B ; 57C) avec l'orifice de fuite (90 ; 90A).

32. Dispositif de réglage automatique de l'allégement d'une unité de travail (U ; 15) d'une machine (1) selon la revendication 31, ***caractérisé en ce* que** le (chaque) transformateur d'énergie hydraulique (37, 38 ; 37A, 38A ; 37B, 38B ; 37C, 38C) comporte en sus un collecteur (91 ; 91A ; 91C) raccordé à l'orifice de fuite (90 ; 90A) en entourant au moins partiellement ladite tige (46 ; 46A ; 46C).

33. Dispositif de réglage automatique de l'allégement d'une unité de travail (U ; 15) d'une machine (1) selon l'une quelconque des revendications 27 à 32, ***caractérisé en ce* que**
- le (chaque) premier réseau hydraulique (95 ; 95A ; 95C) comporte :
• une première voie hydraulique (97 ; 97A ; 97C) destinée à alimenter le premier vérin hydraulique (57 ; 57A ; 57B ; 57C ; 157) (correspondant),
• une deuxième voie hydraulique (98 ; 98A) en liaison avec l'orifice de fuite (90 ; 90A) dudit premier vérin hydraulique (57 ; 57A ; 57B ; 57C ; 157) ;
- le (chaque) deuxième réseau hydraulique (96 ; 96A ; 96C) comporte une troisième voie hydraulique (99 ; 99A ; 99C) en liaison avec l'orifice d'alimentation (93 ; 93A ; 93C) du deuxième vérin hydraulique (58 ; 58A ; 58B ; 58C ; 158) (correspondant) ;
- les moyens (109, 128, 129 ; 109A, 128, 129 ; 109B, 128, 129, 130 ; 109C, 128, 129 ; 109, 128, 129, 130) permettant de maintenir le volume d'huile dans le (chaque) premier vérin hydraulique (57 ; 57A ; 57B ; 57C ; 157) lors de l'abaissement de l'unité de travail (U ; 15) comportent un moyen (109 ; 109A ; 109B ; 109C) interdisant la sortie de l'huile dudit premier vérin hydraulique (57 ; 57A ; 57B ; 57C ; 157) au travers de la première voie hydraulique (97 ; 97A ; 97C) ;
- il est prévu un moyen (109, 129 ; 109A, 129 ; 109B, 129, 130 ; 109C, 129 ; 109, 129, 130) favorisant l'alimentation du deuxième vérin hydraulique (58 ; 58A ; 58B ; 58C ; 158), lors de la levée de l'unité de travail (U ; 15).

34. Dispositif de réglage automatique de l'allégement d'une unité de travail (U ; 15) d'une machine (1) selon la revendication 33, ***caractérisé en ce* que** :
- la première voie hydraulique (97) est couplée, directement ou indirectement, à la troisième voie hydraulique (99) ;
- le moyen (109) interdisant la sortie de l'huile du premier vérin hydraulique (57 ; 157) au travers de la première voie hydraulique (97) est implanté entre l'orifice d'alimentation (87) du premier vérin hydraulique (57 ; 157) (correspondant) et le couplage de la première voie hydraulique (97) sur la troisième voie hydraulique (99).

35. Dispositif de réglage automatique de l'allégement d'une unité de travail (U ; 15) d'une machine (1) selon la revendication 33, ***caractérisé en ce* que** :
- la première voie hydraulique (97A ; 97C) est constituée au moins partiellement par la troisième voie hydraulique (99A ; 99C) et par une communication (114 ; 114B ; 114C) entre le deuxième vérin hydraulique (58A ; 58B ; 58C) et le premier vérin hydraulique (57A ; 57B ; 57C) ;
- le moyen (109A ; 109B ; 109C) interdisant la sortie de l'huile du premier vérin hydraulique (57A ; 57B ; 57C) au travers de la première voie hydraulique (97A ; 97C) agit notamment au niveau de ladit communication (114 ; 114B ; 114C) entre le deuxième vérin hydraulique (58A ; 58B ; 58C) et le premier vérin hydraulique (57A ; 57B ; 57C).

36. Dispositif de réglage automatique de l'allégement d'une unité de travail (U ; 15) d'une machine (1) selon les revendications 35 et 17, ***caractérisé en ce* que** ladite communication (114B) entre le deuxième vérin hydraulique (58B) et le premier vérin hydraulique (57B) est prévue dans ledit tirant (51B).

37. Dispositif de réglage automatique de l'allégement d'une unité de travail (U ; 15) d'une machine (1) selon la revendication 35, ***caractérisé en ce* que** ladite communication (114 ; 114C) entre le deuxième vérin hydraulique (58A; 58C) et le premier vérin hydraulique (57A ; 57C) est prévue au moins partiellement dans le piston (53A ; 53C) du deuxième vérin hydraulique (58A ; 58C).

38. Dispositif de réglage automatique de l'allégement d'une unité de travail (U ; 15) d'une machine (1) selon la revendication 37 et les revendications 19 ou 20, ***caractérisé en ce* que** ladite communication (114) entre le deuxième vérin hydraulique (58A) et le premier vérin hydraulique (57A) est en sus constituée par ledit (lesdits) orifice(s) de limitation (113).

39. Dispositif de réglage automatique de l'allégement d'une unité de travail (U ; 15) d'une machine (1) selon l'une quelconque des revendications 33 à 38, ***caractérisé en ce* que** ledit moyen (109 ; 109A ; 109B ; 109C) interdisant la sortie de l'huile du premier vérin hydraulique (57 ; 57A ; 57B ; 57C ; 157) au travers de la première voie hydraulique (97 ; 97A ; 97C) est constitué d'un premier clapet anti-retour (109 ; 109A ; 109B ; 109C).

40. Dispositif de réglage automatique de l'allégement d'une unité de travail (U ; 15) d'une machine (1) selon l'une quelconque des revendications 33 à 39, ***caractérisé en ce* que** ledit moyen (107, 129 ; 109A, 129 ; 107B, 129, 130 ; 109C, 129 ; 107, 129, 130) favorisant l'alimentation du deuxième vérin hydraulique (58 ; 58A ; 58B ; 58C ; 158) lors de la levée de l'unité de travail (U ; 15), empêche l'alimentation du premier vérin hydraulique (57 ; 57A ; 57B ; 57C ; 157) tant que le piston (53 ; 53A ; 53B ; 53C ; 153) du deuxième vérin hydraulique (58 ; 58A ; 58B ; 58C ; 158) n'est pas dans sa position prédéterminée (PP).

41. Dispositif de réglage automatique de l'allégement d'une unité de travail (U ; 15) d'une machine (1) selon les revendications 39 et 40, ***caractérisé en ce* que** ledit moyen (109, 129 ; 109B, 129, 130 ; 109, 129, 130) empêchant l'alimentation du premier vérin hydraulique (57 ; 57B ; 157) tant que le piston (53 ; 53B ; 153) du deuxième vérin hydraulique (58 ; 58B ; 158) n'est pas dans sa position prédéterminée (PP), est notamment constitué par le premier clapet anti-retour (109 ; 109B) qui est réalisé sous forme de clapet anti-retour taré.

42. Dispositif de réglage automatique de l'allégement d'une unité de travail (U ; 15) d'une machine (1) selon l'une quelconque des revendications 33 à 41, ***caractérisé en ce* que** l'alimentation du premier vérin hydraulique (57 ; 57A ; 57B ; 57C ; 157) se fait au travers d'un étrangleur (107) de préférence réglable.

43. Dispositif de réglage automatique de l'allégement d'une unité de travail (U ; 15) d'une machine (1) selon la revendication 42, ***caractérisé en ce* qu'**il comprend plusieurs transformateurs d'énergie hydraulique (37, 38 ; 37A, 38A ; 37B, 38B ; 37C, 38C ; 137, 138) dont les premiers vérins hydrauliques (57 ; 57A ; 57B ; 57C ; 157) sont alimentés au travers d'un seul étrangleur (107).

44. Dispositif de réglage automatique de l'allégement d'une unité de travail (U ; 15) d'une machine (1) selon l'une quelconque des revendications 33 à 43, ***caractérisé en ce* que** la deuxième voie hydraulique (98) comprend un deuxième clapet anti-retour (111) interdisant la circulation de l'huile dans le sens source de fourniture d'huile (103)/premier vérin hydraulique (57).

45. Dispositif de réglage automatique de l'allégement d'une unité de travail (U ; 15) d'une machine (1) selon la revendication 34 ou 35, ***caractérisé en ce* que** la troisième voie hydraulique (99 ; 99A ; 99C) comprend un premier clapet anti-retour piloté (108 ; 108A) interdisant la circulation de l'huile dans le sens deuxième vérin hydraulique (58 ; 58A ; 58B ; 58C)/source de fourniture d'huile (103), l'ouverture de ce premier clapet anti-retour piloté (108 ; 108A) étant commandée par la pression régnant dans la deuxième voie hydraulique (98 ; 98A).

46. Dispositif de réglage automatique de l'allégement d'une unité de travail (U ; 15) d'une machine (1) selon la revendication 45, ***caractérisé en ce* que** la deuxième voie hydraulique (98) comprend un deuxième clapet anti-retour piloté (110) interdisant la circulation de l'huile dans le sens premier vérin hydraulique (57)/source de fourniture d'huile (103), l'ouverture du premier claplet anti-retour piloté (108), respectivement de ce deuxième clapet anti-retour piloté (110) étant commandée par la pression régnant dans la deuxième voie hydraulique (98) en amont du deuxième clapet anti-retour piloté (110), respectivement par la pression régnant dans la troisième voie hydraulique (99) en amont du premier clapet anti-retour piloté (108).

47. Dispositif de réglage automatique de l'allégement d'une unité de travail (U ; 15) d'une machine (1) selon les revendications 44 et 46, ***caractérisé en ce* que** le deuxième clapet anti-retour piloté (110) est prévu en amont du deuxième clapet anti-retour (111).

48. Machine (1) comportant une unité de travail (U ; 15) portée par une structure porteuse (3 - 16 - 17 - 14) de sorte à être en appui sur le sol (S) durant le travail et éloignée dudit sol (S) lorsque le travail est interrompu ou durant le transport, ladite unité de travail (U ; 15) pouvant être abaissée pour être amenée en appui sur le sol (S) ou être levée pour être éloignée dudit sol (S) au moyen d'un dispositif de réglage automatique de l'allégement de ladite unité de travail (U ; 15), ***caractérisée en ce* que** ledit dispositif de réglage automatique de l'allégement de l'unité de travail (U ; 15) est un dispositif selon les revendications 2 à 47.

49. Machine selon la revendication 48, ***caractérisée en ce* que** c'est une machine agricole.

50. Machine selon la revendication 49, ***caractérisée en ce* que** c'est une machine de coupe.

51. Machine selon la revendication 49 ou 50, ***caractérisée en ce* que** c'est une machine de récolte.

52. Machine selon les revendications 50 et 51, ***caractérisée en ce* que** c'est une faucheuse avec ou sans dispositif de traitement du produit coupé.

## Claims

1. Method for the automatic adjustment of the lightening of a working unit (U; 15) of a machine (1), which working unit (U; 15) is carried by a carrying structure (3 - 16 - 17 - 14) so that it rests on the ground (S) during work and is held away from the said ground (S) when work is interrupted or during transport, it being possible for the said working unit (U; 15) to be lowered to be made to rest on the ground (S) or raised to be held away from the said ground (S) by means of at least one hydraulic energy converter (37, 38; 37A, 38A; 37B, 38B; 37C, 38C; 137, 138) supplied by an oil supply source (103) through a hydraulic circuit (94; 94A; 94C) and comprising a first hydraulic ram (57; 57A; 57B; 57C; 157) equipped with a rod (46; 46A; 46C; 146) and associated with a hydropneumatic accumulator (67; 67A; 67B; 67C), the pressure of the gas (G) of which can be set initially to a value corresponding to the desired amount of lightening for the working unit (U; 15), the method being ***characterized in* that**:
- one (several) hydraulic energy converter(s) (37, 38; 37A, 38A; 37B, 38B; 37C, 38C; 137, 138) (each) comprising the (a) first hydraulic ram (57; 57A; 57B; 57C; 157) associated with the (a) hydropneumatic accumulator (67; 67A; 67B ; 67C) and a second hydraulic ram (58; 58A; 58B; 58C; 158) of which the piston (53; 53A; 53B; 53C; 153), which can move into a predetermined position (PP) in the cylinder (C₂; 47; 47A; 47B; 47C) of the said second hydraulic ram (58; 58A; 58B; 58C; 158) and which is detached from the rod (46; 46A; 46C; 146) of the (corresponding) first hydraulic ram (57; 57A; 57B; 57C; 157), acts directly or indirectly on this rod via the oil (0) contained in the (corresponding) first hydraulic ram (57; 57A; 57B; 57C; 157), is (are) used;
- the working unit (U; 15) is raised and lowered using the second hydraulic ram(s) (58; 58A; 58B; 58C; 158);
- by raising the working unit (U; 15):
• the volume of oil in the first hydraulic ram(s) (57; 57A; 57B; 57C; 157) is increased if, and only if, with the piston(s) (53; 53A; 53B; 53C; 153) of the second hydraulic ram(s) (58; 58A; 58B; 58C; 158) in its (their) predetermined position (PP), the working unit (U; 15) does not reach a predetermined height (HP);
• the volume of oil in the first hydraulic ram(s) (57; 57A; 57B; 57C; 157) is decreased if, and only if, the working unit (U; 15) has reached the predetermined height (HP) whereas the piston(s) (53; 53A; 53B; 53C; 153) of the second hydraulic ram(s) (58; 58A; 58B; 58C; 158) has (have) not yet reached its (their) predetermined position (PP);
so that the working unit (U; 15) is always at the predetermined height (HP) at the end of the raising stroke, that is to say when the piston(s) (53; 53A; 53B; 53C; 153) of the second hydraulic ram(s) (58; 58A; 58B; 58C; 158) is (are) in its (their) predetermined position (PP);
- by lowering the working unit (U; 15), the volume of oil in the first hydraulic ram(s) (57; 57A; 57B; 57C; 157) is maintained.

2. Device for the automatic adjustment of the lightening of a working unit (U; 15) of a machine (1) for implementing the method according to Claim 1, which working unit (U; 15) is carried by a carrying structure (3 - 16 - 17 - 14) so that it rests on the ground (S) during work and is held away from the said ground (S) when work is interrupted or during transport, it being possible for the said working unit (U; 15) to be lowered to be made to rest on the ground (S) or raised to be held away from the said ground (S) by means of the said device comprising at least one hydraulic energy converter (37, 38; 37A, 38A; 37B, 38B; 37C, 38C; 137, 138) supplied by an oil supply source (103) through a hydraulic circuit (94; 94A; 94C) and comprising a first hydraulic ram (57; 57A; 57B; 57C; 157) equipped with a rod (46; 46A; 46C; 146) and associated with a hydropneumatic accumulator (67; 67A; 67B; 67C), the pressure of the gas (G) of which can be set initially to a value corresponding to the desired amount of lightening for the working unit (U; 15), the said hydraulic circuit (94; 94A; 94C) comprising a first hydraulic network (95; 95A; 95C) coupled to the first hydraulic ram (57; 57A; 57B; 57C; 157) of the said (of each) hydraulic energy converter (37, 38; 37A, 38A; 37B, 38B; 37C, 38C; 137, 138) which has one (several) suitable orifice(s) (87, 90; 93A, 90A; 93C, 90A) with a view to the connection with this first hydraulic network (95; 95A; 95C), the said device being ***characterized in* that**:
- the (each) hydraulic energy converter (37, 38; 37A, 38A; 37B, 38B; 37C, 38C; 137, 138) comprises a second hydraulic ram (58; 58A; 58B; 58C; 158) of which the piston (53; 53A; 53B; 53C; 153), which can move until it reaches a predetermined position (PP) in the cylinder (C₂; 47; 47A; 47B; 47C) of the said second hydraulic ram (58; 58A; 58B; 58C; 158) and which is detached from the rod (46; 46A; 46C; 146) of the (corresponding) first hydraulic ram (57; 57A; 57B; 57C; 157), acts directly or indirectly on this rod via the oil (O) contained in the (corresponding) first hydraulic ram (57; 57A; 57B; 57C; 157);
- the hydraulic circuit (94; 94A; 94C) comprises a second hydraulic network (96; 96A; 96C) coupled to the second hydraulic ram (58; 58A; 58B; 58C; 158) of the (each) hydraulic energy converter (37, 38; 37A, 38A; 37B, 38B; 37C, 38C; 137, 138), the said (each) hydraulic energy converter (37, 38; 37A, 38A; 37B, 38B; 37C, 38C; 137, 138) also comprising one (several) suitable orifice(s) (93; 93A; 93C) with a view to the connection of this second hydraulic network (96; 96A; 96C);
- means (87, 109, 90; 93A, 109A, 90A; 93, 109B, 90A; 93C, 109C, 90A), as appropriate, make it possible to increase or decrease the volume of the oil (O) of the (each) first hydraulic ram (57; 57A; 57B; 57C; 157) at the end of the raising stroke of the working unit (U; 15);
- means (109, 128, 129; 109A, 128, 129; 109B, 128, 129, 130; 109C, 128, 129; 109, 128, 129, 130) make it possible to maintain the volume of the oil (O) in the (each) first hydraulic ram (57; 57A; 57B; 57C; 157) when lowering the working unit (U; 15).

3. Device for the automatic adjustment of the lightening of a working unit (U; 15) of a machine (1) according to Claim 2, ***characterized in* that** the (each) hydropneumatic accumulator (67; 67A; 67B; 67C) is incorporated into the (corresponding) hydraulic energy converter (37, 38; 37A, 38A; 37B, 38B; 37C, 38C; 137, 138).

4. Device for the automatic adjustment of the lightening of a working unit (U; 15) of a machine (1) according to Claim 3, ***characterized in* that** the said hydropneumatic accumulator (67; 67A; 67B; 67C) in particular surrounds the cylinder (47; 47A; 47B; 47C) of the first hydraulic ram (57; 57A; 57B; 57C) of the said hydraulic energy converter (37, 38; 37A, 38A; 37B, 38B; 37C, 38C).

5. Device for the automatic adjustment of the lightening of a working unit (U; 15) of a machine (1) according to Claim 4, ***characterized in* that** the said hydraulic energy converter (37, 38; 37A, 38A; 37B, 38B; 37C, 38C) comprises:
- an inner cylinder (47; 47A; 47B; 47C) in particular forming the cylinder of the first hydraulic ram (57; 57A; 57B; 57C),
- an outer cylinder (60; 60C), and
- a deformable membrane (59) dividing the space between the inner cylinder (47; 47A; 47B; 47C) and the outer cylinder (60; 60C) into two volumes (64, 65; 64, 65A; 64, 65B; 64C, 65C): a first volume (64; 64C) containing the gas (G) and a second volume (65; 65A; 65B; 65C) containing oil, the pressure of which is identical to the pressure of the oil (O) contained in the first hydraulic ram (57; 57A; 57B; 57C), this first volume (64; 64C) containing the gas (G) and this second volume (65; 65A; 65B; 65C) containing oil constituting the said hydropneumatic accumulator (67; 67A; 67B; 67C).

6. Device for the automatic adjustment of the lightening of a working unit (U; 15) of a machine (1) according to Claim 5, ***characterized in* that** the first volume (64; 64C) is delimited in particular by the outer cylinder (60; 60C) and the membrane (59), while the second volume (65; 65A; 65B; 65C) is delimited in particular by the inner cylinder (47; 47A; 47B; 47C) and the membrane (59).

7. Device for the automatic adjustment of the lightening of a working unit (U; 15) of a machine (1) according to Claim 6, ***characterized in* that** the said outer cylinder (60) or a closure ring (61C) associated with the said outer. cylinder (60C) is provided with a valve (66; 66C) for inflating the first volume (64; 64C).

8. Device for the automatic adjustment of the lightening of a working unit (U; 15) of a machine (1) according to Claim 5, 6 or 7, ***characterized in* that** the said inner cylinder (47; 47A; 47B) also constitutes the cylinder of the second hydraulic ram (58; 58A; 58B).

9. Device for the automatic adjustment of the lightening of a working unit (U; 15) of a machine (1) according to any one of Claims 2 to 7, ***characterized in* that** the rod (46C) of the (each) first hydraulic ram (57C) is hollow and constitutes the cylinder of the (corresponding) second hydraulic ram (58C).

10. Device for the automatic adjustment of the lightening of a working unit (U; 15) of a machine (1) according to Claim 9, ***characterized in* that** the supply orifice (93C) of the (each) second hydraulic ram (58C) is provided near the outer end of the rod (46C).

11. Device for the automatic adjustment of the lightening of a working unit (U; 15) of a machine (1) according to any one of Claims 2 to 10, ***characterized in* that** the piston (53; 53A; 53C) of the (each) second hydraulic ram (58; 58A; 58C) is a plunger piston.

12. Device for the automatic adjustment of the lightening of a working unit (U; 15) of a machine (1) according to any one of Claims 2 to 10, ***characterized in* that** the piston (53B; 153) of the (each) second hydraulic ram (58B; 158) is an annular piston.

13. Device for the automatic adjustment of the lightening of a working unit (U; 15) of a machine (1) according to any one of Claims 2 to 12, ***characterized in* that** the said predetermined position (PP) until which the piston (53; 53B; 53C) can move in the cylinder of the (each) second hydraulic ram (58; 58B; 58C) is determined by a stop (51-52; 51B-52B; 127).

14. Device for the automatic adjustment of the lightening of a working unit (U; 15) of a machine (1) according to Claim 13, ***characterized in* that** the said stop (51-52; 51B-52B) consists of a tie-bolt (51; 51B) secured to the end of the (corresponding) hydraulic energy converter (37, 38; 37B; 38B) situated at the same end as the second hydraulic ram (58; 58B).

15. Device for the automatic adjustment of the lightening of a working unit (U; 15) of a machine (1) according to Claim 14, ***characterized in* that** the tie-bolt (51; 51B) extends at least partially inside the piston (53; 53B) of the second hydraulic ram (58; 58B).

16. Device for the automatic adjustment of the lightening of a working unit (U; 15) of a machine (1) according to Claim 15, ***characterized in* that** the tie-bolt (51; 51B) extends coaxially inside the piston (53; 53B) of the second hydraulic ram (58; 58B).

17. Device for the automatic adjustment of the lightening of a working unit (U; 15) of a machine (1) according to Claim 15 or 16, ***characterized in* that** the tie-bolt (51B) passes through the piston (53B) of the second hydraulic ram (58B).

18. Device for the automatic adjustment of the lightening of a working unit (U; 15) of a machine (1) according to Claim 13, ***characterized in* that** the said stop consists of a shoulder, fixed or attached (127), provided in the cylinder (C₂; 46C) of the second hydraulic ram (158; 58C).

19. Device for the automatic adjustment of the lightening of a working unit (U; 15) of a machine (1) according to any one of Claims 2 to 12, ***characterized in* that** the said predetermined position (PP) until which the piston (53A) can move in the cylinder of the (each) second hydraulic ram (58A) is determined by at least one limiting orifice (113) provided in the cylinder (47A) of the second hydraulic ram (58A) and intended to discharge the surplus oil injected into the said second hydraulic ram (58A).

20. Device for the automatic adjustment of the lightening of a working unit (U; 15) of a machine (1) according to Claim 19, ***characterized in* that** the said limiting orifice(s) (113) open (opens) directly or indirectly into the (corresponding) first hydraulic ram (57A).

21. Device for the automatic adjustment of the lightening of a working unit (U; 15) of a machine (1) according to any one of Claims 2 to 20, ***characterized in* that** a damper (69; 69A) damps the movements of the rod (46; 46A) of the (each) hydraulic energy converter (37, 38; 37A, 38A), which movements are allowed by the (corresponding) hydropneumatic accumulator (67; 67A).

22. Device for the automatic adjustment of the lightening of a working unit (U; 15) of a machine (1) according to Claim 21, ***characterized in* that** the said damper (69; 69A) comprises means (82; 82') which slow the upward movement of the working unit (U; 15) more than the downward movement thereof.

23. Device for the automatic adjustment of the lightening of a working unit (U; 15) of a machine (1) according to Claim 22, ***characterized in* that** the said means (82; 82') slow the flow of the oil in the (each) first hydraulic ram (57; 57A) during the upward movement of the working unit (U; 15) more than during the downward movement thereof.

24. Device for the automatic adjustment of the lightening of a working unit (U; 15) of a machine (1) according to Claim 23, ***characterized in* that** the said damper (69; 69A) comprises:
- a discoid part (77; 77A) fitted inside the (each) first hydraulic ram (57; 57A) and in which there are made a central hole (78) and at least one hole (79; 79A) arranged beside this central hole (78),
- a hollow screw (80; 80A) screwed into the central hole (78), and
- a concave washer (82) extending between the hollow screw (80; 80A) and the corresponding face (83) of the discoid part (77; 77A), the concavity facing the said face (83) so as to partially cover the hole(s) (79; 79A) arranged beside the central hole (78).

25. Device for the automatic adjustment of the lightening of a working unit (U; 15) of a machine (1) according to Claim 24, ***characterized in* that** there are also provided one (several) elastic washer(s) (82') inserted between the concave washer (82) and the corresponding face (83) of the discoid part (77; 77A).

26. Device for the automatic adjustment of the lightening of a working unit (U; 15) of a machine (1) according to any one of Claims 21 to 25, ***characterized in* that** the rod (46; 46A) has a hollow part (68; 68A) in which the said damper (69; 69A) is arranged.

27. Device for the automatic adjustment of the lightening of a working unit (U; 15) of a machine (1) according to any one of Claims 2 to 26, ***characterized in* that** one of the orifices (87, 90; 93A, 90A; 93C, 90A) of the hydraulic energy converter (37, 38; 37A, 38A; 37B, 38B; 37C, 38C; 137, 138) in connection with the (corresponding) first hydraulic network (95; 95A; 95C) is a leakage orifice (90; 90A) which allows oil contained in the first hydraulic ram (57; 57A; 57B; 57C; 157) to return to the oil supply source (103) through the said first hydraulic network (95; 95A; 95C), the supply orifice (87; 93A; 93C) of the said first hydraulic ram (57; 57A; 57B; 57C; 157) and this leakage orifice (90; 90A) forming part of the means that make it possible to increase or to decrease the volume of the oil (O) in the said first hydraulic ram (57; 57A; 57B; 57C; 157).

28. Device for the automatic adjustment of the lightening of a working unit (U; 15) of a machine (1) according to Claim 27, ***characterized in* that** the (each) hydraulic energy converter (37A, 38A; 37B, 38B) comprises a ring (119) capable of sliding, in a sealed manner, in the body (45A; 45B) of the said hydraulic energy converter (37A, 38A; 37B, 38B) and having at least one orifice (121) which allows the first hydraulic ram (57A; 57B) to communicate with the leakage orifice (90A), the orifice(s) (121) of the said ring (119) being placed in communication with the leakage orifice (90A) when the working unit (U; 15) is raised.

29. Device for the automatic adjustment of the lightening of a working unit (U; 15) of a machine (1) according to Claim 28, ***characterized in* that** the orifice(s) (121) of the said ring (119) is (are) placed in communication with the leakage orifice (90A) via the rod (46A) itself.

30. Device for the automatic adjustment of the lightening of a working unit (U; 15) of a machine (1) according to Claim 28 or 29, ***characterized in* that** the orifice(s) (121) of the ring (119) is (are) taken out of communication with the leakage orifice (90A) by an elastically deformable element (122).

31. Device for the automatic adjustment of the lightening of a working unit (U; 15) of a machine (1) according to any one of Claims 27 to 30, ***characterized in* that** the rod (46; 46A; 46C) of the (each) hydraulic energy converter (57; 57A; 57B; 57C) has a hollow part (68; 68A) into which there opens at least one hole (92; 70; 92C) that allows the first hydraulic ram (57; 57A; 57B; 57C) to be placed in communication, directly or indirectly, with the leakage orifice (90; 90A).

32. Device for the automatic adjustment of the lightening of a working unit (U; 15) of a machine (1) according to Claim 31, ***characterized in* that** the (each) hydraulic energy converter (37, 38; 37A, 38A; 37B, 38B; 37C, 38C) additionally comprises a collector (91; 91A; 91C) connected to the leakage orifice (90; 90A) and at least partially surrounding the said rod (46; 46A; 46C).

33. Device for the automatic adjustment of the lightening of a working unit (U; 15) of a machine (1) according to any one of Claims 27 to 32, ***characterized in* that**
- the (each) first hydraulic network (95; 95A; 95C) comprises:
• a first hydraulic way (97; 97A; 97C) intended to supply the (corresponding) first hydraulic ram (57; 57A; 57B; 57C; 157),
• a second hydraulic way (98; 98A) in connection with the leakage orifice (90; 90A) of the said first hydraulic ram (57; 57A; 57B; 57C; 157);
- the (each) second hydraulic network (96; 96A; 96C) comprises a third hydraulic way (99; 99A; 99C) in connection with the supply orifice (93; 93A; 93C) of the (corresponding) second hydraulic ram (58; 58A; 58B; 58C; 158);
- the means (109, 128, 129; 109A, 128, 129; 109B, 128, 129, 130; 109C, 128, 129; 109, 128, 129, 130) that make it possible to maintain the volume of oil in the (each) first hydraulic ram (57; 57A; 57B; 57C; 157) when the working unit (U; 15) is lowered comprise a means (109; 109A; 109B; 109C) preventing the oil from leaving the said first hydraulic ram (57; 57A; 57B; 57C; 157) through the first hydraulic way (97; 97A; 97C);
- there is a means (109, 129; 109A, 129; 109B, 129, 130; 109C, 129; 109, 129, 130) encouraging the second hydraulic ram (58; 58A; 58B; 58C; 158) to be supplied when the working unit (U; 15) is raised.

34. Device for the automatic adjustment of the lightening of a working unit (U; 15) of a machine (1) according to Claim 33, ***characterized in* that**:
- the first hydraulic way (97) is coupled, directly or indirectly, to the third hydraulic way (99);
- the means (109) preventing oil from leaving the first hydraulic ram (57; 157) through the first hydraulic way (97) is arranged between the supply orifice (87) of the (corresponding) first hydraulic ram (57; 157) and the coupling of the first hydraulic way (97) to the third hydraulic way (99).

35. Device for the automatic adjustment of the lightening of a working unit (U; 15) of a machine (1) according to Claim 33, ***characterized in* that**:
- the first hydraulic way (97A; 97C) consists at least partially of the third hydraulic way (99A; 99C) and of a communication (114; 114B; 114C) between the second hydraulic ram (58A; 58B; 58C) and the first hydraulic ram (57A; 57B; 57C);
- the means (109A; 109B; 109C) preventing oil from leaving the first hydraulic ram (57A; 57B; 57C) along the first hydraulic way (97A; 97C) acts in particular at the said communication (114; 114B; 114C) between the second hydraulic ram (58A; 58B; 58C) and the first hydraulic ram (57A; 57B; 57C).

36. Device for the automatic adjustment of the lightening of a working unit (U; 15) of a machine (1) according to Claims 35 and 17, ***characterized in* that** the said communication (114B) between the second hydraulic ram (58B) and the first hydraulic ram (57B) is provided in the said tie-bolt (51B).

37. Device for the automatic adjustment of the lightening of a working unit (U; 15) of a machine (1) according to Claim 35, ***characterized in* that** the said communication (114; 114C) between the second hydraulic ram (58A; 58C) and the first hydraulic ram (57A; 57C) is at least partially provided in the piston (53A; 53C) of the second hydraulic ram (58A; 58C).

38. Device for the automatic adjustment of the lightening of a working unit (U; 15) of a machine (1) according to Claim 37 and Claims 19 or 20, ***characterized in* that** the said communication (114) between the second hydraulic ram (58A) and the first hydraulic ram (57A) additionally consists of the said limiting orifice(s) (113).

39. Device for the automatic adjustment of the lightening of a working unit (U; 15) of a machine (1) according to any one of Claims 33 to 38, ***characterized in* that** the said means (109; 109A; 109B; 109C) preventing oil from leaving the first hydraulic ram (57; 57A; 57B; 57C; 157) through the first hydraulic way (97; 97A; 97C) consists of a first nonreturn valve (109; 109A; 109B; 109C).

40. Device for the automatic adjustment of the lightening of a working unit (U; 15) of a machine (1) according to any one of Claims 33 to 39, ***characterized in* that** the said means (107, 129; 109A, 129; 107B, 129, 130; 109C, 129; 107, 129, 130) encouraging the second hydraulic ram (58; 58A; 58B; 58C; 158) to be supplied when the working unit (U; 15) is raised prevents the first hydraulic ram (57; 57A; 57B; 57C; 157) from being supplied as long as the piston (53; 53A; 53B; 53C; 153) of the second hydraulic ram (58; 58A; 58B; 58C; 158) is not in its predetermined position (PP).

41. Device for the automatic adjustment of the lightening of a working unit (U; 15) of a machine (1) according to Claims 39 and 40, ***characterized in* that** the said means (109, 129; 109B, 129, 130; 109, 129, 130) preventing the first hydraulic ram (57; 57B; 157) from being supplied as long as the piston (53; 53B; 153) of the second hydraulic ram (58; 58B; 158) is not in its predetermined position (PP) consists, in particular, of the first nonreturn valve (109; 109B) which is produced in the form of a calibrated nonreturn valve.

42. Device for the automatic adjustment of the lightening of a working unit (U; 15) of a machine (1) according to any one of Claims 33 to 41, ***characterized in* that** the supply to the first hydraulic ram (57; 57A; 57B; 57C; 157) takes place through a restrictor (107), preferably an adjustable restrictor.

43. Device for the automatic adjustment of the lightening of a working unit (U; 15) of a machine (1) according to Claim 42, ***characterized in* that** it comprises several hydraulic energy converters (37, 38; 37A, 38A; 37B, 38B; 37C, 38C; 137, 138), the first hydraulic rams (57; 57A; 57B; 57C; 157) of which are supplied through one single restrictor (107).

44. Device for the automatic adjustment of the lightening of a working unit (U; 15) of a machine (1) according to any one of Claims 33 to 43, ***characterized in* that** the second hydraulic way (98) comprises a second nonreturn valve (111) preventing the oil from flowing in the oil supply source (103)/first hydraulic ram (57) direction.

45. Device for the automatic adjustment of the lightening of a working unit (U; 15) of a machine (1) according to Claim 34 or 35, ***characterized in* that** the third hydraulic way (99; 99A; 99C) comprises a first controlled nonreturn valve (108; 108A) preventing the oil from flowing in the second hydraulic ram (58; 58A; 58B; 58C)/oil supply source (103) direction, the opening of this first controlled nonreturn valve (108; 108A) being controlled by the pressure in the second hydraulic way (98; 98A).

46. Device for the automatic adjustment of the lightening of a working unit (U; 15) of a machine (1) according to Claim 45, ***characterized in* that** the second hydraulic way (98) comprises a second controlled nonreturn valve (110) preventing the oil from flowing in the first hydraulic ram (57)/oil supply source (103) direction, the opening of the first controlled nonreturn valve (108) and of this second controlled nonreturn valve (110) being controlled, respectively, by the pressure in the second hydraulic way (98) upstream of the second controlled nonreturn valve (110), and by the pressure in the third hydraulic way (99) upstream of the first controlled nonreturn valve (108).

47. Device for the automatic adjustment of the lightening of a working unit (U; 15) of a machine (1) according to Claims 44 and 46, ***characterized in* that** the second controlled nonreturn valve (110) is upstream of the second nonreturn valve (111).

48. Machine (1) comprising a working unit (U; 15) carried by a carrying structure (3 - 16 - 17 - 14) so that it rests on the ground (S) during work and is held away from the said ground (S) when work is interrupted or during transport, it being possible for the said working unit (U; 15) to be lowered to be made to rest on the ground (S) or raised to be held away from the said ground (S) by means of a device for the automatic adjustment of the lightening of the said working unit (U; 15), ***characterized in* that** the said device for the automatic adjustment of the lightening of the working unit (U; 15) is a device according to Claims 2 to 47.

49. Machine according to Claim 48, ***characterized in* that** it is an agricultural machine.

50. Machine according to Claim 49, ***characterized in* that** it is a cutting machine.

51. Machine according to Claim 49 or 50, ***characterized in* that** it is a harvesting machine.

52. Machine according to Claims 50 and 51, ***characterized in* that** it is a mower with or without a device for treating the cut product.

## Patentansprüche

1. Verfahren zur automatischen Einstellung der Entlastung einer Arbeitseinheit (U; 15) einer Maschine (1), wobei die Arbeitseinheit (U; 15) von einem Traggestell (3 - 16 - 17 - 14) so getragen wird, das sie im Betrieb auf dem Boden (S) aufliegt und bei Unterbrechung des Betriebs oder während des Transports vom Boden (S) entfernt ist, wobei die Arbeitseinheit (U; 15) mittels mindestens eines Hydraulikenergiewandlers (37, 38; 37A, 38A; 37B, 38B; 37C, 38C; 137, 138), der von einer Ölzufuhrquelle (103) über einen Hydraulikkreis (94; 94A; 94C) gespeist wird und einen ersten Hydraulikzylinder (57; 57A; 57B; 57C; 157) enthält, der mit einer Stange (46; 46A; 46C; 146) versehen und einem hydropneumatischen Speicher (67; 67A; 67B; 67C) zugeordnet ist, dessen Druck des Gases (G) anfangs auf einen dem für die Arbeitseinheit (U; 15) gewünschten Entlastungsgrad entsprechenden Wert eingestellt werden kann, zur Anlage an den Boden (S) abgesenkt oder zur Entfernung vom Boden (S) angehoben werden kann, ***dadurch gekennzeichnet*, daß**
- man einen der (die) Hydraulikenergiewandler (37, 38; 37A, 38A; 37B, 38B; 37C, 38C; 137, 138) verwendet, die jeweils den (einen) ersten Hydraulikzylinder (57; 57A; 57B; 57C; 157), der dem (einem) hydropneumatischen Speicher (67; 67A; 67B; 67C) zugeordnet ist, und einen zweiten Hydraulikzylinder (58; 58A; 58B; 58C; 158) aufweisen, dessen Kolben (53; 53A; 53B; 53C; 153), der sich bis zu einer vorbestimmten Stellung (PP) im Rohrzylinder (C2; 47; 47A; 47B; 47C) des zweiten Hydraulikzylinders (58; 58A; 58B; 58C; 158) bewegen kann und der von der Stange (46; 46A; 46C; 146) des (entsprechenden) ersten Hydraulikzylinders (57; 57A; 57B; 57C; 157) getrennt ist, mittels im (entsprechenden) ersten Hydraulikzylinder (57; 57A; 57B; 57C; 157) enthaltenem Öl (O) direkt oder indirekt auf diese Stange einwirkt;
- man die Arbeitseinheit (U; 15) mittels des (der) zweiten Hydraulikzylinder(s) (58; 58A; 58B; 58C; 158) anhebt oder absenkt;
- man beim Anheben der Arbeitseinheit (U; 15):
• das Ölvolumen in dem (den) ersten Hydraulikzylinder(n) (57; 57A; 57B; 57C; 157) vergrößert, und zwar nur dann, wenn die Arbeitseinheit (U; 15) eine vorbestimmte Höhe (HP) nicht erreicht, während sich der (die) Kolben (53; 53A; 53B; 53C; 153) des (der) zweiten Hydraulikzylinder(s) (58; 58A; 58B; 58C; 158) in seiner (ihrer) vorbestimmten Stellung (PP) befindet (befinden);
• das Ölvolumen des (der) ersten Hydraulikzylinder(s) (57; 57A; 57B; 57C; 157) verkleinert, und zwar nur dann, wenn die Arbeitseinheit (U; 15) die vorbestimmte Höhe (HP) erreicht hat, während der (die) Kolben (53; 53A; 53B; 53C; 153) des (der) zweiten Hydraulikzylinder(s) (58; 58A; 58B; 58C; 158) seine (ihre) vorbestimmte Stellung (PP) noch nicht erreicht hat (haben);
so daß sich die Arbeitseinheit (U; 15) am Ende des Anhebehubs, das heißt, wenn sich der (die) Kolben (53; 53A; 53B; 53C; 153) des (der) zweiten Hydraulikzylinder(s) (58; 58A; 58B; 58C; 158) in seiner (ihrer) vorbestimmten Stellung (PP) befindet (befinden), immer auf der vorbestimmten Höhe (HP) befindet;
- man beim Absenken der Arbeitseinheit (U; 15) das Ölvolumen in dem (den) ersten Hydraulikzylinder(n) (57; 57A; 57B; 57C; 157) aufrechterhält.

2. Vorrichtung zur automatischen Einstellung der Entlastung einer Arbeitseinheit (U; 15) einer Maschine (1) zur Durchführung des Verfahrens nach Anspruch 1, wobei die Arbeitseinheit (U; 15) von einem Traggestell (3 - 16 - 17 - 14) so getragen wird, das sie im Betrieb auf dem Boden (S) aufliegt und bei Unterbrechung des Betriebs oder während des Transports vom Boden (S) entfernt ist, wobei die Arbeitseinheit (U; 15) mittels der mindestens einen Hydraulikenergiewandler (37, 38; 37A, 38A; 37B, 38B; 37C, 38C; 137, 138), der von einer Ölzufuhrquelle (103) über einen Hydraulikkreis (94; 94A; 94C) gespeist wird und einen ersten Hydraulikzylinder (57; 57A; 57B; 57C; 157) enthält, der mit einer Stange (46; 46A; 46C; 146) versehen und einem hydropneumatischen Speicher (67; 67A; 67B; 67C) zugeordnet ist, dessen Druck des Gases (G) anfangs auf einen dem für die Arbeitseinheit (U; 15) gewünschten Entlastungsgrad entsprechenden Wert eingestellt werden kann, enthaltenden Vorrichtung zur Anlage an den Boden (S) abgesenkt oder zur Entfernung vom Boden (S) angehoben werden kann, wobei der Hydraulikkreis (94; 94A, 94C) ein erstes Hydrauliknetz (95; 95A; 95C) aufweist, das mit dem ersten Hydraulikzylinder (57; 57A; 57B; 57C; 157) des (jedes) Hydraulikenergiewandlers (37, 38; 37A, 38A; 37B, 38B; 37C, 38C; 137, 138) verbunden ist, der zur Verbindung mit diesem ersten Hydrauliknetz (95; 95A; 95C) (eine) angemessene Öffnung(en) (87, 90; 93A, 90A; 93C, 90A) enthält ***dadurch gekennzeichnet,* daß**
- der (jeder) Hydraulikenergiewandler (37, 38; 37A, 38A; 37B, 38B; 37C, 38C; 137, 138) einen zweiten Hydraulikzylinder (58; 58A; 58B; 58C; 158) aufweist, dessen Kolben (53; 53A; 53B; 53C; 153), der sich bis zu einer vorbestimmten Stellung (PP) im Rohrzylinder (C2; 47; 47A; 47B; 47C) des zweiten Hydraulikzylinders (58; 58A; 58B; 58C; 158) bewegen kann und der von der Stange (46; 46A; 46C; 146) des (entsprechenden) ersten Hydraulikzylinders (57; 57A; 57B; 57C; 157) getrennt ist, mittels im (entsprechenden) ersten Hydraulikzylinder (57; 57A; 57B; 57C; 157) enthaltenem Öl (O) direkt oder indirekt auf diese Stange einwirkt;
- der Hydraulikkreis (94; 94A; 94C) ein zweites Hydrauliknetz (96; 96A; 96C) aufweist, das mit dem zweiten Hydraulikzylinder (58; 58A; 58B; 58C; 158) des (jedes) Hydraulikenergiewandlers (37, 38; 37A, 38A; 37B, 38B; 37C, 38C; 137, 138) verbunden ist, wobei der (jeder) Hydraulikenergiewandler (37, 38; 37A, 38A; 37B, 38B; 37C, 38C; 137, 138) zur Verbindung mit diesem zweiten Hydrauliknetz (96; 96A; 96C) ebenfalls (eine) angemessene Öffnung(en) (93; 93A; 93C) enthält;
- Mittel (87, 109, 90; 93A, 109A, 90A; 93, 109B, 90A; 93C, 109C, 90A) gestatten, das Ölvolumen (O) des (jedes) ersten Hydraulikzylinders (57; 57A; 57B; 57C; 157) am Ende des Anhebehubs der Arbeitseinheit (U; 15) gegebenenfalls zu vergrößern oder zu verkleinern;
- Mittel (109, 128, 129; 109A, 128, 129; 109B, 128, 129, 130; 109C, 128, 129; 109, 128, 129, 130) gestatten, das Ölvolumen (O) in dem (jedem) ersten Hydraulikzylinder (57; 57A; 57B; 57C; 157) beim Absenken der Arbeitseinheit (U; 15) aufrechtzuerhalten.

3. Vorrichtung zur automatischen Einstellung der Entlastung einer Arbeitseinheit (U; 15) einer Maschine (1) nach Anspruch 2, ***dadurch gekennzeichnet,* daß** der (jeder) hydropneumatische Speicher (67; 67A; 67B; 67C) in dem (entsprechenden) Hydraulikenergiewandler (37, 38; 37A, 38A; 37B, 38B; 37C, 38C; 137, 138) integriert ist.

4. Vorrichtung zur automatischen Einstellung der Entlastung einer Arbeitseinheit (U; 15) einer Maschine (1) nach Anspruch 3, ***dadurch gekennzeichnet,* daß** der hydropneumatische Speicher (67; 67A; 67B; 67C) insbesondere den Rohrzylinder (47; 47A; 47B; 47C) des ersten Hydraulikzylinders (57; 57A; 57B; 57C) des Hydraulikenergiewandlers (37, 38; 37A, 38A; 37B, 38B; 37C, 38C) umgibt.

5. Vorrichtung zur automatischen Einstellung der Entlastung einer Arbeitseinheit (U; 15) einer Maschine (1) nach Anspruch 4, ***dadurch gekennzeichnet,* daß** der Hydraulikenergiewandler (37, 38; 37A, 38A; 37B, 38B; 37C, 38C)
- einen inneren Rohrzylinder (47; 47A; 47B; 47C), der insbesondere den Rohrzylinder des ersten Hydraulikzylinders (57; 57A; 57B; 57C) bildet,
- einen äußeren Rohrzylinder (60; 60C) und
- eine verformbare Membran (59), die den Raum zwischen dem inneren Rohrzylinder (47; 47A; 47B; 47C) und dem äußeren Rohrzylinder (60; 60C) in zwei Volumen (64, 65; 64, 65A; 64, 65B; 64C, 65C) teilt: ein das Gas (G) enthaltendes erstes Volumen (64; 64C) und ein zweites Volumen (65; 65A; 65B; 65C), das Öl enthält, dessen Druck mit dem Druck des im ersten Hydraulikzylinder (57; 57A; 57B; 57C) enthaltenen Öls (O) identisch ist, wobei dieses das Gas (G) enthaltende erste Volumen (64; 64C) und dieses das Öl enthaltende zweite Volumen (65; 65A; 65B; 65C) den hydropneumatischen Speicher (67; 67A; 67B; 67C) bilden, umfaßt.

6. Vorrichtung zur automatischen Einstellung der Entlastung einer Arbeitseinheit (U; 15) einer Maschine (1) nach Anspruch 5, ***dadurch gekennzeichnet,* daß** das erste Volumen (64; 64C) insbesondere durch den äußeren Rohrzylinder (60; 60C) und die Membran (59) begrenzt wird, während das zweite Volumen (65; 65A; 65B; 65C) insbesondere durch den inneren Rohrzylinder ( 47; 47A; 47B; 47C) und die Membran (59) begrenzt wird.

7. Vorrichtung zur automatischen Einstellung der Entlastung einer Arbeitseinheit (U; 15) einer Maschine (1) nach Anspruch 6, ***dadurch gekennzeichnet,* daß** der äußere Rohrzylinder (60) oder ein mit dem äußeren Rohrzylinder (60C) verbundener Verschlußring (61C) mit einem Füllventil (66; 66C) des ersten Volumens (64; 64C) versehen ist.

8. Vorrichtung zur automatischen Einstellung der Entlastung einer Arbeitseinheit (U; 15) einer Maschine (1) nach Anspruch 5, 6 oder 7, ***dadurch gekennzeichnet,* daß** der innere Rohrzylinder (47; 47A; 47B) des weiteren den Rohrzylinder des zweiten Hydraulikzylinders (58; 58A; 58B) bildet.

9. Vorrichtung zur automatischen Einstellung der Entlastung einer Arbeitseinheit (U; 15) einer Maschine (1) nach einem der Ansprüche 2 bis 7, ***dadurch gekennzeichnet,* daß** die Stange (46C) des (jedes) ersten Hydraulikzylinders (57C) hohl ist und den Rohrzylinder des (entsprechenden) zweiten Hydraulikzylinders (58C) bildet.

10. Vorrichtung zur automatischen Einstellung der Entlastung einer Arbeitseinheit (U; 15) einer Maschine (1) nach Anspruch 9, ***dadurch gekennzeichnet*, daß** die Zuführungsöffnung (93C) des (jedes) zweiten Hydraulikzylinders (58C) in der Nähe des äußeren Endes der Stange (46C) vorgesehen ist.

11. Vorrichtung zur automatischen Einstellung der Entlastung einer Arbeitseinheit (U; 15) einer Maschine (1) nach irgend einem der Ansprüche 2 bis 10, ***dadurch gekennzeichnet,* daß** der Kolben (53; 53A; 53C) des (jedes) zweiten Hydraulikzylinders (58; 58A; 58C) ein Tauchkolben ist.

12. Vorrichtung zur automatischen Einstellung der Entlastung einer Arbeitseinheit (U; 15) einer Maschine (1) nach irgend einem der Ansprüche 2 bis 10, ***dadurch gekennzeichnet,* daß** der Kolben (53B; 153) des (jedes) zweiten Hydraulikzylinders (58B; 158) ein Ringkolben ist.

13. Vorrichtung zur automatischen Einstellung der Entlastung einer Arbeitseinheit (U; 15) einer Maschine (1) nach irgend einem der Ansprüche 2 bis 12, ***dadurch gekennzeichnet,* daß** die vorbestimmte Stellung (PP), bis zu der sich der Kolben (53; 53B; 53C) im Rohrzylinder des (jedes) zweiten Hydraulikzylinders (58; 58B; 58C) bewegen kann, durch einen Anschlag (51-52; 51B-52B; 127) festgelegt wird.

14. Vorrichtung zur automatischen Einstellung der Entlastung einer Arbeitseinheit (U; 15) einer Maschine (1) nach Anspruch 13, ***dadurch gekennzeichnet,* daß** der Anschlag (51-52; 51B-52B) durch eine Zugstange (51; 51B) gebildet wird, die mit dem sich auf der Seite des zweiten Hydraulikzylinders (58; 58B) befindenden Ende des (entsprechenden) Hydraulikenergiewandlers (37, 38; 37B, 38B) fest verbunden ist.

15. Vorrichtung zur automatischen Einstellung der Entlastung einer Arbeitseinheit (U; 15) einer Maschine (1) nach Anspruch 14, ***dadurch* *gekennzeichnet*, daß** sich die Zugstange (51; 51B) zumindest teilweise im Inneren des Kolbens (53; 53B) des zweiten Hydraulikzylinders (58; 58B) erstreckt.

16. Vorrichtung zur automatischen Einstellung der Entlastung einer Arbeitseinheit (U; 15) einer Maschine (1) nach Anspruch 15, ***dadurch gekennzeichnet*, daß** sich die Zugstange (51; 51B) koaxial im Inneren des Kolbens (53; 53B) des zweiten Hydraulikzylinders (58; 58B) erstreckt.

17. Vorrichtung zur automatischen Einstellung der Entlastung einer Arbeitseinheit (U; 15) einer Maschine (1) nach Anspruch 15 oder 16, ***dadurch gekennzeichnet,* daß** die Zugstange (51B) den Kolben (53B) des zweiten Hydraulikzylinders (58B) durchquert.

18. Vorrichtung zur automatischen Einstellung der Entlastung einer Arbeitseinheit (U; 15) einer Maschine (1) nach Anspruch 13, ***dadurch gekennzeichnet,* daß** der Anschlag aus einer festen oder angebrachten Schulter (127) besteht, die im Rohrzylinder (C2; 46C) des zweiten Hydraulikzylinders (158; 58C) vorgesehen ist.

19. Vorrichtung zur automatischen Einstellung der Entlastung einer Arbeitseinheit (U; 15) einer Maschine (1) nach irgend einem der Ansprüche 2 bis 12, ***dadurch gekennzeichnet,* daß** die vorbestimmte Stellung (PP), bis zu der sich der Kolben (53A) im Rohrzylinder des (jedes) zweiten Hydraulikzylinders (58A) bewegen kann, durch mindestens eine im Rohrzylinder (47A) des zweiten Hydraulikzylinders (58A) vorgesehene Begrenzungsöffnung (113), die den Überschuß des in den zweiten Hydraulikzylinder (58A) eingespritzten Öls abführen soll, festgelegt wird.

20. Vorrichtung zur automatischen Einstellung der Entlastung einer Arbeitseinheit (U; 15) einer Maschine (1) nach Anspruch 19, ***dadurch* *gekennzeichnet,* daß** die Begrenzungsöffnung(en) (113) direkt oder indirekt in den (entsprechenden) ersten Hydraulikzylinder (57A) münden.

21. Vorrichtung zur automatischen Einstellung der Entlastung einer Arbeitseinheit (U; 15) einer Maschine (1) nach irgend einem der Ansprüche 2 bis 20, ***dadurch gekennzeichnet,* daß** ein Dämpfer (69; 69A) die durch den entsprechenden hydropneumatischen Speicher (67; 67A) gestatteten Bewegungen der Stange (46; 46A) des (jedes) Hydraulikenergiewandlers (37, 38; 37A, 38A) dämpft.

22. Vorrichtung zur automatischen Einstellung der Entlastung einer Arbeitseinheit (U; 15) einer Maschine (1) nach Anspruch 21, ***dadurch gekennzeichnet,* daß** der Dämpfer (69; 69A) Mittel (82; 82') aufweist, die die Aufwärtsbewegung der Arbeitseinheit (U; 15) stärker bremsen als deren Abwärtsbewegung.

23. Vorrichtung zur automatischen Einstellung der Entlastung einer Arbeitseinheit (U; 15) einer Maschine (1) nach Anspruch 22, ***dadurch gekennzeichnet,* daß** die Mittel (82; 82') die Zirkulation des Öls in dem (jedem) ersten Hydraulikzylinder (57; 57A) bei der Aufwärtsbewegung der Arbeitseinheit (U; 15) stärker bremsen als bei deren Abwärtsbewegung.

24. Vorrichtung zur automatischen Einstellung der Entlastung einer Arbeitseinheit (U; 15) einer Maschine (1) nach Anspruch 23, ***dadurch gekennzeichnet,* daß** der Dämpfer (69; 69A)
- einen im Inneren des (jedes) ersten Hydraulikzylinders (57; 57A) angebrachten scheibenförmigen Teil (77; 77A), in dem ein Mittelloch (78) und mindestens ein neben diesem Mittelloch (78) angeordnetes Loch (79; 79A) ausgebildet sind,
- eine in das Mittelloch (78) eingeschraubte Hohlschraube (80; 80A) und
- eine sich zwischen der Hohlschraube ( 80; 80A) und der entsprechenden Fläche (83) des scheibenförmigen Teils (77; 77A) erstreckende konkave Scheibe (82), wobei die Konkavität zur Fläche (83) gerichtet ist, so daß das (die) Loch (Löcher) (79; 79A), die neben dem Mittelloch (78) angeordnet ist (sind), teilweise bedeckt werden, umfaßt.

25. Vorrichtung zur automatischen Einstellung der Entlastung einer Arbeitseinheit (U; 15) einer Maschine (1) nach Anspruch 24, ***dadurch gekennzeichnet,* daß** darüber hinaus eine oder mehrere elastische Scheibe(n) (82') zwischen der konkaven Scheibe (82) und der entsprechenden Fläche (83) des scheibenförmigen Teils (77; 77A) angeordnet sind.

26. Vorrichtung zur automatischen Einstellung der Entlastung einer Arbeitseinheit (U; 15) einer Maschine (1) nach irgend einem der Ansprüche 21 bis 25, ***dadurch gekennzeichnet*, daß** die Stange (46; 46A) einen hohlen Teil (68; 68A) aufweist, in dem der Dämpfer (69; 69A) angebracht ist.

27. Vorrichtung zur automatischen Einstellung der Entlastung einer Arbeitseinheit (U; 15) einer Maschine (1) nach irgend einem der Ansprüche 2 bis 26, ***dadurch gekennzeichnet,* daß** eine der mit dem (entsprechenden) ersten Hydrauliknetz (95; 95A; 95C) verbundenen Öffnungen (87, 90; 93A, 90A; 93C, 90A) des Hydraulikenergiewandlers (37, 38; 37A, 38A; 37B, 38B; 37C, 38C; 137, 138) eine Ausströmöffnung (90; 90A) ist, die es dem im ersten Hydraulikzylinder (57; 57A; 57B; 57C; 157) enthaltenen Öl gestattet, durch das erste Hydrauliknetz (95; 95A; 95C) zur Ölzufuhrquelle (103) zurückzukehren, wobei die Zuführungsöffnung (87; 93A; 93C) des ersten Hydraulikzylinders (57; 57A; 57B; 57C; 157) und diese Ausströmöffnung (90; 90A) zu den Mitteln gehören, die eine Vergrößerung oder Verkleinerung des Volumens des Öls (O) im ersten Hydraulikzylinder (57; 57A; 57B; 57C; 157) gestatten.

28. Vorrichtung zur automatischen Einstellung der Entlastung einer Arbeitseinheit (U; 15) einer Maschine (1) nach Anspruch 27, ***dadurch* *gekennzeichnet,* daß** der (jeder) Hydraulikenergiewandler (37A, 38A; 37B, 38B) einen Ring (119) aufweist, der auf dichte Weise im Körper (45A; 45B) des Hydraulikenergiewandlers (37A, 38A; 37B, 38B) gleiten kann und mindestens eine Öffnung (121) aufweist, die die Herstellung einer Verbindung des ersten Hydraulikzylinders (57A; 57B) mit der Ausströmöffnung (90A) gestattet, wobei die Öffnung(en) (121) des Rings (119) beim Anheben der Arbeitseinheit (U; 15) mit der Ausströmöffnung (90A) verbunden werden.

29. Vorrichtung zur automatischen Einstellung der Entlastung einer Arbeitseinheit (U; 15) einer Maschine (1) nach Anspruch 28, ***dadurch gekennzeichnet,* daß** die Öffnung(en) (121) des Rings (119) durch die Stange (46A) selbst mit der Ausströmöffnung (90A) verbunden wird (werden).

30. Vorrichtung zur automatischen Einstellung der Entlastung einer Arbeitseinheit (U; 15) einer Maschine (1) nach Anspruch 28 oder 29, ***dadurch gekennzeichnet,* daß** die Verbindung zwischen der (den) Öffnung(en) (121) des Rings (119) und der Ausströmöffnung (90A) durch ein elastisch verformbares Element (122) unterbrochen wird.

31. Vorrichtung zur automatischen Einstellung der Entlastung einer Arbeitseinheit (U; 15) einer Maschine (1) nach irgend einem der Ansprüche 27 bis 30, ***dadurch gekennzeichnet,* daß** die Stange (46; 46A; 46C) des (jedes) ersten Hydraulikzylinder(s) (57; 57A; 57B; 57C) einen hohlen Teil (68; 68A) aufweist, in den mindestens ein Loch (92; 70; 92C) mündet, wodurch die Herstellung einer direkten oder indirekten Verbindung zwischen dem ersten Hydraulikzylinder (57; 57A; 57B; 57C) und der Ausströmöffnung (90; 90A) gestattet wird.

32. Vorrichtung zur automatischen Einstellung der Entlastung einer Arbeitseinheit (U; 15) einer Maschine (1) nach Anspruch 31, ***dadurch* *gekennzeichnet,* daß** der (jeder) Hydraulikenergiewandler (37, 38; 37A, 38A; 37B, 38B; 37C, 38C) des weiteren eine mit der Ausströmöffnung (90; 90A) verbundene und dabei die Stange (46; 46A; 46C) zumindest teilweise umgebende Sammelvorrichtung (91; 91A; 91C) aufweist.

33. Vorrichtung zur automatischen Einstellung der Entlastung einer Arbeitseinheit (U; 15) einer Maschine (1) nach irgend einem der Ansprüche 27 bis 32, ***dadurch gekennzeichnet,* daß**
- das (jedes) erste Hydrauliknetz (95; 95A; 95C)
• einen ersten Hydraulikweg (97; 97A; 97C), der den (entsprechenden) ersten Hydraulikzylinder (57; 57A; 57B; 57C; 157) versorgen soll,
• einen mit der Ausströmöffnung (90; 90A) des ersten Hydraulikzylinders (57; 57A; 57B; 57C; 157) verbundenen zweiten Hydraulikweg (98; 98A),
umfaßt;
- das (jedes) zweite Hydrauliknetz (96; 96A; 96C) einen mit der Zuführungsöffnung (93; 93A; 93C) des (entsprechenden) zweiten Hydraulikzylinders (58; 58A; 58B; 58C; 158) verbundenen dritten Hydraulikweg (99; 99A; 99C) umfaßt;
- die Mittel (109, 128, 129; 109A, 128, 129; 109B, 128, 129, 130; 109C, 128, 129; 109, 128, 129, 130) die gestatten, das Ölvolumen in dem (jedem) ersten Hydraulikzylinder (57; 57A; 57B; 57C; 157) beim Absenken der Arbeitseinheit (U; 15) aufrechtzuerhalten, ein Mittel (109; 109A; 109B; 109C) umfassen, das ein Austreten des Öls aus dem ersten Hydraulikzylinder (57; 57A; 57B; 57C; 157) durch den ersten Hydraulikweg (97; 97A; 97C) sperrt;
- ein Mittel (109, 129; 109A, 129; 109B, 129, 130; 109C, 129; 109, 129, 130) vorgesehen ist, das die Versorgung des zweiten Hydraulikzylinders (58; 58A; 58B; 58C; 158) beim Anheben der Arbeitseinheit (U; 15) fördert.

34. Vorrichtung zur automatischen Einstellung der Entlastung einer Arbeitseinheit (U; 15) einer Maschine (1) nach Anspruch 33, ***dadurch gekennzeichnet*, daß**
- der erste Hydraulikweg (97) direkt oder indirekt mit dem dritten Hydraulikweg (99) verbunden ist;
- das das Austreten des Öls aus dem ersten Hydraulikzylinder (57; 157) durch den ersten Hydraulikweg (97) sperrende Mittel (109) zwischen der Zuführungsöffnung (87) des (entsprechenden) ersten Hydraulikzylinders (57; 157) und der Kopplung des ersten Hydraulikwegs (97) an den dritten Hydraulikweg (99) angebracht ist.

35. Vorrichtung zur automatischen Einstellung der Entlastung einer Arbeitseinheit (U; 15) einer Maschine (1) nach Anspruch 33, ***dadurch gekennzeichnet,* daß**
- der erste Hydraulikweg (97A; 97C) zumindest teilweise durch den dritten Hydraulikweg (99A; 99C) und durch eine Verbindung (114; 114B; 114C) zwischen dem zweiten Hydraulikzylinder (58A; 58B; 58C) und dem ersten Hydraulikzylinder (57A; 57B; 57C) gebildet wird;
- das das Austreten des Öls aus dem ersten Hydraulikzylinder (57A; 57B; 57C) durch den ersten Hydraulikweg (97A; 97C) sperrende Mittel insbesondere im Bereich der Verbindung (114; 114B; 114C) zwischen dem zweiten Hydraulikzylinder (58A; 58B; 58C) und dem ersten Hydraulikzylinder (57A; 57B; 57C) wirkt.

36. Vorrichtung zur automatischen Einstellung der Entlastung einer Arbeitseinheit (U; 15) einer Maschine (1) nach den Ansprüchen 35 und 17, ***dadurch gekennzeichnet,* daß** die Verbindung (114B) zwischen dem zweiten Hydraulikzylinder (58B) und dem ersten Hydraulikzylinder (57B) in der Zugstange (51B) vorgesehen ist.

37. Vorrichtung zur automatischen Einstellung der Entlastung einer Arbeitseinheit (U; 15) einer Maschine (1) nach Anspruch 35, ***dadurch* *gekennzeichnet,* daß** die Verbindung 114; 114C) zwischen dem zweiten Hydraulikzylinder (58A; 58C) und dem ersten Hydraulikzylinder (57A; 57C) zumindest teilweise im Kolben (53A; 53C) des zweiten Hydraulikzylinders (58A; 58C) vorgesehen ist.

38. Vorrichtung zur automatischen Einstellung der Entlastung einer Arbeitseinheit (U; 15) einer Maschine (1) nach Anspruch 37 und den Ansprüchen 19 oder 20, ***dadurch gekennzeichnet,* daß** die Verbindung (114) zwischen dem zweiten Hydraulikzylinder (58A) und dem ersten Hydraulikzylinder (57A) weiterhin durch die Begrenzungsöffnung(en) (113) gebildet wird.

39. Vorrichtung zur automatischen Einstellung der Entlastung einer Arbeitseinheit (U; 15) einer Maschine (1) nach irgend einem der Ansprüche 33 bis 38, ***dadurch gekennzeichnet,* daß** das das Austreten des Öls aus dem ersten Hydraulikzylinder (57; 57A; 57B; 57C; 157) durch den ersten Hydraulikweg (97; 97A; 97C) sperrende Mittel (109; 109A; 109B; 109C) aus einer ersten Rückschlagklappe (109; 109A; 109B; 109C) besteht.

40. Vorrichtung zur automatischen Einstellung der Entlastung einer Arbeitseinheit (U; 15) einer Maschine (1) nach irgend einem der Ansprüche 33 bis 39, ***dadurch gekennzeichnet,* daß** das die Versorgung des zweiten Hydraulikzylinders (58; 58A; 58B; 58C; 158) beim Anheben der Arbeitseinheit (U; 15) fördernde Mittel (107, 129; 109A, 129; 107, 129, 130; 109C, 129; 107, 129, 130) die Versorgung des ersten Hydraulikzylinders (57; 57A; 57B; 57C; 157) verhindert, solange sich der Kolben (53; 53A; 53B; 53C; 153) des zweiten Hydraulikzylinders (58; 58A; 58B; 58C; 158) nicht in seiner vorbestimmten Stellung (PP) befindet.

41. Vorrichtung zur automatischen Einstellung der Entlastung einer Arbeitseinheit (U; 15) einer Maschine (1) nach den Ansprüchen 39 und 40, ***dadurch gekennzeichnet,* daß** das Mittel (109, 129; 109B, 129, 130; 109, 129, 130), das die Versorgung des ersten Hydraulikzylinders (57; 57B; 157) verhindert, solange sich der Kolben (53; 53B; 153) des zweiten Hydraulikzylinders (58; 58B; 158) nicht in seiner vorbestimmten Stellung (PP) befindet, insbesondere durch die erste Rückschlagklappe (109; 109B) gebildet wird, die als eingestellte Rückschlagklappe ausgeführt ist.

42. Vorrichtung zur automatischen Einstellung der Entlastung einer Arbeitseinheit (U; 15) einer Maschine (1) nach irgend einem der Ansprüche 33 bis 41, ***dadurch gekennzeichnet*, daß** die Versorgung des ersten Hydraulikzylinders (57; 57A; 57B; 57C; 157) durch eine vorzugsweise einstellbare Drosselung (107) erfolgt.

43. Vorrichtung zur automatischen Einstellung der Entlastung einer Arbeitseinheit (U; 15) einer Maschine (1) nach Anspruch 42, ***dadurch gekennzeichnet,* daß** sie mehrere Hydraulikenergiewandler (37, 38; 37A, 38A; 37B, 38B; 37C, 38C; 137, 138) umfaßt, deren erste Hydraulikzylinder (57; 57A; 57B; 57C; 157) durch eine einzige Drosselung (107) versorgt werden.

44. Vorrichtung zur automatischen Einstellung der Entlastung einer Arbeitseinheit (U; 15) einer Maschine (1) nach irgend einem der Ansprüche 33 bis 43, ***dadurch gekennzeichnet,* daß** der zweite Hydraulikweg (98) eine zweite Rückschlagklappe (111) enthält, die die Zirkulation des Öls in Richtung Ölzufuhrquelle (103)/erster Hydraulikzylinder (57) sperrt.

45. Vorrichtung zur automatischen Einstellung der Entlastung einer Arbeitseinheit (U; 15) einer Maschine (1) nach Anspruch 34 oder 35, ***dadurch gekennzeichnet,* daß** der dritte Hydraulikweg (99; 99A; 99C) eine gesteuerte erste Rückschlagklappe (108; 108A) enthält, die die Zirkulation des Öls in Richtung zweiter Hydraulikzylinder (58; 58A; 58B; 58C)/Ölzufuhrquelle (103) sperrt, wobei das Öffnen dieser gesteuerten ersten Rückschlagklappe (108; 108A) durch den im zweiten Hydraulikweg (98; 98A) herrschenden Druck gesteuert wird.

46. Vorrichtung zur automatischen Einstellung der Entlastung einer Arbeitseinheit (U; 15) einer Maschine (1) nach Anspruch 45, ***dadurch gekennzeichnet,* daß** der zweite Hydraulikweg (98) eine gesteuerte zweite Rückschlagklappe (110) enthält, die die Zirkulation des Öls in Richtung erster Hydraulikzylinder (57)/Ölzufuhrquelle (103) sperrt, wobei das Öffnen der gesteuerten ersten Rückschlagklappe (108) bzw. dieser gesteuerten zweiten Rückschlagklappe (110) durch den im zweiten Hydraulikweg (98) stromaufwärts der gesteuerten zweiten Rückschlagklappe (110) bzw. durch den im dritten Hydraulikweg (99) stromaufwärts der gesteuerten ersten Rückschlagklappe (108) herrschenden Druck gesteuert wird.

47. Vorrichtung zur automatischen Einstellung der Entlastung einer Arbeitseinheit (U; 15) einer Maschine (1) nach den Ansprüchen 44 und 46, ***dadurch gekennzeichnet*, daß** die gesteuerte zweite Rückschlagklappe (110) stromaufwärts der zweiten Rückschlagklappe (111) vorgesehen ist.

48. Maschine (1) mit einer Arbeitseinheit (U; 15), die von einem Traggestell (3 - 16 - 17 - 14) so getragen wird, das sie im Betrieb auf dem Boden (S) aufliegt und bei Unterbrechung des Betriebs oder während des Transports vom Boden (S) entfernt ist, wobei die Arbeitseinheit (U; 15) mittels einer Vorrichtung zur automatischen Einstellung der Entlastung der Arbeitseinheit (U; 15) zur Anlage an den Boden (S) abgesenkt oder zur Entfernung vom Boden (S) angehoben werden kann, ***dadurch gekennzeichnet,* daß** die Vorrichtung zur automatischen Einstellung der Entlastung der Arbeitseinheit (U; 15) eine Vorrichtung nach den Ansprüchen 2 bis 47 ist.

49. Maschine nach Anspruch 48, ***dadurch gekennzeichnet,* daß** es sich dabei um eine Landmaschine handelt.

50. Maschine nach Anspruch 49, ***dadurch gekennzeichnet,* daß** es sich dabei um eine Schneidmaschine handelt.

51. Maschine nach Anspruch 49 oder 50, ***dadurch gekennzeichnet,* daß** es sich um eine Erntemaschine handelt.

52. Maschine nach den Ansprüchen 50 und 51, ***dadurch gekennzeichnet,* daß** es sich dabei um eine Mähmaschine mit oder ohne Vorrichtung zur Behandlung des Schnittguts handelt.
